(19) Europäisches Patentamt
European Patent Office
Office européen des brevets

(11) EP 4 266 107 A1

(12) **EUROPEAN PATENT APPLICATION**
published in accordance with Art. 153(4) EPC

(43) Date of publication:
**25.10.2023 Bulletin 2023/43**

(21) Application number: **22739386.5**

(22) Date of filing: **11.01.2022**

(51) International Patent Classification (IPC):
***G02B 17/06** (2006.01)* ***G02B 5/10** (2006.01)*
***G21K 1/06** (2006.01)*

(52) Cooperative Patent Classification (CPC):
**G02B 5/10; G02B 17/06; G21K 1/06**

(86) International application number:
**PCT/JP2022/000570**

(87) International publication number:
**WO 2022/153979 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2021 JP 2021003119**

(71) Applicant: **The University of Tokyo**
**Bunkyo-ku, Tokyo 113-8654 (JP)**

(72) Inventors:
- **TAKEO, Yoko**
  **Tokyo 113-8654 (JP)**
- **MIMURA, Hidekazu**
  **Tokyo 113-8654 (JP)**

(74) Representative: **Vossius & Partner Patentanwälte Rechtsanwälte mbB**
**Siebertstraße 3**
**81675 München (DE)**

(54) **DESIGN METHOD FOR MIRROR AND ASTIGMATISM-CONTROL MIRROR HAVING REFLECTIVE SURFACE THAT SATISFIES DESIGN FORMULA IN DESIGN METHOD**

(57) There is provided a method for designing a mirror enabling free conversion of astigmatism by setting a light source position and a light collection position independently in a vertical direction and a horizontal direction; enabling a light collection size to be reduced to cope with a beam in an X-ray region; being suitably used as an optical system that handles a beam having different characteristics between the vertical direction and the horizontal direction, with a simple design formula and a wide application range. A mirror is designed by using a design formula of a reflecting surface, the design formula being derived based on conditions that: an intersection point between a sagittal light source ray and an incoming light ray to an $M^A$ point and an intersection point between a meridional light source ray and the incoming light ray to the $M^A$ point are represented by using $L_{1s}{}^A$ and $L_{1m}{}^A$, respectively; an intersection point between an outgoing light ray from the $M^A$ point and a sagittal virtual collected light ray and an intersection point between the outgoing light ray from the $M^A$ point and a meridional virtual collected light ray are expressed by using $L_{2s}{}^A$ and $L_{2m}{}^A$; an intersection point between a sagittal virtual light source ray and an incoming light ray to an $M^B$ point and an intersection point between a meridional virtual light source ray and the incoming light ray to the $M^B$ point are expressed by using $L_{2s}{}^A$ and $L_{2m}{}^A$, and L; and an intersection point between an outgoing light ray from the $M^B$ point and the sagittal collected light ray and an intersection point between the outgoing light ray from the $M^B$ point and the meridional collected light ray are expressed by using $L_{2s}{}^B$ and $L_{2m}{}^B$; and both optical path lengths from a light source position to a virtual light collection position and from a virtual light source position to a light collection position are constant.

EP 4 266 107 A1

FIG. 1

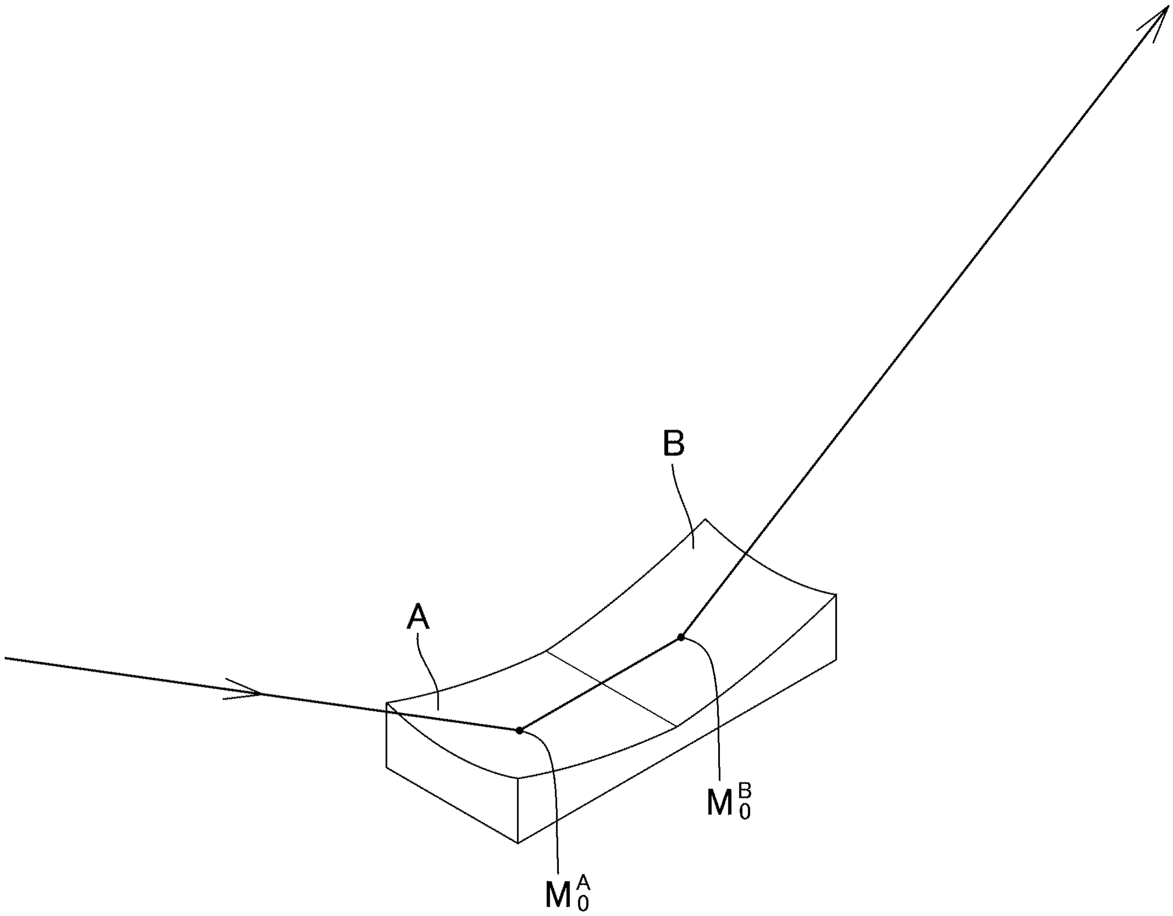

## Description

TECHNICAL FIELD

The present invention relates to a method for designing a mirror having a first reflecting surface and a second reflecting surface which reflect light sequentially and an astigmatism control mirror having a reflecting surface satisfying a design formula provided in the method for designing a mirror.

BACKGROUND ART

A soft X-ray beam of emitted light is characterized in that characteristics thereof are different between a vertical direction and a horizontal direction. Abeam size tends to be smaller in the vertical direction than in the horizontal direction. A coherent width is larger in the vertical direction than in the horizontal direction. Moreover, in a spectroscopic system using a diffraction grating which is widely used for a soft X-ray beamline, a divergence angle of a beam in the vertical direction increases. In addition, a spectroscope including the widely used diffraction grating collects soft X-rays only in a spectral direction, causing "astigmatism" to occur. In the astigmatism, light source positions are different between the spectral direction and a direction in which the soft X-rays are not collected.

A toroidal mirror has a possibility of eliminating astigmatism (Non Patent Literature 1). However, the toroidal mirror is a mirror that is easily manufactured by approximating an existing spheroidal mirror and setting a uniform radius of curvature in each of a longitudinal direction and a transverse direction of a reflecting surface, and has a disadvantage in that a light collection size increases in principle even if astigmatism can be eliminated.

An astigmatic off-axis mirror (AO mirror) has also been proposed as a mirror capable of making a light collection size smaller than that of the toroidal mirror and capable of setting light source and light collection points independently in the vertical and horizontal directions (Non Patent Literature 2). This mirror has a shape in which different conic curves are respectively set in a longitudinal direction and a transverse direction and a curved surface smoothly connecting the conic curves is obtained on the basis of a principle that an elliptic curve is applied as a ridgeline of the reflecting surface to collect beams diverging from one point, at another point; a parabola is applied as a ridgeline of the reflecting surface to collimate beams diverging from one point; and a hyperbola is applied as a ridgeline of the reflecting surface to convert beams collected toward one point into beams collected toward another point.

However, this AO mirror is a mirror defined by rotating a conic profile in the longitudinal direction around a straight line (long axis) connecting focal points of conic curves in the transverse direction in order to obtain a curved surface. Since the reflecting surface approximates an axisymmetric shape, there is a limit in reducing a light collection size due to the approximation. No problem arises as long as a beam is a beam in a terahertz region with a long wavelength, but the AO mirror cannot cope with a beam in an X-ray region. In addition, a design formula includes coordinate transformation several times, so as to be very complicated, and parameters are also complicated and difficult to understand and use.

CITATIONS LIST

NON PATENT LITERATURE

Non Patent Literature 1: William A. Rense, T. Violett, "Method of Increasing the Speed of a Grazing-Incidence Spectrograph", JOURNAL OF THE OPTICAL SOCIETY OF AMERICA, Vol. 49, No. 2, February 1959, p. 139 to p. 141
Non Patent Literature 2: A. Wagner-Gentner, U. U. Graf, M. Philipp, D. Rabanus, "A simple method to design astigmatic off-axis mirrors" Infrared Physics & Technology 50, 2007, p.42 to p.46

SUMMARY OF INVENTION

TECHNICAL PROBLEMS

In view of the above-described situation, an object of the present invention is to provide a method for designing a mirror enabling free conversion of astigmatism by setting a light source position and a light collection position independently in a vertical direction and a horizontal direction; enabling a light collection size to be reduced to cope with a beam in an X-ray region; and being suitably used as an optical system that handles a beam having different characteristics between the vertical direction and the horizontal direction, with a simple design formula and a wide application range.

SOLUTIONS TO PROBLEMS

As a result of intensive studies in view of such a current situation, the present inventors have completed the present invention by finding that, as a method for geometrically and optically expressing properties of a beam having astigmatism, it is possible to design a reflecting surface that enables free conversion of astigmatism by newly defining a "light source ray" and a "collected light ray" for each of light collection in a sagittal direction and light collection in a meridional direction; assuming that all incoming light rays passing through a reflecting surface of the mirror pass through each of "light source rays" in a vertical direction and a horizontal direction and all outgoing light rays emitted from the reflecting surface of the mirror pass through "collected light rays" in the vertical direction and the horizontal direction; and applying Fermat's principle in which an "optical path length" from a light source position to a light collection position is constant.

That is, the present invention includes the following inventions.

(1) There is provided a method for designing a mirror having a first reflecting surface and a second reflecting surface, which sequentially reflect light, the method including: defining an optical axis of an incoming beam to the first reflecting surface as a $z_1$ axis, and defining a cross section orthogonal to the $z_1$ axis as an $x_1y_1$ plane; defining, as a $z_2$ axis, an optical axis of an outgoing beam of the first reflecting surface, the outgoing beam being an incoming beam to the second reflecting surface, and defining a cross section orthogonal to the $z_2$ axis as an $x_2y_2$ plane; defining an optical axis of an outgoing beam of the second reflecting surface as a $z_3$ axis, and defining a cross section orthogonal to the $z_3$ axis as an $x_3y_3$ plane; setting an $x_1$ axis, an $x_2$ axis, and an $x_3$ axis to be parallel to a sagittal direction of the first reflecting surface and the second reflecting surface; causing incoming beams to the first reflecting surface to have a light source for light collection in the sagittal direction at a position displaced by $L_{1s}^A$ in a $z_1$-axis direction from an intersection point $M_0^A$ on the $z_1$ axis on the first reflecting surface between the $z_1$ axis and the $z_2$ axis and a light source for light collection in a meridional direction at a position displaced by $L_{1m}^A$ in the $z_1$-axis direction from the intersection point $M_0^A$ on the $z_1$ axis; causing outgoing beams of the second reflecting surface to be collected at a position displaced by $L_{2s}^B$ in a $z_3$-axis direction from an intersection point $M_0^B$ on the $z_3$ axis on the second reflecting surface between the $z_2$ axis and the $z_3$ axis with respect to light collection in the sagittal direction and to be collected at a position displaced by $L_{2m}^B$ in the $z_3$-axis direction from the intersection point $M_0^B$ on the $z_3$ axis with respect to light collection in the meridional direction; causing all of incoming light rays passing through the first reflecting surface to pass through both a sagittal light source ray passing through a position of the light source in the light collection in the sagittal direction and extending in a direction orthogonal to both the $x_1$ axis and the $z_1$ axis and a meridional light source ray passing through a position of the light source in light collection in the meridional direction and extending in a direction orthogonal to both the $y_1$ axis and the $z_1$ axis; causing all of outgoing light rays emitted from the second reflecting surface to pass through both a sagittal collected light ray passing through the light collecting position in the light collection in the sagittal direction and extending in a direction orthogonal to both the $x_3$ axis and the $z_3$ axis and a meridional collected light ray passing through the light collecting position in the light collection in the meridional direction and extending in a direction orthogonal to both the $y_3$ axis and the $z_3$ axis; causing outgoing beams of the first reflecting surface, when the outgoing beams of the first reflecting surface travel straight without being reflected by the second reflecting surface, to be collected at a position displaced by $L_{2s}^A$ in a $z_2$-axis direction from the intersection point $M_0^A$ on the $z_2$ axis with respect to the light collection in the sagittal direction and be collected at a position displaced by $L_{2m}^A$ in the $z_2$-axis direction from the intersection point $M_0^A$ on the $z_2$ axis with respect to the light collection in the meridional direction; causing outgoing light rays of the first reflecting surface to pass through both a sagittal virtual collected light ray passing through the light collecting position in the light collection in the sagittal direction and extending in a direction orthogonal to both the $x_2$ axis and the $z_2$ axis and a meridional virtual collected light ray passing through the light collecting position in the light collection in the meridional direction and extending in a direction orthogonal to both a $y_2$ axis and the $z_2$ axis; causing all of incoming light rays passing through the second reflecting surface to intersect, on an extension line of the incoming light rays, both light source rays of the sagittal virtual collected light ray as a sagittal virtual light source ray in the light collection in the sagittal direction for the first reflecting surface and the meridional virtual collected light ray as a meridional virtual light source ray in the light collection in the meridional direction for the first reflecting surface; defining any point on the first reflecting surface as $M^A$, expressing coordinates of an intersection point between the sagittal light source ray and an incoming light ray to the $M^A$ point and an intersection point between the meridional light source ray and the incoming light ray to the $M^A$ point by using $L_{1s}^A$ and $L_{1m}^A$, and expressing coordinates of an intersection point between an outgoing light ray from the $M^A$ point and the sagittal virtual collected light ray and an intersection point between the outgoing light ray from the $M^A$ point and the meridional virtual collected light ray by using $L_{2s}^A$ and $L_{2m}^A$; defining any point on the second reflecting surface as $M^B$, expressing coordinates of an intersection point between the sagittal virtual light source ray and an incoming light ray to the $M^B$ point and an intersection point between the meridional virtual light source ray and the incoming light ray to the $M^B$ point by using

the $L_{2s}^A$ and $L_{2m}^A$, and a distance L between $M_0^A$ and $M_0^B$ and expressing coordinates of an intersection point between an outgoing light ray from the $M^B$ point and the sagittal collected light ray and an intersection point between the outgoing light ray from the $M^B$ point and the meridional collected light ray by using the $L_{2s}^B$ and $L_{2m}^B$; and designing the mirror by using a design formula of a reflecting surface, the design formula being derived based on the coordinates, a condition that an optical path length from a light source position to a virtual light collection position is constant with respect to any point on the reflecting surface for the light collection in the sagittal direction and the light collection in the meridional direction on the first reflecting surface, and a condition that an optical path length from a virtual light source position to a light collection position is constant with respect to any point on the reflecting surface for the light collection in the sagittal direction and the light collection in the meridional direction on the second reflecting surface.

(2) The method for designing a mirror according to (1), in which the sagittal light source ray and the meridional light source ray are defined as a straight line $S_s$ extending in a $y_1$-axis direction and a straight line $S_m$ extending in an $x_1$-axis direction, respectively. The sagittal virtual collected light ray and the meridional virtual collected light ray are defined as a straight line $F_s^A$ extending in a $y_2$-axis direction and a straight line $F_m^A$ extending in an $x_2$-axis direction, respectively. The sagittal virtual light source ray and the meridional virtual light source ray are defined as a straight line $S_s^B$ that coincides with the straight line $F_s^A$ and a straight line $S_m^B$ that coincides with the straight line $F_m^A$, respectively. The sagittal collected light ray and the meridional collected light ray are defined as a straight line $F_s$ extending in a $y_3$-axis direction and a straight line $F_m$ extending in an $x_3$-axis direction, respectively. The optical path length is calculated for each of light collection in the meridional direction or light collection in the sagittal direction on the first reflecting surface or the second reflecting surface by the following (i) to (iv).

(i) Calculation of optical path length of sagittal direction light collection on first reflecting surface: An incoming length from the light source position to the $M^A$ point with respect to the light collection in the sagittal direction on the first reflecting surface is obtained as a distance to the $M^A$ point from an intersection point on a side close to the meridional light source ray $S_m$ of two intersection points between the incoming light ray and an equiphase plane $A_{1s}$, the equiphase plane $A_{1s}$ being a rotated arcuate plane obtained by rotating, around the sagittal light source ray $S_s$, an arc that is formed around an intersection point $P_{m0}$ between the meridional light source ray $S_m$ and the $z_1$ axis and extends in a direction orthogonal to the $x_1$ axis through an intersection point $P_{s0}$ between the sagittal light source ray $S_s$ and the $z_1$ axis. An outgoing length from the $M^A$ point to the virtual light collection position with respect to the light collection in the sagittal direction on the first reflecting surface is obtained as a distance to the $M^A$ point from an intersection point on a side close to the meridional virtual collected light ray $F_m^A$ of two intersection points between the outgoing light ray and an equiphase plane $A_{2s}^A$, the equiphase plane $A_{2s}^A$ being a rotated arcuate plane obtained by rotating, around the sagittal virtual collected light ray $F_s^A$, an arc that is formed around an intersection point $Q_{m0}^A$ between the meridional virtual collected light ray $F_m^A$ and the $z_2$ axis and extends in a direction orthogonal to the $x_2$ axis through an intersection point $Q_{s0}^A$ between the sagittal virtual collected light ray $F_s^A$ and the $z_2$ axis. In this manner, the optical path length for the light collection in the sagittal direction on the first reflecting surface is calculated.

(ii) Calculation of optical path length of meridional direction light collection on first reflecting surface: An incoming length from the light source position to the $M^A$ point with respect to the light collection in the meridional direction on the first reflecting surface is obtained as a distance to the $M^A$ point from an intersection point on a side close to the sagittal light source ray $S_s$ of two intersection points between the incoming light ray and an equiphase plane $A_{1m}$, the equiphase plane $A_{1m}$ being a rotated arcuate plane obtained by rotating, around the meridional light source ray $S_m$, an arc that is formed around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis. An outgoing length from the $M^A$ point to the virtual light collection position with respect to the light collection in the meridional direction on the first reflecting surface is obtained as a distance to the $M^A$ point from an intersection point on a side close to the sagittal virtual collected light ray $F_s^A$ of two intersection points between the outgoing light ray and an equiphase plane $A_{2m}^A$, the equiphase plane $A_{2m}^A$ being a rotated arcuate plane obtained by rotating, around the meridional virtual collected light ray $F_m^A$, an arc that is formed around an intersection point $Q_{s0}^A$ between the sagittal virtual collected light ray $F_s^A$ and the $z_2$ axis and extends in a direction orthogonal to the $y_2$ axis through an intersection point $Q_{m0}^A$ between the meridional virtual collected light ray $F_m^A$ and the $z_2$ axis. In this manner, the optical path length for the light collection in the meridional direction on the first reflecting surface is calculated.

(iii) Calculation of optical path length of sagittal direction light collection on second reflecting surface: An incoming length from the virtual light source position to the $M^B$ point with respect to the light collection in the sagittal direction on the second reflecting surface is obtained as a distance to the $M^B$ point from an intersection point on a side close to the meridional virtual light source ray $S_m^B$ of two intersection points between the incoming light ray and an equiphase plane $A_{1s}^B$, the equiphase plane $A_{1s}^B$ being a rotated arcuate plane obtained by rotating, around the sagittal virtual light source ray $S_s^B$, an arc that is formed around an intersection point $P_{m0}^B$ between the meridional virtual light source ray $S_m^B$ and the $z_2$ axis and extends in a direction orthogonal to the $x_2$ axis through an intersection point $P_{s0}^B$ between the sagittal virtual light source ray $S_s^B$ and the $z_2$ axis. An outgoing length from the $M^B$ point to the light collection position with respect to the light collection in the sagittal direction on the second reflecting surface is obtained as a distance to the $M^B$ point from an intersection point on a side close to the meridional collected light ray $F_m$ of two intersection points between the outgoing light ray and an equiphase plane $A_{2s}$, the equiphase plane $A_{2s}$ being a rotated arcuate plane obtained by rotating, around the sagittal collected light ray $F_s$, an arc that is formed around an intersection point $Q_{m0}$ between the meridional collected light ray $F_m$ and the $z_3$ axis and extends in a direction orthogonal to the $x_3$ axis through an intersection point $Q_{s0}$ between the sagittal collected light ray $F_s$ and the $z_3$ axis. In this manner, the optical path length for the light collection in the sagittal direction on the second reflecting surface is calculated.

(iv) Calculation of optical path length of meridional direction light collection on second reflecting surface: An incoming length from the virtual light source position to the $M^B$ point with respect to the light collection in the meridional direction on the second reflecting surface is obtained as a distance to the $M^B$ point from an intersection point on a side close to the sagittal virtual light source ray $S_s^B$ of two intersection points between the incoming light ray and an equiphase plane $A_{1m}^B$, the equiphase plane $A_{1m}^B$ being a rotated arcuate plane obtained by rotating, around the meridional virtual light source ray $S_m^B$, an arc that is formed around an intersection point $P_{s0}^B$ between the sagittal virtual light source ray $S_s^B$ and the $z_2$ axis and extends in a direction orthogonal to the $y_2$ axis through an intersection point $P_{m0}^B$ between the meridional virtual light source ray $S_m^B$ and the $z_2$ axis. An outgoing length from the $M^B$ point to the light collection position with respect to the light collection in the meridional direction on the second reflecting surface is obtained as a distance to the $M^B$ point from an intersection point on a side close to the sagittal collected light ray $F_s$ of two intersection points between the outgoing light ray and an equiphase plane $A_{2m}$, the equiphase plane $A_{2m}$ being a rotated arcuate plane obtained by rotating, around the meridional collected light ray $F_m$, an arc that is formed around an intersection point $Q_{s0}$ between the sagittal collected light ray $F_s$ and the $z_3$ axis and extends in a direction orthogonal to the $y_3$ axis through an intersection point $Q_{m0}$ between the meridional collected light ray $F_m$ and the $z_3$ axis. In this manner, the optical path length for the light collection in the meridional direction on the second reflecting surface is calculated.

(3) Regarding the calculation of the optical path length of (i) (the sagittal direction light collection of the first reflecting surface), the distance to the point $M^A$ from the intersection point on the side close to the meridional light source ray $S_m$ of the two intersection points between the incoming light ray and the equiphase plane $A_{1s}$ on the first reflecting surface is obtained by obtaining a distance to the point $M^A$ from an intersection point $P_s$ between the incoming light ray and the sagittal light source ray $S_s$ and adding or subtracting, to or from the distance, a distance from the intersection point $P_s$ to the arc defining the equiphase plane $A_{1s}$. In addition, a distance to the point $M^A$ from the intersection point on the side close to the meridional virtual collected light ray $F_m^A$ of the two intersection points between the outgoing light ray and the equiphase plane $A_{2s}^A$ on the first reflecting surface is obtained by obtaining a distance to the point $M^A$ from an intersection point $Q_s^A$ between the outgoing light ray and the sagittal virtual collected light ray $F_s^A$ and adding or subtracting, to or from the distance, a distance from the intersection point $Q_s^A$ to the arc defining the equiphase plane $A_{2s}^A$.

Regarding the calculation of the optical path length of (ii) (the meridional direction light collection of the first reflecting surface), the distance to the point $M^A$ from the intersection point on the side close to the sagittal light source ray $S_s$ of the two intersection points between the incoming light ray and the equiphase plane $A_{1m}$ on the first reflecting surface is obtained by obtaining a distance to the point $M^A$ from an intersection point $P_m$ between the incoming light ray and the meridional light source ray $S_m$ and adding or subtracting, to or from the distance, a distance from the intersection point $P_m$ to the arc defining the equiphase plane $A_{1m}$. In addition, the distance to the point $M^A$ from the intersection point on the side close to the sagittal virtual collected light ray $F_s^A$ of the two intersection points between the outgoing light ray and the equiphase plane $A_{2m}^A$ on the first reflecting surface is obtained by obtaining a distance to the point $M^A$ from an intersection point $Q_m^A$ between the outgoing light ray and the meridional virtual collected light ray $F_m^A$ and adding or subtracting, to or from the distance, a distance from the intersection point $Q_m^A$ to the arc defining the equiphase plane $A_{2m}^A$.

Regarding calculation of the optical path length of (iii) (the sagittal direction light collection of the second reflecting surface), the distance to the point $M^B$ from the intersection point on the side close to the meridional virtual light source ray $S_m^B$ of the two intersection points between the incoming light ray and the equiphase plane $A_{1s}^B$ on the second reflecting surface is obtained by obtaining a distance to the point $M^B$ from an intersection point $P_s^B$ between the incoming light ray and the sagittal virtual light source ray $S_s^B$ and adding or subtracting, to or from the distance, a distance from the intersection point $P_s^B$ to the arc defining the equiphase plane $A_{1s}^B$. In addition, the distance to the point $M^B$ from the intersection point on the side close to the meridional collected light ray $F_m$ of the two intersection points between the outgoing light ray and the equiphase plane $A_{2s}$ on the second reflecting surface is obtained by obtaining a distance to the point $M^B$ from an intersection point $Q_s$ between the outgoing light ray and the sagittal collected light ray $F_s$ and adding or subtracting, to or from the distance, a distance from the intersection point $Q_s$ to the arc defining the equiphase plane $A_{2s}$.

The method for designing a mirror according to (2), in which regarding calculation of the optical path length of (iv) (the meridional direction light collection of the second reflecting surface), the distance to the point $M^B$ from the intersection point on the side close to the sagittal virtual light source ray $S_s{}^B$ of the two intersection points between the incoming light ray and the equiphase plane $A_{1m}{}^B$ on the second reflecting surface is obtained by obtaining a distance to the point $M^B$ from an intersection point $P_m{}^B$ between the incoming light ray and the meridional virtual light source ray $S_m{}^B$ and adding or subtracting, to or from the distance, a distance from the intersection point $P_m{}^B$ to the arc defining the equiphase plane $A_{1m}{}^B$. The distance to the point $M^B$ from the intersection point on the side close to the sagittal collected light ray $F_s$ of the two intersection points between the outgoing light ray and the equiphase plane $A_{2m}$ on the second reflecting surface is obtained by obtaining a distance to the point $M^B$ from an intersection point $Q_m$ between the outgoing light ray and the meridional collected light ray $F_m$ and adding or subtracting, to or from the distance, a distance from the intersection point $Q_m$ to the arc defining the equiphase plane $A_{2m}$.

(4) The method for designing a mirror according to any one of (1) to (3), in which an orthogonal coordinate system uvw is defined, in which an intersection point between the $z_1$ axis and the $z_3$ axis is set as an origin, a direction parallel to the $z_2$ axis is defined as a u axis, a direction parallel to the $x_1$ axis, the $x_2$ axis, and the $x_3$ axis is defined as a v axis, and a direction orthogonal to both the u axis and the v axis is defined as a w axis. The uvw system coordinate is transformed to an $x_1y_1z_1$ coordinate system based on an optical axis of an incoming beam to the first reflecting surface, an $x_2y_2z_2$ coordinate system based on an optical axis of an outgoing beam from the first reflecting surface, the outgoing beam being an incoming beam to the second reflecting surface, and an $x_3y_3z_3$ coordinate system based on an optical axis of an outgoing beam from the second reflecting surface. The design formula is expressed by the uvw coordinate system.

(5) The method for designing a mirror according to (4), in which an orthogonal coordinate system $u^Av^Aw^A$ based on the first reflecting surface is defined, in which the intersection point $M_0{}^A$ on the first reflecting surface between the $z_1$ axis and the $z_2$ axis is included, a plane in contact with the reflecting surface is defined as a $u^Av^A$ plane, a direction of a normal line passing through the $M_0{}^A$ of the $u^Av^A$ plane is defined as a $w^A$ axis, a $v^A$ axis is defined as a direction orthogonal to both the $z_1$ axis and the $z_2$ axis, a $u^A$ axis is defined as a direction orthogonal to both the $v^A$ axis and the $w^A$ axis, the intersection point $M_0{}^A$ is defined as an origin, and $\theta_0{}^A$ represents an oblique incoming angle formed by the $u^Av^A$ plane and the optical axis $z_1$. An orthogonal coordinate system $u^Bv^Bw^B$ based on the second reflecting surface is defined, in which the intersection point $M_0{}^B$ on the second reflecting surface between the $z_2$ axis and the $z_3$ axis is included, a plane in contact with the reflecting surface is defined as a $u^Bv^B$ plane, a direction of a normal line passing through the $M_0{}^B$ of the $u^Bv^B$ plane is defined as a $w^B$ axis, a $v^B$ axis is defined as a direction orthogonal to both the $z_2$ axis and the $z_3$ axis, a $u^B$ axis is defined as a direction orthogonal to both the $v^B$ axis and the $w^B$ axis, the intersection point $M_0{}^B$ is defined as an origin, and $\theta_0{}^B$ represents an oblique incoming angle formed by the $u^Bv^B$ plane and the optical axis $z_2$. Each of the $u^Av^Aw^A$ coordinate system and the $u^Bv^Bw^B$ coordinate system is transformed into the $x_1y_1z_1$ coordinate system based on the optical axis of the incoming beam to the first reflecting surface, the $x_2y_2z_2$ coordinate system based on the optical axis of the outgoing beam from the first reflecting surface, the outgoing beam being the incoming beam to the second reflecting surface, and the $x_3y_3z_3$ coordinate system based on the optical axis of the outgoing beam from the second reflecting surface. The design formula is expressed by the $u^Av^Aw^A$ coordinate system and the $u^Bv^Bw^B$ coordinate system. The design formula is further expressed by the uvw coordinate system.

(6) The method for designing a mirror according to claim 5, in which the design formula includes a following formula (1) obtained by weighting a first formula $f_s{}^A(u^A, v^A, w^A) = 0$ derived from a condition that an optical path length from a light source point to a virtual light collection point is constant for the light collection in the sagittal direction on the first reflecting surface and a second formula $f_m{}^A(u^A, v^A, w^A) = 0$ derived from a condition that an optical path length from the light source point to the virtual light collection point is constant for the light collection in the meridional direction on the first reflecting surface and a following formula (2) obtained by weighting both a third formula $f_s{}^B(u^B, v^B, w^B) = 0$ derived from a condition that an optical path length from a virtual light source point to the light collection point is constant for the light collection in the sagittal direction on the second reflecting surface and a fourth formula $f_m{}^B(u^B, v^B, w^B) = 0$ derived from a condition that an optical path length from the virtual light source point to the light collection point is constant for the light collection in the meridional direction on the second reflecting surface.

[Math. 1]

$$f^A(u^A,v^A,w^A) = \alpha^A f_s^A(u^A,v^A,w^A) + \beta^A f_m^A(u^A,v^A,w^A) = 0 \qquad (1)$$

$$0 \leqq \alpha^A \leqq 1, \quad \beta^A = 1-\alpha^A$$

$$f^B(u^B, v^B, w^B) = \alpha^B f_s^B(u^B, v^B, w^B) + \beta^B f_m^B(u^B, v^B, w^B) = 0 \tag{2}$$
$$0 \leqq \alpha^B \leqq 1, \quad \beta^B = 1 - \alpha^B$$

(7) The method for designing a mirror according to any one of (1) to (6), in which $L_{2m}{}^A$ and $L_{2s}{}^A$ are set using any magnification $M_s$ for sagittal direction light collection from the light source ray $S_s$ to the collected light ray $F_s$ and any magnification $M_m$ for meridional direction light collection from the light source ray $S_m$ to the collected light ray $F_m$, by a following formula.

[Math. 2]

$$\begin{cases} L_{2m}^A = \dfrac{L_{1m}^A M_m}{L_{2m}^B + L_{1m}^A M_m} L \\ L_{2s}^A = \dfrac{L_{1s}^A M_s}{L_{2s}^B + L_{1s}^A M_s} L \end{cases}$$

(8) An astigmatism control mirror having a reflecting surface satisfying the design formula according to any one of (1) to (6), in which values of the $L_{1s}{}^A$ and the $L_{1m}{}^A$ are different from each other, and values of the $L_{2s}{}^B$ and the $L_{2m}{}^B$ are equal to each other, and outgoing beams that are collected at one point are obtained from an incoming beam having astigmatism.

(9) An astigmatism control mirror having a reflecting surface satisfying the design formula according to any one of (1) to (6), values of the $L_{1s}{}^A$ and the $L_{1m}{}^A$ are equal to each other, and values of the $L_{2s}{}^B$ and the $L_{2m}{}^B$ are different from each other, and an outgoing beam having astigmatism is obtained from an incoming beam diverging from one point.

(10) An astigmatism control mirror having a reflecting surface satisfying the design formula according to any one of (1) to (6), in which values of $L_{1s}{}^A$ and $L_{1m}{}^A$ are equal to each other, values of the $L_{2s}{}^A$ and the $L_{2m}{}^A$ are different from each other, values of $L_{2s}{}^B$ and $L_{2m}{}^B$ are equal to each other. Astigmatism is imparted to an incoming beam diverging from one point, on a first reflecting surface, the astigmatism is eliminated on the second reflecting surface, and different reduction magnifications are applied in a vertical direction and a horizontal direction, respectively.

(11) An astigmatism control mirror having a reflecting surface satisfying the design formula according to any one of (1) to (6), in which $L_{2m}{}^A$ and $L_{2s}{}^A$ are set by Formula (4) using the magnification $M_s$ in the sagittal direction and the magnification $M_m$ in the meridional direction, the magnifications being defined by the following formula (3) and being magnifications of a beam from the light source ray to the collected light ray, and thereby beams spreading from one point in both vertical and horizontal directions are collected again at one point through double-bounce reflections, and the beam becomes circular at a light collection point or a divergence position downstream of the light collection point.

[Math. 3]

$$\begin{cases} M_m = \dfrac{d_m^F}{d_m^S} \approx \dfrac{L_{2m}^A}{L_{1m}^A} \dfrac{L_{2m}^B}{L - L_{2m}^A} \\ M_s = \dfrac{d_s^F}{d_s^S} \approx \dfrac{L_{2s}^A}{L_{1s}^A} \dfrac{L_{2s}^B}{L - L_{2s}^A} \end{cases} \tag{3}$$

[Math. 4]

$$\begin{cases} L_{2m}^A = \dfrac{L_{1m}^A M_m}{L_{2m}^B + L_{1m}^A M_m} L \\ L_{2s}^A = \dfrac{L_{1s}^A M_s}{L_{2s}^B + L_{1s}^A M_s} L \end{cases} \tag{4}$$

(12) An astigmatism control mirror having a reflecting surface satisfying the design formula according to any one of (1) to (6), in which values of the $L_{1m}^A$, the $L_{2m}^A$, and the $L_{2m}^B$ are positive or negative infinity, and the $L_{1s}^A$, the $L_{2s}^A$, and the $L_{2s}^B$ respectively have predetermined values (where $L_{1s}^A + L_{2s}^A \neq 0$ and $(L - L_{2s}^A) + L_{2s}^B \neq 0$), and the astigmatism control mirror has collection performance only in the sagittal direction.

(13) An astigmatism control mirror having a reflecting surface satisfying the design formula according to any one of (1) to (6), in which an installation angle allowable range is enlarged by setting the $L_{2s}^A$ and the $L_{2m}^A$ so that three points of the intersection point $P_{s0}$ between the light source ray $S_s$ and the $z_1$ axis, the intersection point $Q_{s0}^A$ between the virtual collected light ray $F_s^A$ and the $z_2$ axis, and the intersection point $Q_{s0}$ between the collected light ray $F_s$ and the $z_3$ axis are present on a single straight line in the sagittal direction light collection, and at the same time, three points of the intersection point $P_{m0}$ between the light source ray $S_m$ and the $z_1$ axis, the intersection point $Q_{m0}^A$ between the virtual collected light ray $F_m^A$ and the $z_2$ axis, and the intersection point $Q_{m0}$ between the collected light ray $F_m$ and the $z_3$ axis are present on a single straight line in the meridional direction light collection.

ADVANTAGEOUS EFFECTS OF INVENTION

According to a method for designing a mirror of the present invention, a light source position and a light collection position can be independently set in the vertical direction and the horizontal direction, and thus a mirror enabling freely conversion of astigmatism can be manufactured. In addition, it is possible to cope with a beam in an X-ray region by reducing a light collection size. Moreover, the mirror has a wide application range with a simple design formula, so as to be suitably used as an optical system that handles a beam having different characteristics between the vertical direction and the horizontal direction.

In addition, according to the designing method of the present invention, the collection performance can be obtained by reflecting light twice or more times on a first reflecting surface and a second reflecting surface in light collection in the vertical direction and the horizontal direction. Therefore, as compared with a case of obtaining the collection performance by reflection once, off-axis aberration can be reduced and the imaging performance can be improved. As described above, it is possible to provide a mirror that enables free conversion of astigmatism and having the resistance to an installation angle error.

In addition, in the present invention, for example, if the mirror is designed to impart astigmatism to the first reflecting surface positioned upstream and eliminate the astigmatism by the second reflecting surface positioned downstream, it is also possible to provide a mirror that imparts different reduction magnifications in the vertical direction and the horizontal direction, respectively, while collecting beams from one point to one point. Moreover, it is also possible to provide a mirror that has a circularized light collection size for a beam having significantly different light source sizes between the vertical and horizontal directions. In addition, it is also possible to provide a mirror that forms a beam having a circular intensity profile at a divergence position by circularizing the shape of the beam incoming to the second reflecting surface positioned downstream.

BRIEF DESCRIPTION OF DRAWINGS

FIG. 1 is a conceptual diagram of a mirror designed by a designing method according to the present invention.

FIGS. 2(a) to 2(c) are conceptual diagrams illustrating an $x_1y_1z_1$ coordinate system, an $x_2y_2z_2$ coordinate system, and an $x_3y_3z_3$ coordinate system, respectively.

FIG. 3 is a conceptual diagram illustrating a "light source ray" and a "collected light ray" with respect to a first reflecting surface.

FIG. 4 is a conceptual diagram illustrating a "light source ray" and a "collected light ray" with respect to a second reflecting surface.

FIG. 5(a) is an explanatory diagram illustrating points at which an incoming beam and an outgoing beam intersect the light source ray and a virtual collected light ray with respect to the first reflecting surface, and FIG. 5(b) is an explanatory diagram illustrating points at which an incoming beam and an outgoing beam intersect a virtual light source ray and a collected light ray with respect to the second reflecting surface.

FIG. 6 is a conceptual diagram illustrating a $u^Av^Aw^A$ coordinate system and a $u^Bv^Bw^B$ coordinate system.

FIG. 7 is a conceptual diagram illustrating an equiphase plane $A_{1s}$ in the vicinity of an intersection point $P_s$ on a sagittal light source ray $S_s$.

FIG. 8 is a conceptual diagram illustrating an equiphase plane $A_{1m}$ in the vicinity of an intersection point $P_m$ on a meridional light source ray $S_m$.

FIG. 9 is a conceptual diagram illustrating a uvw coordinate system.

FIG. 10 is a cross-sectional diagram of a light source ray and a collected light ray on a uw plane of a mirror.

FIG. 11 is a conceptual diagram illustrating an example of a mirror that can be designed.

FIG. 12 is a conceptual diagram illustrating another example of the mirror that can be designed.

FIG. 13 is an explanatory diagram illustrating a positional shift between a meridional direction light collection point $F_m$ and a sagittal direction light collection point $F_s$ when a glancing angle is increased in light collection of a spheroidal mirror.

FIG. 14 is a schematic diagram illustrating a reaction when a glancing angle error is input to a double-bounce reflection mirror (integrated type).

FIG. 15 is a graph illustrating an optimization result of an outgoing length $L_2^A$ of the first reflecting surface.

FIG. 16 is a graph illustrating the optimized $L_2^A$ and a response to the glancing angle error.

FIG. 17 is an explanatory view illustrating an optical system arrangement of a mirror of Example 1.

FIG. 18(a) is a diagram of a two-dimensional distribution of a height of the mirror of Example 1, and FIG. 18(b) is a diagram illustrating a longitudinal cross-sectional profile.

FIG. 19 is an explanatory diagram illustrating an installation angle error to be input.

FIGS. 20(a) to 20(d) illustrate graphs indicating responses to a pitch angle error, FIG. 20(a) is a response of a light collection size in a meridional direction, FIG. 20(b) is a response of a light collection size in a sagittal direction, FIG. 20(c) is a response of a light collection position shift in the meridional direction, and FIG. 20(d) is a response of a light collection position shift in the sagittal direction.

FIGS. 21(a) to 21(d) illustrate graphs indicating responses to a yaw angle error, FIG. 21(a) is a response of the light collection size in the meridional direction, FIG. 21(b) is a response of the light collection size in the sagittal direction, FIG. 21(c) is a response of the light collection position shift in the meridional direction, and FIG. 21(d) is a response of a light collection position shift in the sagittal direction.

FIGS. 22(a) to 22(d) illustrate graphs indicating responses to a roll angle error, FIG. 22(a) is a response of the light collection size in the meridional direction, FIG. 22(b) is a response of the light collection size in the sagittal direction, FIG. 22(c) is a response of the light collection position shift in the meridional direction, and FIG. 22(d) is a response of a light collection position shift in the sagittal direction.

FIGS. 23(a) and (b) illustrate diagrams indicating a mirror shape (height distribution) of Example 3, FIG. 23(a) illustrates a two-dimensional distribution of height, and FIG. 23(b) illustrates a longitudinal cross-sectional profile.

FIG. 24 is a diagram illustrating an output result of a distribution of light rays at a light collection point by light ray tracing calculation for a mirror of Example 3.

FIGS. 25(a) and 25(b) illustrate diagrams indicating a mirror shape (height distribution) of Example 4, FIG. 25(a) illustrates a two-dimensional distribution of height, and FIG. 25(b) illustrates a longitudinal cross-sectional profile.

FIG. 26(a) is a diagram illustrating an output result of a distribution of light rays at a light collection point by light ray tracing calculation for a mirror of Example 4, and FIG. 26(b) is a diagram illustrating an output result of a distribution of light rays at a position located 10 m downstream from the light collection point.

## DESCRIPTION OF EMBODIMENTS

A method for designing a mirror according to the present invention relates to a method for designing a mirror having a first reflecting surface and a second reflecting surface, which sequentially reflect light. Hereinafter, the method for designing a mirror according to the present invention will be described with reference to representative embodiments.

An object of the present invention is to freely convert astigmatism, and a mirror is designed with higher accuracy based on Fermat's principle that "light passes through a path with the shortest optical distance". When limited to a collecting (or diffusing) mirror, Fermat's principle can be converted into an expression that "a sum of a distance from a light source point and a distance to a light collection point is constant for any point on a mirror surface (reflecting surface)". When an incoming beam or an outgoing beam has astigmatism, a law of a constant optical path length cannot be applied directly. This is because a beam having astigmatism does not have a single light source point or light collection point as the name indicates. In the present invention, "light source ray" and a "collected light ray" are newly defined and properties of a beam having astigmatism can be geometrically and optically expressed, so that a design technique is realized.

(Definitions of "light source ray" and "collected light ray")

FIG. 1 is a conceptual diagram of a mirror designed with a designing method according to the present invention. Reference sign A denotes a first reflecting surface (also referred to as a mirror A), and Reference sign B denotes a second reflecting surface (also referred to as a mirror B). As illustrated in FIGS. 2(a), 2(b), and 2(c), it is assumed that an optical axis of an incoming beam to the first reflecting surface is a $z_1$ axis, a cross section orthogonal to the $z_1$ axis is an $x_1y_1$ plane, an optical axis of an outgoing beam of the first reflecting surface, the outgoing beam being an incoming beam to the second reflecting surface, is a $z_2$ axis, a cross section orthogonal to the $z_2$ axis is an $x_2y_2$ plane, an optical axis of an outgoing beam of the second reflecting surface is a $z_3$ axis, a cross section orthogonal to the $z_3$ axis is an

$x_3y_3$ plane, and an $x_1$ axis, an $x_2$ axis, and an $x_3$ axis are parallel to a sagittal direction of the first reflecting surface and the second reflecting surface.

First, the "light source ray" and the "collected light ray" with respect to the first reflecting surface will be described. As illustrated in FIG. 3, regarding light collection in the sagittal direction of the first reflecting surface, it is assumed that the incoming beam has a light source at a position displaced by $L_{1s}^A$ in a $z_1$-axis direction from an intersection point $M_0^A$ on the $z_1$ axis on the first reflecting surface between the $z_1$ axis and the $z_2$ axis, and that the outgoing beam travels straight without being reflected by the second reflecting surface. At this time, light is collected at a position displaced by $L_{2s}^A$ in the $z_2$-axis direction from the intersection point $M_0^A$ on the $z_2$ axis.

Regarding light collection in the meridional direction, it is assumed that a light source is provided at a position displaced by $L_{1m}^A$ in the $z_1$-axis direction from the intersection point $M_0^A$ on the $z_1$ axis, and that the outgoing beam travels straight without being reflected by the second reflecting surface, light is collected at a position displaced by $L_{2m}^A$ in the $z_2$-axis direction from the intersection point $M_0^A$ on the $z_2$ axis.

All the incoming light rays passing through the first reflecting surface are considered to pass through both a sagittal light source ray ($S_s$) that passes through the position of the light source in the light collection in the sagittal direction and extends in a direction ($y_1$-axis direction) orthogonal to both the $z_1$ axis as the optical axis of incoming light and the sagittal direction ($x_1$ axis), and a meridional light source ray ($S_m$) that passes through the position of the light source in the light collection in the meridional direction and extends in a direction ($x_1$-axis direction) orthogonal to both the $z_1$ axis as the optical axis and the meridional direction ($y_1$ axis). In this manner, the sagittal light source ray ($S_s$) and the meridional light source ray ($S_m$) are defined.

In addition, all the outgoing light rays emitted from the first reflecting surface are considered to pass through both a sagittal virtual collected light ray ($F_s^A$) that passes through the light collecting position in the light collection in the sagittal direction and extends in a direction ($y_2$-axis direction) orthogonal to the optical axis $z_2$ of the outgoing light and the sagittal direction ($x_2$ axis), and a meridional virtual collected light ray ($F_m^A$) that passes through the light collecting position in the light collection in the meridional direction and extends in a direction ($x_2$-axis direction) orthogonal to the optical axis $z_2$ of the outgoing light and the $y_2$ axis. In this manner, the sagittal virtual collected light ray ($F_s^A$) and the meridional virtual collected light ray ($F_m^A$) are defined.

Next, the "light source ray" and the "collected light ray" with respect to the second reflecting surface will be described. As illustrated in FIG. 4, all incoming light rays passing through the second reflecting surface can be defined such that, on extension line of the incoming light rays, the sagittal virtual collected light ray ($F_s^A$) for the first reflecting surface is a sagittal virtual light source ray ($S_s^B$), and the meridional virtual collected light ray ($F_m^A$) is a meridional virtual light source ray ($S_m^B$). In addition, $L_{1s}^B = L - L_{2s}^A$ and $L_{1m}^B = L - L_{2m}^A$ are defined.

In addition, regarding light collection in the sagittal direction of the second reflecting surface, the outgoing beams are collected at a position displaced by $L_{2s}^B$ in a $z_3$-axis direction from the intersection point $M_0^B$ on the $z_3$ axis on the second reflecting surface between the $z_2$ axis and the $z_3$ axis. In addition, regarding light collection in the meridional direction of the second reflecting surface, the outgoing beams are collected at a position displaced by $L_{2m}^B$ in the $z_3$-axis direction from the intersection point $M_0^B$ on the $z_3$ axis.

All the outgoing light rays emitted from the second reflecting surface are considered to pass through both a sagittal collected light ray ($F_s$) that passes through the light collecting position in the light collection in the sagittal direction and extends in a direction ($y_3$-axis direction) orthogonal to the optical axis $z_3$ of the outgoing light and the sagittal direction ($x_3$ axis) and a meridional collected light ray ($F_m$) that passes through the light collecting position in the light collection in the meridional direction and extends in a direction ($x_3$-axis direction) orthogonal to the optical axis $z_3$ of the outgoing light and the $y_3$ axis. In this manner, the sagittal collected light ray ($F_s$) and the meridional collected light ray ($F_m$) are defined.

Further, in this example, each of the sagittal light source ray ($S_s$), the meridional light source ray ($S_m$), the sagittal virtual collected light ray ($F_s^A$), the meridional virtual collected light ray ($F_m^A$), the sagittal virtual light source ray ($S_s^B$), the meridional virtual light source ray ($S_m^B$), the sagittal collected light ray ($F_s$), and the meridional collected light ray ($F_m$) is a straight line, but may be a curved line.

In addition, FIG. 3 illustrates a case where $L_{1s}^A > L_{1m}^A > 0$ and $L_{2s}^A > L_{2m}^A > 0$, but these constants may take negative values. When $L_{1s}^A$ or $L_{1m}^A$ takes a negative value, the incoming beams to the first reflecting surface are reflected by the reflecting surface on the way of collecting toward downstream. When $L_{2s}^A$ or $L_{2m}^A$ takes a negative value, the outgoing beams of the first reflecting surface have a wavefront that diverges from a position located upstream of the reflecting surface.

Similarly, FIG. 4 illustrates a case of $L_{1s}^B < L_{1m}^B < 0$ and $L_{2s}^B > L_{2m}^B > 0$. When $L_{1s}^B$ or $L_{1m}^B$ takes a negative value, the incoming beams to the second reflecting surface are reflected by the reflecting surface on the way of collecting toward downstream. When $L_{2s}^B$ or $L_{2m}^B$ takes a negative value, the outgoing beams of the second reflecting surface have a wavefront that diverges from a position located upstream of the reflecting surface.

(Derivation of design formula)

By defining the "light source ray" and the "collected light ray" as described above, an incoming light ray and an outgoing light ray passing through any point on the reflecting surface of the mirror can be defined. Specifically, as illustrated in FIG. 5(a), any point on the first reflecting surface is represented by $M^A$, coordinates of an intersection point ($P_s$) between the sagittal light source ray ($S_s$) and an incoming light ray to the $M^A$ point, and an intersection point ($P_m$) between the meridional light source ray ($S_m$) and the incoming light ray to the $M^A$ point can be expressed by using $L_{1s}{}^A$ and $L_{1m}{}^A$. Similarly, coordinates of an intersection point ($Q_s{}^A$) between an outgoing light ray from the $M^A$ point and the sagittal virtual collected light ray ($F_s{}^A$), and an intersection point ($Q_m{}^A$) between the outgoing light ray from the $M^A$ point and the meridional virtual collected light ray ($F_s{}^A$) can be expressed by using $L_{2s}{}^A$ and $L_{2m}{}^A$.

In addition, as illustrated in FIG. 5(b), any point on the second reflecting surface is represented by $M^B$, coordinates of an intersection point ($P_s{}^B$) between the sagittal virtual light source ray ($S_s{}^B$) and an incoming light ray to the $M^B$ point, and an intersection point ($P_m{}^B$) between the meridional virtual light source ray ($S_m{}^B$) and the incoming light ray to the $M^B$ point can be expressed by using $L_{2s}{}^A$, $L_{2m}{}^A$, and a distance L between $M_0{}^A$ and $M_0{}^B$ Similarly, coordinates of an intersection point ($Q_s$) between an outgoing light ray from the $M^B$ point and the sagittal collected light ray ($F_s$) and an intersection point ($Q_m$) between the outgoing light ray from the $M^B$ point and the meridional collected light ray ($F_m$) can be expressed using the $L_{2s}{}^B$ and $L_{2m}{}^{B.}$

The design formulas of the first reflecting surface and the second reflecting surface can be derived based on: the coordinates of $P_s$, $P_m$, $Q_s{}^A$, $Q_m{}^A$, $P_s{}^B$, $P_m{}^B$, $Q_s$, and $Q_{m;}$ a condition that an optical path length from a light source position to a virtual light collection position is constant with respect to any point on the reflecting surface, regarding the light collection in the sagittal direction and the light collection in the meridional direction on the first reflecting surface; and a condition that an optical path length from a virtual light source position to a light collection position is constant with respect to any point on the reflecting surface, regarding the light collection in the sagittal direction and the light collection in the meridional direction on the second reflecting surface.

Any points $M^A$ and $M^B$ on the respective the first reflecting surface and the second reflecting surface can be respectively expressed by $M^A(u^A, v^A, w^A)$ and $M^B(u^B, v^B, w^B)$ by defining a $u^Av^Aw^A$ orthogonal coordinate system and a $u^Bv^Bw^B$ orthogonal coordinate system with reference to the reflecting surface.

As illustrated in FIG. 6, the orthogonal coordinate system $u^Av^Aw^A$ includes the intersection point $M_0{}^A$ on the first reflecting surface between the $z_1$ axis and the $z_2$ axis, in which a plane in contact with the reflecting surface is defined as a $u^Av^A$ plane; a direction of a normal line passing through the $M_0{}^A$ of the $u^Av^A$ plane is defined as a $w^A$ axis; a $v^A$ axis is defined as a direction orthogonal to both the $z_1$ axis and the $z_2$ axis; a $u^A$ axis is defined as a direction orthogonal to both the $v^A$ axis and the $w^A$ axis; an intersection point $M_0{}^A$ is defined as an origin; and an oblique incoming angle formed by the $u^Av^A$ plane and the optical axis $z_1$ is represented by $\theta_0{}^A$.

The orthogonal coordinate system $u^Bv^Bw^B$ includes an intersection point $M_0{}^B$ on the second reflecting surface between the $z_2$ axis and the $z_3$ axis, in which a plane in contact with the reflecting surface is defined as a $u^Bv^B$ plane, a direction of a normal line passing through the $M_0{}^B$ of the $u^Bv^B$ plane is defined as a $w^B$ axis, a $v^B$ axis is defined as a direction orthogonal to both the $z_2$ axis and the $z_3$ axis, a $u^B$ axis is defined as a direction orthogonal to both the $v^B$ axis and the $w^B$ axis, the intersection point $M_0{}^B$ is defined as an origin, and an oblique incoming angle formed by the $u^Bv^B$ plane and the optical axis $z_2$ is represented by $\theta_0{}^B$.

However, in FIG. 6, it should be noted that the sagittal light source ray ($S_s$) and the meridional light source ray ($S_m$) for the light collection of the first reflecting surface are not orthogonal to the $u^A$ axis but are orthogonal to the optical axis $z_1$ of the incoming beam. Similarly, the sagittal virtual collected light ray ($F_s{}^A$) and the meridional virtual collected light ray ($F_m{}^A$) are orthogonal to the optical axis $z_2$ of the outgoing beam. Although it is possible to calculate an optical path length directly from the light source ray and the virtual collected light ray which are obliquely set with respect to the $u^Av^Aw^A$ coordinate system, the calculation is not simple. In view of this, in the embodiment, the optical path length is calculated by converting the coordinate system into a coordinate system based on each of an incoming beam optical axis and an outgoing beam optical axis, and the obtained resultant is substituted in the design formula of the astigmatism control mirror. The same applies to the light collection of the second reflecting surface.

That is, the $u^Av^Aw^A$ coordinate system and the $u^Bv^Bw^B$ coordinate system are converted into an $x_1y_1z_1$ coordinate system based on an optical axis of an incoming beam to the first reflecting surface, an $x_2y_2z_2$ coordinate system based on an optical axis of an outgoing beam from the first reflecting surface, the outgoing beam being an incoming beam to the second reflecting surface, and an $x_3y_3z_3$ coordinate system based on an optical axis of an outgoing beam from the second reflecting surface, and the design formulas are expressed by the $u^Av^Aw^A$ coordinate system and the $u^Bv^Bw^B$ coordinate system.

The conversion into the coordinate system based on the incoming beam optical axis is as follows. Each coordinate of a point $M^A(x_1, y_1, z_1)$ on the mirror is provided by Formula (5).

[Math. 5]

$$M^A(x_1, y_1, z_1) = (v^A, u^A \sin\theta_0^A + w^A \cos\theta_0^A, u^A \cos\theta_0^A - w^A \sin\theta_0^A) \quad (5)$$

A coordinate of the intersection point $P_s$ between the incoming light ray passing through the point $M^A$ and the sagittal light source ray $S_s$ and a coordinate of the intersection point $P_m$ between the same incoming light ray and the meridional light source ray $S_m$ can be expressed respectively by the following formulas (6) and (7) using displacements $L_{1s}{}^A$ and $L_{1m}{}^A$, on the $x_1y_1z_1$ coordinate system.
[Math. 6]

$$P_s = \left(0,\ \left(L_{1m}^A - L_{1s}^A\right) \frac{y_1}{z_1 + L_{1m}^A},\ -L_{1s}^A\right) \quad (6)$$

$$P_m = \left(\left(L_{1s}^A - L_{1m}^A\right) \frac{x_1}{z_1 + L_{1s}^A},\ 0,\ -L_{1m}^A\right) \quad (7)$$

Similarly, the conversion into the coordinate system based on the outgoing beam optical axis on the first reflecting surface is as follows. Each coordinate of the point $M^A(x_2{}^A, y_2{}^A, z_2{}^A)$ on the mirror is provided by Formula (8).
[Math. 7]

$$M^A(x_2^A, y_2^A, z_2^A) = (v^A, -u^A \sin\theta_0^A + w^A \cos\theta_0^A, u^A \cos\theta_0^A + w^A \sin\theta_0^A) \quad (8)$$

A coordinate of the intersection point $Q_s{}^A$ between the outgoing light ray passing through the point $M^A$ on the first reflecting surface and the sagittal virtual collected light ray $F_s{}^A$ and a coordinate of the intersection point $Q_m{}^A$ between the outgoing light ray and the meridional virtual collected light ray $F_m{}^A$ can be expressed respectively by the following formulas (9) and (10) using the displacements $L_{2s}{}^A$ and $L_{2m}{}^A$, on the $x_2y_2z_2$ coordinate system.
[Math. 8]

$$Q_s^A = \left(0,\ \left(L_{2m}^A - L_{2s}^A\right) \frac{y_2^A}{L_{2m}^A - z_2^A},\ L_{2s}^A\right) \quad (9)$$

$$Q_m^A = \left(\left(L_{2s}^A - L_{2m}^A\right) \frac{x_2^A}{L_{2s}^A - z_2^A},\ 0,\ L_{2m}^A\right) \quad (10)$$

Each coordinate of a point $M^B(x_2{}^B, y_2{}^B, z_2{}^B)$ on the mirror is provided by Formula (11).
[Math. 9]

$$M^B(x_2^B, y_2^B, z_2^B) = (v^B, u^B \sin\theta_0^B + w^B \cos\theta_0^B, u^B \cos\theta_0^B - w^B \sin\theta_0^B + L) \quad (11)$$

A coordinate of the intersection point $P_s{}^B$ between the incoming light ray passing through the point $M^B$ and the sagittal virtual light source ray $S_s{}^B$ and a coordinate of the intersection point $P_m{}^B$ between the same incoming light ray and the meridional virtual light source ray $S_m{}^B$ can be expressed respectively by the following formulas (12) and (13) using the displacements $L_{1s}{}^B$ and $L_{1m}{}^B$, on the $x_2y_2z_2$ coordinate system.
[Math. 10]

$$P_s^B = \left(0,\ \left(L_{1m}^B - L_{1s}^B\right)\frac{y_2^B}{z_2^B - L + L_{1m}^B},\ -L_{1s}^B + L\right) \qquad (12)$$

$$P_m^B = \left(\left(L_{1s}^B - L_{1m}^B\right)\frac{x_2^B}{z_2^B - L + L_{1s}^B},\ 0,\ -L_{1s}^B + L\right) \qquad (13)$$

Similarly, conversion into the coordinate system based on the outgoing beam optical axis on the second reflecting surface is as follows. Each coordinate of the point $M^B(x_3, y_3, z_3)$ on the mirror is provided by Formula (14).
[Math. 11]

$$M^B(x_3, y_3, z_3) = (v^B, -u^B \sin\theta_0^B + w^B \cos\theta_0^B, u^B \cos\theta_0^B + w^B \sin\theta_0^B) \qquad (14)$$

A coordinate of the intersection point $Q_s$ between the outgoing light ray passing through the point $M^B$ and the sagittal collected light ray $F_s$ on the second reflecting surface and a coordinate of the intersection point $Q_m$ between the outgoing light ray and the meridional collected light ray $F_m$ can be expressed respectively by the following formulas (15) and (16) using the displacements $L_{2s}{}^B$ and $L_{2m}{}^B$, on the $x_3y_3z_3$ coordinate system.
[Math. 12]

$$Q_s = \left(0,\ \left(L_{2m}^B - L_{2s}^B\right)\frac{y_3}{L_{2m}^B - z_3},\ L_{2s}^B\right) \qquad (15)$$

$$Q_m = \left(\left(L_{2s}^B - L_{2m}^B\right)\frac{x_3}{L_{2s}^B - z_3},\ 0,\ L_{2m}^B\right) \qquad (16)$$

As described above, the design formulas of the reflecting surface can be derived based on: the coordinates of $P_s$, $P_m$, $Q_s{}^A$, $Q_m{}^A$, $P_s{}^B$, $P_m{}^B$, $Q_s$, and $Q_m$; the condition that the optical path length from the light source position to the virtual light collection position is constant with respect to any point on the reflecting surface, regarding the light collection in the sagittal direction and the light collection in the meridional direction on the first reflecting surface; and the condition that the optical path length from the virtual light source position to the light collection position is constant with respect to any point on the reflecting surface, regarding the light collection in the sagittal direction and the light collection in the meridional direction on the second reflecting surface.

In the embodiment, the distance between each of the intersection points $P_s$, $P_m$, $Q_s{}^A$, $Q_m{}^A$, $P_s{}^B$, $P_m{}^B$, $Q_s$, and $Q_m$ on the light source ray and the collected light ray and any point $M^A$ or $M^B$ on the first reflecting surface/the second reflecting surface is not set as an incoming length or an outgoing length as it is, but is calculated by performing the following compensation for an optical path length to obtain a more accurate design formula while using the coordinates of the intersection points on the light source ray and the collected light ray defined as a straight line.

(Optical path length compensation)

Fermat's principle in a case where a normal light source point and a light collection point can be defined is considered. An equiphase plane in the vicinity of the light source point is a spherical plane having the light source point as a center, and an equiphase plane in the vicinity of the light collection point is a spherical plane having the light collection point as a center. Keeping in mind that light rays are always orthogonal to an equiphase plane, the law of constant optical path length is paraphrased as the fact that an optical distance of a light ray connecting any point on a specific equiphase plane in the vicinity of a light source point and a point on a specific equiphase plane in the vicinity of a light collection point corresponding thereto is constant. Even in a case where an incoming beam as in the present invention has astigmatism, a more accurate design formula can be derived by performing compensation in consideration of the equiphase plane.

(Optical path length compensation on incoming side of first reflecting surface)

First, regarding the incoming side of the first reflecting surface, an equiphase plane in the vicinity corresponding to the above-described intersection point $P_s$ on the sagittal light source ray $S_s$ is considered. On the sagittal light source ray $S_s$, a wavefront converging toward the meridional light source ray $S_m$ should be observed. Although it is not strictly possible to define a phase on the sagittal light source ray $S_s$ on the basis of such an assumption described above, an intersection point between $S_m$ and the $z_1$ axis is here represented by $P_{m0}$, and it is assumed that a phase distribution corresponding to a distance from $P_{m0}$ is present on $S_s$, i.e., a beam before incoming to the mirror (reflecting surface) has a wavefront concentrated on the meridional light source ray $S_m$ in the $y_1$-axis direction. Based on this idea, as illustrated in FIG. 7, a rotated arcuate plane formed by rotating, around the sagittal light source ray $S_s$, an arc $B_{1s}$ around the intersection point $P_{m0}$ between the meridional light source ray $S_m$ and the $z_1$ axis and extends in a direction orthogonal to the $x_1$ axis through the intersection point $P_{s0}$ between the sagittal light source ray $S_s$ and the $z_1$ axis is defined as an equiphase plane $A_{1s}$. An incoming length from the light source position to the $M^A$ point in the light collection in the sagittal direction is more accurately obtained as a distance to the $M^A$ point from an intersection point on a side close to the meridional light source ray $S_m$ among two intersection points between the incoming light ray and the equiphase plane $A_{1s}$.

Here, a distance from the intersection point between the incoming light ray and the equiphase plane $A_{1s}$ to the $M^A$ point on the reflecting surface of the mirror is obtained by first obtaining a distance from the intersection point $P_s$ between the incoming light ray and the sagittal light source ray $S_s$ to the $M^A$ point and adding or subtracting (subtracting in the example of the drawing), to or from the distance, a distance from the intersection point $P_s$ to the arc $B_{1s}$ defining the equiphase plane $A_{1s}$, i.e., a distance between $P_s$ and $H_{1s}$ where $H_{1s}$ represents a foot of a perpendicular line drawn from $P_s$ to the arc $B_{1s}$. Accordingly, an incoming length $f_{1s}^A$ is expressed by Formula (17). The reason why this formula is an approximate formula is that there is no guarantee that the point $H_{1s}$ is present on a straight line from $P_s$ to $M^A$. However, it is needless to say that the incoming length may be obtained by calculation other than the approximate formula. In the example, the incoming length is approximately obtained by adding/subtracting the distance between $P_s$ and $H_{1s}$ where $H_{1s}$ represents the foot of the perpendicular line drawn from $P_s$ to the arc $B_{1s}$ as described above, but the incoming length may be more accurately calculated using a distance from $P_s$ to the intersection point on the side close to the meridional light source ray $S_m$ among the two intersection points between the incoming light ray and the equiphase plane $A_{1s}$ instead of the perpendicular line drawn to the arc $B_{1s}$.

[Math. 13]

$$
\begin{aligned}
f_{1s}^A(u^A, v^A, w^A) &= \left|\overrightarrow{P_s M^A}\right| - \left|\overrightarrow{P_s H_{1s}}\right| \\
&= \sqrt{x_1^2 + \left(y_1 - \left(L_{1m}^A - L_{1s}^A\right)\frac{y_1}{z_1 + L_{1m}^A}\right)^2 + \left(z_1 + L_{1s}^A\right)^2} \\
&\quad - \left\{\sqrt{\left(L_{1s}^A - L_{1m}^A\right)^2 + \left(L_{1m}^A - L_{1s}^A\right)^2 \left(\frac{y_1}{z_1 + L_{1m}^A}\right)^2} \right. \\
&\quad \left. - \left(L_{1s}^A - L_{1m}^A\right)\right\} \\
&= \left(z_1 + L_{1s}^A\right)\sqrt{1 + \left(\frac{x_1}{z_1 + L_{1s}^A}\right)^2 + \left(\frac{y_1}{z_1 + L_{1m}^A}\right)^2} \\
&\quad - \left(L_{1s}^A - L_{1m}^A\right)\left\{\sqrt{1 + \left(\frac{y_1}{z_1 + L_{1s}^A}\right)^2} - 1\right\}
\end{aligned}
\tag{17}
$$

(17)

By introducing $t'^{A}_{1x}$ and $t'^{A}_{1y}$ to the formula, the formula can be transformed into the following formula (18).

[Math. 14]

$$
\begin{aligned}
f^{A}_{1s}(u^{A}, v^{A}, w^{A}) =& z_1\sqrt{1 + {t'}^{A\,2}_{1x} + {t'}^{A\,2}_{1y}} \\
&+ L^{A}_{1m}\left(\sqrt{1 + {t'}^{A\,2}_{1y}} - 1\right) \\
&+ L^{A}_{1s}\left(\sqrt{1 + {t'}^{A\,2}_{1x} + {t'}^{A\,2}_{1y}} - \sqrt{1 + {t'}^{A\,2}_{1y}} + 1\right) \qquad (18)
\end{aligned}
$$

$$
{t'}^{A}_{1x} = \frac{x_1}{z_1 + L^{A}_{1s}}
$$

$$
{t'}^{A}_{1y} = \frac{y_1}{z_1 + L^{A}_{1m}}
$$

Similarly, regarding the incoming side of the first reflecting surface, an equiphase plane in the vicinity corresponding to the above-described intersection point $P_m$ on the meridional light source ray $S_m$ is subsequently considered. On the meridional light source ray $S_m$, a wavefront diverging from the sagittal light source ray $S_s$ should be observed. Although it is not strictly possible to define a phase on the $S_m$ on the basis of such an assumption described above, an intersection point between $S_s$ and the $z_1$ axis is here represented by $P_{s0}$, and it is assumed that a phase distribution corresponding to a distance from $P_{s0}$ is present on $S_m$, i.e., a beam before incoming to the mirror (reflecting surface) has a wavefront diverging from the sagittal light source ray $S_s$ in the $x_1$-axis direction. Based on this idea, as illustrated in FIG. 8, a rotated arcuate plane formed by rotating, around the meridional light source ray $S_m$, an arc $B_{1m}$ around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis is defined as an equiphase plane $A_{1m}$. An incoming length from the light source position to the $M^A$ point in the light collection in the meridional direction is obtained as a distance to the $M^A$ point on the reflecting surface of the mirror from an intersection point on a side close to the sagittal light source ray $S_s$ among two intersection points between the incoming light ray and the equiphase plane $A_{1m}$.

A distance from the intersection point between the incoming light ray and the equiphase plane $A_{1m}$ to the $M^A$ point is obtained by first obtaining a distance from the intersection point $P_m$ between the incoming light ray and the meridional light source ray $S_m$ to the $M^A$ point and adding or subtracting (adding in the example), to or from the distance, a distance from the intersection point $P_m$ to the arc $B_{1m}$ defining the equiphase plane $A_{1m}$, i.e., a distance between $P_m$ and $H_{1m}$ where $H_{1m}$ represents a foot of a perpendicular line drawn from $P_m$ to the arc $B_{1m}$. That is, an incoming length $f_{1m}{}^{A}$ is expressed by Formula (19).

[Math. 15]

$$f_{1m}^{A}(u^{A},v^{A},w^{A}) = \left|\overrightarrow{P_m M^A}\right| + \left|\overrightarrow{H_{1m} P_m}\right|$$

$$= \sqrt{\left(x_1 - \left(L_{1s}^A - L_{1m}^A\right)^2 \frac{x_1}{z_1 + L_{1s}^A}\right)^2 + y_1^2 + \left(z_1 + L_{1m}^A\right)^2}$$

$$+ \left\{\sqrt{\left(L_{1s}^A - L_{1m}^A\right)^2 + \left(L_{1s}^A - L_{1m}^A\right)^2 \left(\frac{x_1}{z_1 + L_{1s}^A}\right)^2}\right.$$

$$\left. - \left(L_{1s}^A - L_{1m}^A\right)\right\}$$

$$= \left(z_1 + L_{1m}^A\right)\sqrt{1 + \left(\frac{x_1}{z_1 + L_{1s}^A}\right)^2 + \left(\frac{y_1}{z_1 + L_{1m}^A}\right)^2}$$

$$+ \left(L_{1s}^A - L_{1m}^A\right)\left\{\sqrt{1 + \left(\frac{x_1}{z_1 + L_{1s}^A}\right)^2} - 1\right\} \quad (19)$$

By introducing $t'^{A}_{1x}$ and $t'^{A}_{1y}$ to the formula, the formula can be transformed into the following formula (20). [Math. 16]

$$f_{1m}^{A}(u^{A},v^{A},w^{A}) = z_1\sqrt{1 + {t'}_{1x}^{A\,2} + {t'}_{1y}^{A\,2}}$$

$$+ L_{1m}^A\left(\sqrt{1 + {t'}_{1x}^{A\,2} + {t'}_{1y}^{A\,2}} - \sqrt{1 + {t'}_{1x}^{A\,2}} + 1\right)$$

$$+ L_{1s}^A\left(\sqrt{1 + {t'}_{1x}^{A\,2}} - 1\right) \quad (20)$$

(Optical path length compensation on outgoing side of first reflecting surface)

Regarding an outgoing side, similarly to the incoming side, both an equiphase plane in the vicinity corresponding to the intersection point $Q_s^A$ on the sagittal virtual collected light ray $F_s^A$ and an equiphase plane in the vicinity corresponding to the intersection point $Q_m^A$ on the meridional virtual collected light ray $F_m^A$ are considered. On the sagittal virtual collected light ray $F_s^A$, a wavefront diverging from the meridional virtual collected light ray $F_m^A$ should be virtually observed. Although it is not possible to strictly define a phase on $F_s^A$ on the basis of such an assumption described above, an intersection point between $F_m^A$ and the outgoing optical axis $z_2$ is here represented by $Q_{m0}^A$, and it is assumed that a phase distribution corresponding to a distance from $Q_{m0}^A$ is present on $F_s^A$. In addition, on the meridional virtual collected light ray $F_m^A$, a wavefront converging toward the sagittal virtual collected light ray $F_s^A$ should be virtually observed. Although it is not possible to strictly define a phase on $F_m^A$ on the basis of such an assumption, , an intersection point between $F_s^A$ and the outgoing optical axis $z_2$ is here represented by $Q_{s0}^A$, and it is assumed that a phase distribution corresponding to a distance from $Q_{s0}^A$ is present on $F_m^A$.

Based on these ideas, a more accurate outgoing length is obtained similarly to the incoming side. Specifically, although illustration is omitted, compensation is performed, in the same manner as described above, by addition or subtraction using a distance from the intersection point $Q_s^A$ to an arc $B_{2s}^A$ defining an equiphase plane, i.e., a distance

between $H_{2s}^A$ and $Q_s^A$ where $H_{2s}^A$ represents a foot of a perpendicular line drawn from $Q_s^A$ to the arc $B_{2s}^A$, and a distance between the intersection point $Q_m^A$ and an arc $B_{2m}^A$ defining an equiphase plane, i.e., a distance between $Q_m^A$ and $H_{2m}^A$ where $H_{2m}^A$ represents the foot of the perpendicular line drawn from $Q_m^A$ to the arc $B_{2m}^A$, and both outgoing lengths of a virtual outgoing length $f_{2s}^A$ in the sagittal direction and a virtual outgoing length $f_{2m}^A$ in the meridional direction can be more accurately obtained as in Formulas (21) and (22).

[Math. 17]

$$
\begin{aligned}
f_{2s}^A(u^A, v^A, w^A) &= \left|\overrightarrow{M^A Q_s^A}\right| - \left|\overrightarrow{H_{2s}^A Q_s^A}\right| \\
&= \sqrt{{x_2^A}^2 + \left(\left(L_{2m}^A - L_{2s}^A\right)\frac{y_2^A}{L_{2m}^A - z_2^A} - y_2^A\right)^2 + \left(L_{2s}^A - z_2^A\right)^2} \\
&\quad - \left\{\sqrt{\left(L_{2s}^A - L_{2m}^A\right)^2 + \left(L_{2m}^A - L_{2s}^A\right)^2\left(\frac{y_2^A}{L_{2m}^A - z_2^A}\right)^2} \right. \\
&\quad \left. - \left(L_{2s}^A - L_{2m}^A\right)\right\} \\
&= \left(L_{2s} - z_2^A\right)\sqrt{1 + \left(\frac{x_2^A}{L_{2s}^A - z_2^A}\right)^2 + \left(\frac{y_2^A}{L_{2m}^A - z_2^A}\right)^2} \\
&\quad - \left(L_{2s}^A - L_{2m}^A\right)\left\{\sqrt{1 + \left(\frac{y_2^A}{L_{2m}^A - z_2}\right)^2} - 1\right\} \qquad (21)
\end{aligned}
$$

[Math. 18]

$$f_{2m}^{A}(u^{A},v^{A},w^{A}) = \left|\overrightarrow{M^{A}Q_{m}^{A}}\right| + \left|\overrightarrow{Q_{m}^{A}H_{2m}^{A}}\right|$$

$$= \sqrt{\left(\left(L_{2s}^{A}-L_{2m}^{A}\right)\frac{x_{2}^{A}}{L_{2s}^{A}-z_{2}^{A}} - x_{2}^{A}\right)^{2} + {y_{2}^{A}}^{2} + \left(L_{2m}^{A}-z_{2}^{A}\right)^{2}}$$

$$+ \left\{\sqrt{\left(L_{2s}^{A}-L_{2m}^{A}\right)^{2} + \left(L_{2s}^{A}-L_{2m}^{A}\right)^{2}\left(\frac{x_{2}^{A}}{L_{2s}^{A}-z_{2}^{A}}\right)^{2}}\right.$$

$$\left. - \left(L_{2s}^{A}-L_{2m}^{A}\right)\right\}$$

$$= \left(L_{2m}-z_{2}^{A}\right)\sqrt{1+\left(\frac{x_{2}^{A}}{L_{2s}^{A}-z_{2}^{A}}\right)^{2}+\left(\frac{y_{2}^{A}}{L_{2m}^{A}-z_{2}^{A}}\right)^{2}}$$

$$+ \left(L_{2s}^{A}-L_{2m}^{A}\right)\left\{\sqrt{1+\left(\frac{x_{2}^{A}}{L_{2s}^{A}-z_{2}^{A}}\right)^{2}} - 1\right\} \qquad (22)$$

$f_{2s}^{A}$ can be transformed as in the following formula (23) by introducing $t'^{A}_{2x}$ and $t'^{A}_{2y}$.
[Math. 19]

$$f_{2s}^{A}(u^{A},v^{A},w^{A}) = -z_{2}^{A}\sqrt{1+{t'^{A}_{2x}}^{2}+{t'^{A}_{2y}}^{2}}$$

$$+ L_{2m}^{A}\left(\sqrt{1+{t'^{A}_{2y}}^{2}} - 1\right)$$

$$+ L_{2s}^{A}\left(\sqrt{1+{t'^{A}_{2x}}^{2}+{t'^{A}_{2y}}^{2}} - \sqrt{1+{t'^{A}_{2y}}^{2}} + 1\right) \qquad (23)$$

$$t'^{A}_{2x} = \frac{x_{2}^{A}}{L_{2s}^{A}-z_{2}^{A}}$$

$$t'^{A}_{2y} = \frac{y_{2}^{A}}{L_{2m}^{A}-z_{2}^{A}}$$

$f_{2m}^{A}$ can be transformed as in the following formula (24) by introducing $t'^{A}_{2x}$ and $t'^{A}_{2y}$.
[Math. 20]

$$f_{2m}^{A}(u^{A}, v^{A}, w^{A}) = -\, z_{2}^{A}\sqrt{1+{t'}_{2x}^{A\,2}+{t'}_{2y}^{A\,2}} + L_{2m}^{A}\left(\sqrt{1+{t'}_{2x}^{A\,2}+{t'}_{2y}^{A\,2}} - \sqrt{1+{t'}_{2x}^{A\,2}} + 1\right) + L_{2s}^{A}\left(\sqrt{1+{t'}_{2x}^{A\,2}} - 1\right) \qquad (24)$$

(Optical path length compensation on incoming side of second reflecting surface)

Regarding an incoming side of the second reflecting surface, similarly to the incoming side of the first reflecting surface, an equiphase plane in the vicinity corresponding to the intersection point $P_s^B$ on the sagittal virtual light source ray $S_s^B$ and an equiphase plane in the vicinity corresponding to the intersection point $P_m^B$ on the meridional virtual light source ray $S_m^B$ are considered. On the sagittal virtual light source ray $S_s^B$, a wavefront diverging from the meridional virtual light source ray $S_m^B$ should be virtually observed. Although it is not strictly possible to define a phase on $S_s^B$ on the basis of such an assumption, an intersection point between $S_m^B$ and the incoming optical axis $z_2$ is here represented by $P_{m0}^B$, and it is assumed that a phase distribution corresponding to a distance from $P_{m0}^B$ is present on $S_s^B$. In addition, on the meridional virtual light source ray $S_m^B$, a wavefront converging toward the sagittal virtual light source ray $S_s^B$ should be virtually observed. Although it is not strictly possible to define a phase on $S_m^B$ on the basis of such an assumption, an intersection point between $S_s^B$ and the incoming optical axis $z_2$ is here represented by $P_{s0}^B$, and it is assumed that a phase distribution corresponding to a distance from $P_{s0}^B$ is present on $S_m^B$.

Based on these ideas, a more accurate incoming length is obtained. Specifically, although illustration is omitted, compensation is performed, in the same manner as described above, by addition or subtraction using a distance from the intersection point $P_s^B$ to an arc $B_{1s}^B$ defining an equiphase plane, i.e., a distance between $H_{1s}^B$ and $P_s^B$ where $H_{1s}^B$ represents a foot of a perpendicular line drawn from $P_s^B$ to the arc $B_{1s}^B$, and a distance from the intersection point $P_m^B$ to an arc $B_{1m}^B$ defining an equiphase plane, i.e., a distance between $P_m^B$ and $H_{1m}^B$ where $H_{1m}^B$ represents a foot of a perpendicular line drawn from $P_m^B$ to the arc $B_{1m}^B$, and both incoming lengths of a virtual incoming length $f_{1s}^B$ in the sagittal direction and a virtual incoming length $f_{1m}^B$ in the meridional direction can be more accurately obtained as in Formulas (25) and (26). Further, when $L_{2s}^A > 0$ and $L_{2m}^A > 0$, $L_{1s}^B < 0$ and $L_{1m}^B < 0$, and $f_{1s}^B < 0$ and $f_{1m}^B < 0$.
[Math. 21]

$$f_{1s}^{B}(u^{B},v^{B},w^{B}) = -\left(\left|\overrightarrow{P_sM^B}\right| - \left|\overrightarrow{P_sH_{1s}}\right|\right)$$

$$= -\sqrt{{x_2^B}^2 + \left(y_2^B - \left(L_{1m}^B - L_{1s}^B\right)\frac{y_2^B}{z_2^B - L + L_{1m}^B}\right)^2 + \left(z_2^B - L + L_{1s}^B\right)^2}$$

$$+ \left\{\sqrt{\left(L_{1s}^B - L_{1m}^B\right)^2 + \left(L_{1m}^B - L_{1s}^B\right)^2\left(\frac{y_2^B}{z_2^B - L + L_{1m}^B}\right)^2}\right.$$

$$\left. - \left(L_{1s}^B - L_{1m}^B\right)\right\}$$

$$= \left(z_2^B - L + L_{1s}^B\right)\sqrt{1 + \left(\frac{x_2^B}{z_2^B - L + L_{1s}^B}\right)^2 + \left(\frac{y_2^B}{z_2^B - L + L_{1m}^B}\right)^2}$$

$$- \left(L_{1s}^B - L_{1m}^B\right)\left\{\sqrt{1 + \left(\frac{y_2^B}{z_2^B - L + L_{1m}^B}\right)^2} - 1\right\} \quad (25)$$

[Math. 22]

$$f_{1m}^{B}(u^{B},v^{B},w^{B}) = -\left(\left|\overrightarrow{P_mM^B}\right| + \left|\overrightarrow{H_{1m}P_m}\right|\right)$$

$$= -\sqrt{\left(x_2^B - \left(L_{1s}^B - L_{1m}^B\right)\frac{x_2^B}{z_2^B - L + L_{1s}^B}\right)^2 + {y_2^B}^2 + \left(z_2^B - L + L_{1m}^B\right)^2}$$

$$- \left\{\sqrt{\left(L_{1s}^B - L_{1m}^B\right)^2 + \left(L_{1s}^B - L_{1m}^B\right)^2\left(\frac{x_2^B}{z_2^B - L + L_{1s}^B}\right)^2}\right.$$

$$\left. - \left(L_{1s}^B - L_{1m}^B\right)\right\}$$

$$= \left(z_2^B - L + L_{1m}^B\right)\sqrt{1 + \left(\frac{x_2^B}{z_2^B - L + L_{1s}^B}\right)^2 + \left(\frac{y_2^B}{z_2^B - L + L_{1m}^B}\right)^2}$$

$$+ \left(L_{1s}^B - L_{1m}^B\right)\left\{\sqrt{1 + \left(\frac{x_2^B}{z_2^B - L + L_{1s}^B}\right)^2} - 1\right\} \quad (26)$$

$f_{1s}^B$ can be transformed as in the following formula (27) by introducing $t'_{1x}{}^B$ and $t'_{1y}{}^B$.
[Math. 23]

$$f_{1s}^B(u^B, v^B, w^B) = \left(z_2^B - L\right)\sqrt{1 + {t'}_{1x}^{B\,2} + {t'}_{1y}^{B\,2}} + L_{1m}^B\left(\sqrt{1 + {t'}_{1x}^{B\,2}} - 1\right) + L_{1s}^B\left(\sqrt{1 + {t'}_{1x}^{B\,2} + {t'}_{1y}^{B\,2}} - \sqrt{1 + {t'}_{1y}^{B\,2}} + 1\right) \quad (27)$$

$${t'}_{1x}^B = \frac{x_2^B}{z_2^B - L + L_{1s}^B}$$

$${t'}_{1y}^B = \frac{y_2^B}{z_2^B - L + L_{1m}^B}$$

$f_{1m}^B$ can be transformed as in the following formula (28) by introducing $t'_{1x}{}^B$ and $t'_{1y}{}^B$.
[Math. 24]

$$f_{1m}^B(u^B, v^B, w^B) = \left(z_2^B - L\right)\sqrt{1 + {t'}_{1x}^{B\,2} + {t'}_{1y}^{B\,2}} + L_{1m}^B\left(\sqrt{1 + {t'}_{1x}^{B\,2} + {t'}_{1y}^{B\,2}} - \sqrt{1 + {t'}_{1x}^{B\,2}} + 1\right) + L_{1s}^B\left(\sqrt{1 + {t'}_{1x}^{B\,2}} - 1\right) \quad (28)$$

(Optical path length compensation on outgoing side of second reflecting surface)

Regarding an outgoing side, similarly to the incoming side, an equiphase plane in the vicinity corresponding to the intersection point $Q_s$ on the sagittal collected light ray $F_s$ and an equiphase plane in the vicinity corresponding to the intersection point $Q_m$ on the meridional collected light ray $F_m$ are considered. On the sagittal collected light ray $F_s$, a wavefront diverging from the meridional collected light ray $F_m$ should be observed. Although it is not strictly possible to define a phase on $F_s$ on the basis of such an assumption, an intersection point between $F_m$ and the outgoing optical axis $z_3$ is here represented by $Q_{m0}$, and it is assumed that a phase distribution corresponding to a distance from $Q_{m0}$ is present on $F_s$. In addition, on the meridional collected light ray $F_m$, a wavefront converging toward the sagittal collected light ray $F_s$ should be observed. Although it is not possible to strictly define a phase on $F_m$ based on such an assumption, an intersection point between $F_s$ and the outgoing optical axis $z_3$ is here represented by $Q_{s0}$, and it is assumed that a phase distribution corresponding to the distance from $Q_{s0}$ is present on $F_m$.

Based on these ideas, a more accurate outgoing length is obtained. Specifically, although illustration is omitted, compensation is performed, in the same manner as described above, by addition or subtraction using a distance from the intersection point $Q_s$ to an arc $B_{2s}^B$ defining an equiphase plane, i.e., a distance between $H_{2s}^B$ and $Q_s$, where $H_{2s}^B$ represents a foot of a perpendicular line drawn from $Q_s$ to the arc $B_{2s}^B$, and a distance from the intersection point $Q_m$ to an arc $B_{2m}^B$ defining an equiphase plane, i.e., a distance between $Q_m$ and $H_{2m}^B$, where $H_{2m}^B$ represents a foot of a perpendicular line drawn from $Q_m$ to the arc $B_{2m}^B$, and both incoming lengths of the outgoing length $f_{2s}^B$ in the sagittal direction and the outgoing length $f_{2m}^B$ in the meridional direction can be more accurately obtained as in Formulas (29) and (30).
[Math. 25]

$$f_{2s}^{B}(u^{B},v^{B},w^{B}) = \left|\overrightarrow{M^{B}Q_{s}}\right| - \left|\overrightarrow{H_{2s}^{B}Q_{s}}\right|$$

$$= \sqrt{x_3^2 + \left(\left(L_{2m}^{B} - L_{2s}^{B}\right)\frac{y_3}{L_{2m}^{B} - z_3} - y_3\right)^2 + \left(L_{2s}^{B} - z_3\right)^2}$$

$$- \left\{\sqrt{\left(L_{2s}^{B} - L_{2m}^{B}\right)^2 + \left(L_{2m}^{B} - L_{2s}^{B}\right)^2\left(\frac{y_3}{L_{2m}^{B} - z_3}\right)^2}\right.$$

$$\left. - \left(L_{2s}^{B} - L_{2m}^{B}\right)\right\}$$

$$= \left(L_{2s} - z_3\right)\sqrt{1 + \left(\frac{x_3}{L_{2s}^{B} - z_3}\right)^2 + \left(\frac{y_3}{L_{2m}^{B} - z_3}\right)^2}$$

$$- \left(L_{2s}^{B} - L_{2m}^{B}\right)\left\{\sqrt{1 + \left(\frac{y_3}{L_{2m}^{B} - z_3}\right)^2} - 1\right\} \qquad (29)$$

[Math. 26]

$$f_{2m}^{B}(u^{B},v^{B},w^{B}) = \left|\overrightarrow{M^{B}Q_{m}}\right| + \left|\overrightarrow{Q_{m}H_{2m}^{B}}\right|$$

$$= \sqrt{\left(\left(L_{2s}^{B} - L_{2m}^{B}\right)\frac{x_3}{L_{2s}^{B} - z_3} - x_3\right)^2 + y_3^2 + \left(L_{2m}^{B} - z_3\right)^2}$$

$$+ \left\{\sqrt{\left(L_{2s}^{B} - L_{2m}^{B}\right)^2 + \left(L_{2s}^{B} - L_{2m}^{B}\right)^2\left(\frac{x_3}{L_{2s}^{B} - z_3}\right)^2}\right.$$

$$\left. - \left(L_{2s}^{B} - L_{2m}^{B}\right)\right\}$$

$$= \left(L_{2m} - z_3\right)\sqrt{1 + \left(\frac{x_3}{L_{2s}^{B} - z_3}\right)^2 + \left(\frac{y_3}{L_{2m}^{B} - z_3}\right)^2}$$

$$+ \left(L_{2s}^{B} - L_{2m}^{B}\right)\left\{\sqrt{1 + \left(\frac{x_3}{L_{2s}^{B} - z_3}\right)^2} - 1\right\} \qquad (30)$$

$f_{2s}^B$ can be transformed as in the following formula (31) by introducing $t'_{2x}{}^B$ and $t'_{2y}{}^B$.
[Math. 27]

$$\begin{aligned} f_{2s}^B(u^B, v^B, w^B) = & -z_3\sqrt{1+{t'}_{2x}^{B\,2}+{t'}_{2y}^{B\,2}} \\ & + L_{2m}^B\left(\sqrt{1+{t'}_{2y}^{B\,2}}-1\right) \\ & + L_{2s}^B\left(\sqrt{1+{t'}_{2x}^{B\,2}+{t'}_{2y}^{B\,2}}-\sqrt{1+{t'}_{2y}^{B\,2}}+1\right) \end{aligned} \quad (31)$$

$$t'^B_{2x} = \frac{x_3}{L_{2s}^B - z_3}$$

$$t'^B_{2y} = \frac{y_3}{L_{2m}^B - z_3}$$

$f_{2m}^B$ can be transformed as in the following formula (32) by introducing $t'_{2x}{}^B$ and $t'2_y{}^B$.
[Math. 28]

$$\begin{aligned} f_{2m}^B(u^B, v^B, w^B) = & -z_3\sqrt{1+{t'}_{2x}^{B\,2}+{t'}_{2y}^{B\,2}} \\ & + L_{2m}^B\left(\sqrt{1+{t'}_{2x}^{B\,2}+{t'}_{2y}^{B\,2}}-\sqrt{1+{t'}_{2x}^{B\,2}}+1\right) \\ & + L_{2s}^B\left(\sqrt{1+{t'}_{2x}^{B\,2}}-1\right) \end{aligned} \quad (32)$$

(Calculation of optical path length)

By using each of the incoming length and the outgoing length obtained as described above, an optical path length for light collection in each of the sagittal direction and the meridional direction is calculated for each of the reflecting surfaces of the first reflecting surface and the second reflecting surface.

Regarding the sagittal direction of the first reflecting surface, when a reference optical path length from the light source point to the virtual light collection point is defined as $L_s^A = L_{1s}^A + L_{2s}^A$, a conditional formula necessary for the light collection in the sagittal direction is derived as in the following formula (33).
[Math. 29]

$$\begin{aligned} f_s^A(u^A,v^A,w^A) =& f_{1s}^A(u^A,v^A,w^A)+f_{2s}^A(u^A,v^A,w^A)-L_s^A \\ =& z_1\sqrt{1+{t'}_{1x}^{A\,2}+{t'}_{1y}^{A\,2}}-z_2^A\sqrt{1+{t'}_{2x}^{A\,2}+{t'}_{2y}^{A\,2}} \\ &+L_{1m}^A\left(\sqrt{1+{t'}_{1y}^{A\,2}}-1\right) \\ &+L_{1s}^A\left(\sqrt{1+{t'}_{1x}^{A\,2}+{t'}_{1y}^{A\,2}}-\sqrt{1+{t'}_{1y}^{A\,2}}\right) \\ &+L_{2m}^A\left(\sqrt{1+{t'}_{2y}^{A\,2}}-1\right) \end{aligned} \quad (33)$$

Similarly, regarding the meridional direction of the first reflecting surface, when a reference optical path length from the light source point to the virtual light collection point is defined as $L_m^A = L_{1m}^A + L_{2m}^A$, a conditional formula necessary for light collection in the meridional direction is derived as in the following formula (34).
[Math. 30]

$$\begin{aligned} f_m^A(u^A,v^A,w^A) =& f_{1m}^A(u^A,v^A,w^A)+f_{2m}^A(u^A,v^A,w^A)-L_m^A \\ =& z_1\sqrt{1+{t'}_{1x}^{A\,2}+{t'}_{1y}^{A\,2}}-z_2^A\sqrt{1+{t'}_{2x}^{A\,2}+{t'}_{2y}^{A\,2}} \\ &+L_{1m}^A\left(\sqrt{1+{t'}_{1x}^{A\,2}+{t'}_{1y}^{A\,2}}-\sqrt{1+{t'}_{1x}^{A\,2}}\right) \\ &+L_{1s}^A\left(\sqrt{1+{t'}_{1x}^{A\,2}}-1\right) \\ &+L_{2m}^A\left(\sqrt{1+{t'}_{2x}^{A\,2}+{t'}_{2y}^{A\,2}}-\sqrt{1+{t'}_{2x}^{A\,2}}\right) \\ &+L_{2s}^A\left(\sqrt{1+{t'}_{2x}^{A\,2}}-1\right) \\ =& 0 \end{aligned} \quad (34)$$

Similarly, regarding the sagittal direction of the second reflecting surface, when a reference optical path length from the virtual light source point to the light collection point is defined as $L_s^B = L_{1s}^B + L_{2s}^B$, a conditional formula necessary for the light collection in the sagittal direction is derived as in the following formula (35).
[Math. 31]

$$\begin{aligned} f_s^B(u^B, v^B, w^B) =& f_{1s}^B(u^B, v^B, w^B) + f_{2s}^B(u^B, v^B, w^B) - L_s^B \\ =& \left(z_2^B - L\right)\sqrt{1 + {t'}_{1x}^{B\,2} + {t'}_{1y}^{B\,2}} - z_3\sqrt{1 + {t'}_{2x}^{B\,2} + {t'}_{2y}^{B\,2}} \\ &+ L_{1m}^B\left(\sqrt{1 + {t'}_{1y}^{B\,2}} - 1\right) \\ &+ L_{1s}^B\left(\sqrt{1 + {t'}_{1x}^{B\,2} + {t'}_{1y}^{B\,2}} - \sqrt{1 + {t'}_{1y}^{B\,2}}\right) \\ &+ L_{2m}^B\left(\sqrt{1 + {t'}_{2y}^{B\,2}} - 1\right) \end{aligned} \qquad (35)$$

Similarly, regarding the meridional direction of the second reflecting surface, when a reference optical path length from the virtual light source point to the light collection point is defined as $L_m^B = L_{1m}^B + L_{2m}^B$, a conditional formula necessary for the light collection in the meridional direction is derived as in the following formula (36).
[Math. 32]

$$\begin{aligned} f_m^B(u^B, v^B, w^B) =& f_{1m}^B(u^B, v^B, w^B) + f_{2m}^B(u^B, v^B, w^B) - L_m^B \\ =& \left(z_2^B - L\right)\sqrt{1 + {t'}_{1x}^{B\,2} + {t'}_{1y}^{B\,2}} - z_3\sqrt{1 + {t'}_{2x}^{B\,2} + {t'}_{2y}^{B\,2}} \\ &+ L_{1m}^B\left(\sqrt{1 + {t'}_{1x}^{B\,2} + {t'}_{1y}^{B\,2}} - \sqrt{1 + {t'}_{1x}^{B\,2}}\right) \\ &+ L_{1s}^B\left(\sqrt{1 + {t'}_{1x}^{B\,2}} - 1\right) \\ &+ L_{2m}^B\left(\sqrt{1 + {t'}_{2x}^{B\,2} + {t'}_{2y}^{B\,2}} - \sqrt{1 + {t'}_{2x}^{B\,2}}\right) \\ &+ L_{2s}^B\left(\sqrt{1 + {t'}_{2x}^{B\,2}} - 1\right) \qquad (36) \\ =& 0 \end{aligned}$$

Ideally, the first reflecting surface has a shape of a reflecting surface obtained by a set of points ($u^A$, $v^A$, $w^A$) that simultaneously satisfy a light collection condition in the sagittal direction in Formula (33) and the light collection condition in the meridional direction in Formula (34). However, if a solution to the simultaneous equations is a design formula, the shape is formed under a special condition such as "$L_{1s}^A = L_{1m}^A$ and $L_{2s}^A = L_{2m}^A$". Similarly, the second reflecting surface also has a shape of a reflecting surface obtained by a set of points ($u^B$, $v^B$, $w^B$) that simultaneously satisfy the light collection condition in the sagittal direction in Formula (35) and the light collection condition in the meridional direction in Formula (36). However, if a solution to the simultaneous equations is a design formula, the shape is formed under a special condition such as "$L_{1s}^B = L_{1m}^B$ and $L_{2s}^B = L_{2m}^B$".

Therefore, in order to obtain a design formula representing a more generalized shape of the reflecting surface that can be established even under other conditions, the present inventors have weighted Formulas (33) and (34) for the first reflecting surface, set a new formula $f^A(u^A, v^A, w^A) = 0$ provided in Formula (37) as the design formula of the reflecting surface, and similarly have weighted Formulas (35) and (36) for the second reflecting surface, and set a new formula $f^B(u^B, v^B, w^B) = 0$ provided in Formula (42) as the design formula of the reflecting surface.

(Design formula of first reflecting surface)

Specifically, the design formula of the first reflecting surface is the formula $f^A(u^A, v^A, w^A) = 0$ obtained by weighting, as in the following (Formula (37)), $f_s^A(_u{}^A, v^A, w^A) = 0$ (formula (33)), which is a first formula (formula of a sagittal direction light collection condition) derived from a condition that the optical path length from the light source point to the virtual light collection point is constant for the light collection in the sagittal direction, and $f_m^A(u^A, v^A, w^A) = 0$ (Formula (34)), which is a second formula (formula of a meridional direction light collection condition) derived from a condition that the optical path length from the light source point to the virtual light collection point is constant for the light collection in the meridional direction, by using $\alpha^A$ and $\beta^A$. $\alpha^A$ is a weighting coefficient for the light collection in the meridional direction, and $\beta^A$ is a weighting coefficient for the light collection in the sagittal direction. Here, $\alpha^A$ and $\beta^A$ satisfy $0 \leq \alpha^A \leq 1$ and $\beta^A = 1 - \alpha^A$.
[Math. 33]

$$\begin{aligned} & f^A(u^A, v^A, w^A) \\ =& z_1\sqrt{1+{t'}_{1x}^{A\,2}+{t'}_{1y}^{A\,2}} - z_2^A\sqrt{1+{t'}_{2x}^{A\,2}+{t'}_{2y}^{A\,2}} \\ & + L_{1m}^A\left(\alpha^A\sqrt{1+{t'}_{1x}^{A\,2}+{t'}_{1y}^{A\,2}} - \alpha^A\sqrt{1+{t'}_{1x}^{A\,2}} + \beta^A\sqrt{1+{t'}_{1y}^{A\,2}} - \beta^A\right) \\ & + L_{1s}^A\left(\beta^A\sqrt{1+{t'}_{1x}^{A\,2}+{t'}_{1y}^{A\,2}} + \alpha^A\sqrt{1+{t'}_{1x}^{A\,2}} - \beta^A\sqrt{1+{t'}_{1y}^{A\,2}} - \alpha^A\right) \\ & + L_{2m}^A\left(\alpha^A\sqrt{1+{t'}_{2x}^{A\,2}+{t'}_{2y}^{A\,2}} - \alpha^A\sqrt{1+{t'}_{2x}^{A\,2}} + \beta^A\sqrt{1+{t'}_{2y}^{A\,2}} - \beta^A\right) \\ & + L_{2s}^A\left(\beta^A\sqrt{1+{t'}_{2x}^{A\,2}+{t'}_{2y}^{A\,2}} + \alpha^A\sqrt{1+{t'}_{2x}^{A\,2}} - \beta^A\sqrt{1+{t'}_{2y}^{A\,2}} - \alpha^A\right) \quad (37) \\ =& 0 \end{aligned}$$

Formula (37) is a design formula of the first reflecting surface. When $t'_{1x}$, $t'_{1y}$, $t'_{2x}$, and $t'_{2y}$ in the formula are rewritten on the basis of the $u^Av^Aw^A$ coordinate system, the following formulas (38) to (41) are obtained.
[Math. 34]

$$ {t'}_{1x}^A = \frac{v^A}{u^A\cos\theta_0^A - w^A\sin\theta_0^A + L_{1s}^A} \quad (38)$$

$$ {t'}_{1y}^A = \frac{u^A\sin\theta_0^A + w^A\cos\theta_0^A}{u^A\cos\theta_0^A - w^A\sin\theta_0^A + L_{1m}^A} \quad (39)$$

$$ {t'}_{2x}^A = \frac{v^A}{L_{2s}^A - u^A\cos\theta_0^A - w^A\sin\theta_0^A} \quad (40)$$

$$ {t'}_{2y}^A = \frac{-u^A\sin\theta_0^A + w^A\cos\theta_0^A}{L_{2m}^A - u^A\cos\theta_0^A - w^A\sin\theta_0^A} \quad (41)$$

As can be found from Formula (37), it can be confirmed that an equation having good symmetry with respect to the light collection in the sagittal direction and the light collection in the meridional direction has been obtained. Although "$L_{1s}^A > L_{1m}^A > 0$ and $L_{2s}^A > L_{2m}^A > 0$" are assumed in the derivation described above, the same equation (design formula) provided in Formula (37) is derived even without the assumption described above, i.e., even if a magnitude relationship is reversed or each set value takes a negative value. However, all of the four constants of $L_{1m}^A$, $L_{1s}^A$, $L_{2m}^A$, and $L_{2s}^A$ are positive or negative values and cannot be set to 0.

(Design formula of second reflecting surface)

Similarly, a design formula of the second reflecting surface is the formula $f^B(u^B, v^B, w^B) = 0$ obtained by weighting, as in the following (Formula (42)), $f_s^B(u^B, v^B, w^B) = 0$ (Formula (35)), which is a first formula (a formula of a sagittal direction light collection condition) derived from a condition that the optical path length from the virtual light source point to the light collection point is constant for the light collection in the sagittal direction, and $f_m^B(u^B, v^B, w^B) = 0$ (Formula (36)), which is a second formula (a formula of a meridional direction light collection condition) derived from a condition that the optical path length from the virtual light source point to the light collection point is constant for the light collection in the meridional direction, by using $\alpha^B$ and $\beta^B$. $\alpha^B$ is a weighting coefficient for the light collection in the meridional direction, and (3$^B$ is a weighting coefficient for the light collection in the sagittal direction. Here, $\alpha^B$ and $\beta^B$ satisfy $0 \le \alpha^B \le 1$, $\beta^B = 1 - \alpha^B$.

[Math. 3 5]

$$
\begin{aligned}
&f^B(u^B, v^B, w^B)\\
=&z_1\sqrt{1+{t'}_{1x}^{B\,2}+{t'}_{1y}^{B\,2}}-\left(z_2^B-L\right)\sqrt{1+{t'}_{2x}^{B\,2}+{t'}_{2y}^{B\,2}}\\
&+L_{1m}^B\left(\alpha^B\sqrt{1+{t'}_{1x}^{B\,2}+{t'}_{1y}^{B\,2}}-\alpha^B\sqrt{1+{t'}_{1x}^{B\,2}}+\beta^B\sqrt{1+{t'}_{1y}^{B\,2}}-\beta^B\right)\\
&+L_{1s}^B\left(\beta^B\sqrt{1+{t'}_{1x}^{B\,2}+{t'}_{1y}^{B\,2}}+\alpha^B\sqrt{1+{t'}_{1x}^{B\,2}}-\beta^B\sqrt{1+{t'}_{1y}^{B\,2}}-\alpha^B\right)\\
&+L_{2m}^B\left(\alpha^B\sqrt{1+{t'}_{2x}^{B\,2}+{t'}_{2y}^{B\,2}}-\alpha^B\sqrt{1+{t'}_{2x}^{B\,2}}+\beta^B\sqrt{1+{t'}_{2y}^{B\,2}}-\beta^B\right)\\
&+L_{2s}^B\left(\beta^B\sqrt{1+{t'}_{2x}^{B\,2}+{t'}_{2y}^{B\,2}}+\alpha^B\sqrt{1+{t'}_{2x}^{B\,2}}-\beta^B\sqrt{1+{t'}_{2y}^{B\,2}}-\alpha^B\right) \quad (42)\\
=&0
\end{aligned}
$$

Formula (42) is a design formula of the second reflecting surface. When $t'^B_{1x}$, $t'^B_{1y}$, $t'^B_{2x}$, and $t'^B_{2y}$ in the formulas are rewritten based on the $u^Bv^Bw^B$ coordinate system, the following formulas (43) to (46) are obtained.

[Math. 36]

$$
{t'}_{1x}^{B}=\frac{v^B}{u^B\cos\theta_0^B-w^B\sin\theta_0^B+L_{1s}^B} \quad (43)
$$

$$
{t'}_{1y}^{B}=\frac{u^B\sin\theta_0^B+w^B\cos\theta_0^B}{u^B\cos\theta_0^B-w^B\sin\theta_0^B+L_{1m}^B} \quad (44)
$$

$$t'^{B}_{2x} = \frac{v^B}{L^B_{2s} - u^B \cos\theta^B_0 - w^B \sin\theta^B_0} \quad (45)$$

$$t'^{B}_{2y} = \frac{-u^B \sin\theta^B_0 + w^B \cos\theta^B_0}{L^B_{2m} - u^B \cos\theta^B_0 - w^B \sin\theta^B_0} \quad (46)$$

As can be found from Formula (42), it can be confirmed that an equation having good symmetry with respect to the light collection in the sagittal direction and the light collection in the meridional direction has been obtained. Although "$L_{1s}^B < L_{1m}^B < 0$ and $L_{2s}^B > L_{2m}^B > 0$" have been assumed in the derivation described above, the same equation (design formula) provided in Formula (42) is derived even without the assumption described above, i.e., even if a magnitude relationship is reversed or the positive and negative of each set value are reversed. Here, all of the four constants $L_{1m}^B$, $L_{1s}^B$, $L_{2m}^B$, and $L_{2s}^B$ are positive or negative values and cannot be set to 0.

(Design formula in common coordinate system (uvw coordinate system))

As described above, the design formula of the first reflecting surface, which is expressed by the $u^Av^Aw^A$ coordinate system and the design formula of the second reflecting surface, which is expressed by the $u^Bv^Bw^B$ coordinate system are expressed by the common uvw coordinate system. That is, each reflecting surface of the mirror of the present invention is expressed by the common coordinate system (u, v, w) as illustrated in FIG. 9.

An intersection point between the incoming beam optical axis $z_1$ and the outgoing beam optical axis $z_3$ is defined as an origin O(0,0,0) of an orthogonal coordinate system uvw. A rotation center of the mirror installation mechanism also coincides with this point. The intersection point between the incoming beam optical axis and the first reflecting surface is represented by $M_0^A$, and the intersection point between the outgoing beam optical axis and the second reflecting surface is represented by $M_0^B$, and the longitudinal direction u axis is set to be parallel to the straight line between $M_0^A$ and $M_0^B$. In addition, the transverse direction v axis is set to be orthogonal to both the incoming beam optical axis and the outgoing beam optical axis. The w axis is orthogonal to both the u axis and the v axis.

A glancing angle at the point $M_0^A$ of the first reflecting surface is set to $\theta_0^A$, and a glancing angle at the point $M_0^B$ of the second reflecting surface is set to $\theta_0^B$. In addition, a length of a line segment between $M_0^A$ and $M_0^B$ is set to L. In this case, coordinates of the points $M_0^A$ and $M_0^B$ are expressed by the following formulas (47) and (48).

[Math. 37]

$$M^A_0 = \left( -\frac{\cos 2\theta^A_0 \sin 2\theta^B_0}{\sin\left(2\theta^A_0 + 2\theta^B_0\right)} L,\ 0,\ \frac{\sin 2\theta^A_0 \sin 2\theta^B_0}{\sin\left(2\theta^A_0 + 2\theta^B_0\right)} L \right) \quad (47)$$

$$M^B_0 = \left( \frac{\sin 2\theta^A_0 \cos 2\theta^B_0}{\sin\left(2\theta^A_0 + 2\theta^B_0\right)} L,\ 0,\ \frac{\sin 2\theta^A_0 \sin 2\theta^B_0}{\sin\left(2\theta^A_0 + 2\theta^B_0\right)} L \right) \quad (48)$$

In the first reflecting surface, a longitudinal direction unit vector $e_u^A$, a transverse direction unit vector $e_v^A$, and a normal direction unit vector $e_w^A$ are all expressed by the following formula (49).

[Math. 38]

$$\begin{cases} \boldsymbol{e}^A_u = \left(\cos\theta^A_0,\ 0,\ -\sin\theta^A_0\right) \\ \boldsymbol{e}^A_v = (0,\ 1,\ 0) \\ \boldsymbol{e}^A_w = \left(\sin\theta^A_0,\ 0,\ \cos\theta^A_0\right) \end{cases} \quad (49)$$

Similarly, in of the second reflecting surface, a longitudinal direction unit vector $e_u^B$, a transverse direction unit vector $e_v^B$, and a normal direction unit vector $e_w^B$ are also all expressed by the following formula (50).

[Math. 39]

$$\begin{cases} \boldsymbol{e}_u^B = \left(\cos\theta_0^B,\ 0,\ \sin\theta_0^B\right) \\ \boldsymbol{e}_v^B = (0,\ 1,\ 0) \\ \boldsymbol{e}_w^B = \left(-\sin\theta_0^B,\ 0,\ \cos\theta_0^B\right) \end{cases} \qquad (50)$$

As described above, positions and postures of the first reflecting surface and the second reflecting surface are determined in the uvw coordinate system. Subsequently, an incoming length and an outgoing length suitable for determining a shape of each reflecting surface are obtained. FIG. 10 illustrates a cross section of the mirror in a uw plane.

Both the incoming length and the outgoing length based on a mirror origin O are defined as $L_{1m}$, $L_{1s}$, $L_{2m}$, and $L_{2s}$ in both the meridional direction and the sagittal direction. Since the light source rays $S_m$ and $S_s$ for the entire mirror need to be the light source rays for the first reflecting surface described above, the incoming lengths $L_{1m}^A$ and $L_{1s}^A$ of the first reflecting surface are determined as in the following formulas (51) and (52).

[Math. 40]

$$L_{1m}^A = L_{1m} - \frac{\sin 2\theta_0^B}{\sin\left(2\theta_0^A + 2\theta_0^B\right)} L \qquad (51)$$

$$L_{1s}^A = L_{1s} - \frac{\sin 2\theta_0^B}{\sin\left(2\theta_0^A + 2\theta_0^B\right)} L \qquad (52)$$

Similarly, the collected light rays $F_m$ and $F_s$ for the entire mirror have the same meaning as the collected light rays for the second reflecting surface. The outgoing lengths $L_{2m}^B$ and $L_{2s}^A$ of the second reflecting surface are expressed by the following formulas (53) and (54) using $L_{2m}$ and $L_{2s}$.

[Math. 41]

$$L_{2m}^B = L_{2m} - \frac{\sin 2\theta_0^A}{\sin\left(2\theta_0^A + 2\theta_0^B\right)} L \qquad (53)$$

$$L_{2s}^B = L_{2s} - \frac{\sin 2\theta_0^A}{\sin\left(2\theta_0^A + 2\theta_0^B\right)} L \qquad (54)$$

In order to cause the mirror according to the present invention to function correctly, the sagittal virtual collected light ray $F_s^A$ of the first reflecting surface needs to coincide with the sagittal virtual light source ray $S_s^B$ of the second reflecting surface, and the meridional virtual collected light ray $F_m^A$ of the first reflecting surface needs to coincide with the meridional virtual light source ray $S_m^B$ of the second reflecting surface. Therefore, the meridional incoming length $L_{1m}^B$ and the sagittal incoming length $L_{1s}^B$ of the second reflecting surface are derived from the meridional outgoing length $L_{2m}^A$ and the sagittal outgoing length $L_{2s}^A$ of the first reflecting surface as in the following formulas (55) and (56).

[Math. 42]

$$L_{1m}^B = L - L_{2m}^A \qquad (55)$$

$$L_{1s}^B = L - L_{2s}^A \qquad (56)$$

As described above, the constants necessary for designing the mirror according to the present invention turn out to be nine kinds of $L_{1m}$, $L_{1s}$, $L_{2m}$, $L_{2s}$, $L_{2m}^A$, $L_{2s}^A$, L, $\theta_0^A$, and $\theta_0^B$. The coordinate ($u^A$, $v^A$, $w^A$) on the first reflecting surface is expressed as in the following formula (57) in the uvw coordinate system.
[Math. 43]

$$\begin{pmatrix} u^A \\ v^A \\ w^A \end{pmatrix} = \begin{pmatrix} u\cos\theta_0^A - w\sin\theta_0^A + \dfrac{\cos\theta_0^A \sin 2\theta_0^B}{\sin\left(2\theta_0^A + 2\theta_0^B\right)}L \\ v \\ u\sin\theta_0^A + w\cos\theta_0^A - \dfrac{\sin\theta_0^A \sin 2\theta_0^B}{\sin\left(2\theta_0^A + 2\theta_0^B\right)}L \end{pmatrix} \qquad (57)$$

By substituting Formula (57) into Formula (37), a design formula (isosurface) $f^A(u, v, w) = 0$ representing the first reflecting surface is derived as in the following formula (58).
[Math. 44]

$$
\begin{aligned}
&f^A(u,v,w)\\
&=\left(u\cos 2\theta_0^A - w\sin 2\theta_0^A + \frac{\sin 2\theta_0^B}{\sin\left(2\theta_0^A + 2\theta_0^B\right)}L\right)\sqrt{1+{t_{1x}^A}^2+{t_{1y}^A}^2}\\
&\quad-\left(u+\frac{\cos 2\theta_0^A \sin 2\theta_0^B}{\sin\left(2\theta_0^A + 2\theta_0^B\right)}L\right)\sqrt{1+{t_{2x}^A}^2+{t_{2y}^A}^2}\\
&\quad+L_{1m}^A\left(\alpha\sqrt{1+{t_{1x}^A}^2+{t_{1y}^A}^2}-\alpha\sqrt{1+{t_{1x}^A}^2}+\beta\sqrt{1+{t_{1y}^A}^2}-\beta\right)\\
&\quad+L_{1s}^A\left(\beta\sqrt{1+{t_{1x}^A}^2+{t_{1y}^A}^2}+\alpha\sqrt{1+{t_{1x}^A}^2}-\beta\sqrt{1+{t_{1y}^A}^2}-\alpha\right)\\
&\quad+L_{2m}^A\left(\alpha\sqrt{1+{t_{2x}^A}^2+{t_{2y}^A}^2}-\alpha\sqrt{1+{t_{2x}^A}^2}+\beta\sqrt{1+{t_{2y}^A}^2}-\beta\right)\\
&\quad+L_{2s}^A\left(\beta\sqrt{1+{t_{2x}^A}^2+{t_{2y}^A}^2}+\alpha\sqrt{1+{t_{2x}^A}^2}-\beta\sqrt{1+{t_{2y}^A}^2}-\alpha\right) \qquad (58)\\
&=0
\end{aligned}
$$

$$
t_{1x}^A = \frac{v}{L_{1s}^A + u\cos 2\theta_0^A - w\sin 2\theta_0^A + \frac{\sin 2\theta_0^B}{\sin\left(2\theta_0^A + 2\theta_0^B\right)}L}
$$

$$
t_{1y}^A = \frac{u\sin 2\theta_0^A + w\cos 2\theta_0^A}{L_{1m}^A + u\cos 2\theta_0^A - w\sin 2\theta_0^A + \frac{\sin 2\theta_0^B}{\sin\left(2\theta_0^A + 2\theta_0^B\right)}L}
$$

$$
t_{2x}^A = \frac{v}{L_{2s}^A - u - \frac{\cos 2\theta_0^A \sin 2\theta_0^B}{\sin\left(2\theta_0^A + 2\theta_0^B\right)}L}
$$

$$
t_{2y}^A = \frac{w - \frac{\sin 2\theta_0^A \sin 2\theta_0^B}{\sin\left(2\theta_0^A + 2\theta_0^B\right)}L}{L_{2m}^A - u - \frac{\cos 2\theta_0^A \sin 2\theta_0^B}{\sin\left(2\theta_0^A + 2\theta_0^B\right)}L}
$$

Similarly, the coordinate ($u^B$, $v^B$, $w^B$) on the second reflecting surface is expressed by the following formula (59) in the uvw coordinate system.
[Math. 45]

$$\begin{pmatrix} u^B \\ v^B \\ w^B \end{pmatrix} = \begin{pmatrix} u\cos\theta_0^B + w\sin\theta_0^B - \dfrac{\sin 2\theta_0^A \cos\theta_0^B}{\sin\left(2\theta_0^A + 2\theta_0^B\right)} L \\ v \\ -u\sin\theta_0^B + w\cos\theta_0^B - \dfrac{\sin 2\theta_0^A \sin\theta_0^B}{\sin\left(2\theta_0^A + 2\theta_0^B\right)} L \end{pmatrix} \quad (59)$$

By substituting Formula (59) into Formula (42), a design formula (isosurface) $f^B(u, v, w) = 0$ representing the second reflecting surface is derived as in the following formula (60).
[Math. 46]

$$f^B(u,v,w) = \left(u - \frac{\sin 2\theta_0^A \cos 2\theta_0^B}{\sin\left(2\theta_0^A + 2\theta_0^B\right)} L\right)\sqrt{1 + {t_{1x}^B}^2 + {t_{1y}^B}^2} - \left(u\cos 2\theta_0^B + w \sin 2\theta_0^B - \frac{\sin 2\theta_0^B}{\sin\left(2\theta_0^A + 2\theta_0^B\right)} L\right)\sqrt{1 + {t_{2x}^B}^2 + {t_{2y}^B}^2} + L_{1m}^B\left(\alpha\sqrt{1 + {t_{1x}^B}^2 + {t_{1y}^B}^2} - \alpha\sqrt{1 + {t_{1x}^B}^2} + \beta\sqrt{1 + {t_{1y}^B}^2} - \beta\right) + L_{1s}^B\left(\beta\sqrt{1 + {t_{1x}^B}^2 + {t_{1y}^B}^2} + \alpha\sqrt{1 + {t_{1x}^B}^2} - \beta\sqrt{1 + {t_{1y}^B}^2} - \alpha\right) + L_{2m}^B\left(\alpha\sqrt{1 + {t_{2x}^B}^2 + {t_{2y}^B}^2} - \alpha\sqrt{1 + {t_{2x}^B}^2} + \beta\sqrt{1 + {t_{2y}^B}^2} - \beta\right) + L_{2s}^B\left(\beta\sqrt{1 + {t_{2x}^B}^2 + {t_{2y}^B}^2} + \alpha\sqrt{1 + {t_{2x}^B}^2} - \beta\sqrt{1 + {t_{2y}^B}^2} - \alpha\right) = 0 \quad (60)$$

$$t_{1x}^B = \frac{v}{L_{1s}^B + u - \frac{\sin 2\theta_0^A \cos 2\theta_0^B}{\sin\left(2\theta_0^A + 2\theta_0^B\right)} L}$$

$$t_{1y}^B = \frac{w - \frac{\sin 2\theta_0^A \sin 2\theta_0^B}{\sin\left(2\theta_0^A + 2\theta_0^B\right)} L}{L_{1m}^B + u - \frac{\sin 2\theta_0^A \cos 2\theta_0^B}{\sin\left(2\theta_0^A + 2\theta_0^B\right)} L}$$

$$t_{2x}^B = \frac{v}{L_{2s}^B - u\cos 2\theta_0^B - w\sin 2\theta_0^B + \frac{\sin 2\theta_0^A}{\sin\left(2\theta_0^A + 2\theta_0^B\right)} L}$$

$$t_{2y}^B = \frac{-u\sin 2\theta_0^B + w\cos 2\theta_0^A}{L_{2m}^B - u\cos 2\theta_0^B - w\sin 2\theta_0^B + \frac{\sin 2\theta_0^A}{\sin\left(2\theta_0^A + 2\theta_0^B\right)} L}$$

(Examples of mirrors that can be designed)

In condition setting of Formulas (58) and (60), the values of $L_{1s}^A$ and $L_{1m}^A$ are set to different values, and the values of $L_{2s}^B$ and $L_{2m}^B$ are set to be equal to each other (the same value), so that it is possible to design an astigmatism control mirror that can obtain an outgoing beam collected at one point from an incoming beam having astigmatism through double-bounce reflection from the first reflecting surface and the second reflecting surface. Conversely, by setting the values of $L_{1s}^A$ and $L_{1m}^A$ to the same value and setting the values of $L_{2s}^B$ and $L_{2m}^B$ to different values, it is possible to design an astigmatism control mirror that can obtain an outgoing beam having astigmatism from an incoming beam diverging from one point. In addition, by setting the values of $L_{1m}^A$, $L_{2m}^A$, and $L_{2m}^B$ to positive or negative infinity and setting $L_{1s}^A$, $L_{2s}^A$, and $L_{2s}^B$ to predetermined values (where $L_{1s}^A + L_{2s}^A \neq 0$ and $L_{1s}^B + L_{2s}^B \neq 0$), an astigmatism control mirror having collection performance only in the sagittal direction can be designed.

In addition, by making the values of $L_{1s}^A$ and $L_{1m}^A$ coincide with each other, making the values of $L_{2s}^A$ and $L_{2m}^A$ different from each other, making the values of $L_{1s}^B$ and $L_{1m}^B$ also different from each other, and making the values of $L_{2s}^B$ and $L_{2m}^B$ coincide with each other, it is also possible to design an astigmatism control mirror that: imparts astigmatism to the incoming beam diverging from one point, on the first reflecting surface; eliminates the astigmatism on the second reflecting surface; and imparts different reduction magnifications in the vertical direction and the horizontal direction, respectively.

In addition, when $L_{1s} = L_{1m} = L_1$, $L_{2s} = L_{2m} = L_2$, and $L_{2s}^A = L_{2m}^A = L_2^A$ are set so that the light sources and the light collection positions in both the meridional and sagittal directions, coincide with each other as illustrated in FIG. 11, the first reflecting surface A of the mirror becomes a spheroid (paraboloid of revolution or hyperboloid of revolution) having a light source point S and a virtual light collection point $F^A$ as two focal points, and the second reflecting surface B becomes a hyperboloid of revolution (paraboloid of revolution, spheroid) having the virtual light collection point $F^A$ and a light collection point F as two focal points.

In addition, it is possible to provide a mirror of which an installation angle allowable range is increased by setting $L_{2s}^A$ and $L_{2m}^A$ such that three points of the intersection point $P_s0$ between the light source ray $S_s$ and the $z_1$ axis, the intersection point $Q_{s0}^A$ between the virtual collected light ray $F_s^A$ and the $z_2$ axis, and the intersection point $Q_{s0}$ between the collected light ray $F_s$ and the $z_3$ axis are present on the same straight line in the sagittal direction light collection, and at the same time, in the meridional direction light collection, three points of the intersection point $P_{m0}$ between the light source ray $S_m$ and the $z_1$ axis, the intersection point $Q_{m0}^A$ between the virtual collected light ray $F_m^A$ and the $z_2$ axis, and the intersection point $Q_{m0}$ between the collected light ray $F_m$ and the $z_3$ axis are present on the same straight line. By further satisfying the conditions of $L_{1s} = L_{1m}$, $L_{2s} = L_{2m}$, and $L_{2s}^A = L_{2m}^A$, such a mirror becomes a Wolter type I mirror as illustrated in FIG. 12.

In addition, by setting $L_{2m}^A$ and $L_{2s}^A$, it is also possible to design a mirror that controls a ratio between vertical and horizontal beam sizes at a collection point and a mirror that controls a ratio between vertical and horizontal divergence angles of a collected beam. The outgoing lengths $L_{2m}^A$ and $L_{2s}^A$ of the first reflecting surface determine the magnification of the meridional direction light collection and the sagittal direction light collection, respectively. The magnification in a light collection optical system is defined as a ratio of a light collection size to a light source size. The magnification of the meridional direction light collection is represented by $M_m$, and the magnification of the sagittal direction light collection is represented by $M_s$. These are estimated from the ratio of the incoming length and the outgoing length of the optical system as in the following formula (3).

[Math. 47]

$$\begin{cases} M_m = \dfrac{d_m^F}{d_m^S} \approx \dfrac{L_{2m}^A}{L_{1m}^A} \dfrac{L_{2m}^B}{L - L_{2m}^A} \\ M_s = \dfrac{d_s^F}{d_s^S} \approx \dfrac{L_{2s}^A}{L_{1s}^A} \dfrac{L_{2s}^B}{L - L_{2s}^A} \end{cases} \quad (3)$$

In the formula, $d_m^s$ and $d_m^F$ represent a light source size and a light collection size in the meridional direction light collection. In addition, $d_s^s$ and $d_s^F$ represent a light source size and a light collection size in the sagittal direction light collection. Formula (3) indicates that a total magnification of a double-bounce reflection mirror is estimated by a product of the magnification given to the beam by the first reflecting surface and a magnification given to the beam by the second reflecting surface. Here, $M_m$ and $M_s$ can take negative values. For example, under the conditions of $L_{1m} > 0$, $L_{1s} > 0$, $L_{2m} > 0$, and $L_{2s} > 0$, when $L_{2m}^A$ and $L_{2s}^A$ are set to positive values, $L_{1m}^B$ and $L_{1s}^B$ have negative values. As a result, both $M_m$ and $M_s$ have negative values. However, a size of a collected beam does not disappear, but an image formed at a light collection position is inverted with respect to the reflecting surface, and a substantial magnification for determining the light collection size is |M|. The requirements of $L_{2m}$ and $L_{2s}$ necessary for obtaining the obtained magnifications $M_m$ and $M_s$ are expressed by the following formula (4).

[Math. 48]

$$\begin{cases} L_{2m}^{A} = \dfrac{L_{1m}^{A} M_m}{L_{2m}^{B} + L_{1m}^{A} M_m} L \\ L_{2s}^{A} = \dfrac{L_{1s}^{A} M_s}{L_{2s}^{B} + L_{1s}^{A} M_s} L \end{cases} \quad (4)$$

Consequently, for example, it is possible to design a mirror (mirror in which a beam is circularized at the light collection position) that collects beams spreading from one point in both the vertical and horizontal directions to one point again through double-bounce reflection and circularizes the beams at the light collection point, or design a mirror (mirror in which a beam is circularized at the divergence position) that collects beams spreading from one point in both the vertical and horizontal directions to one point again through double-bounce reflection and circularizes the beams at the divergence position which is further downstream.

Finally, a relationship between the $x_1y_1z_1$ coordinate system, the $x_2y_2z_2$ coordinate system, and the $x_3y_3z_3$ coordinate system will be described. Here, the relationship is derived via the uvw coordinate system, but the relationship can be derived without being limited thereto. First, the $x_1y_1z_1$ coordinate system can be expressed by Formula (61) using uvw, and Formula (62) is derived therefrom.

[Math. 49]

$$\begin{pmatrix} x_1 \\ y_1 \\ z_1 \end{pmatrix} = \begin{pmatrix} v \\ u \sin 2\theta_0^A + w \cos 2\theta_0^A \\ u \cos 2\theta_0^A - w \sin 2\theta_0^A + \dfrac{\sin 2\theta_0^B}{\sin\left(2\theta_0^A + 2\theta_0^B\right)} L \end{pmatrix} \quad (61)$$

$$\begin{pmatrix} u \\ v \\ w \end{pmatrix} = \begin{pmatrix} y_1 \sin 2\theta_0^A + z_1 \cos 2\theta_0^A - \dfrac{\cos 2\theta_0^A \sin 2\theta_0^B}{\sin\left(2\theta_0^A + 2\theta_0^B\right)} L \\ x_1 \\ y_1 \cos 2\theta_0^A - z_1 \sin \theta_0^A + \dfrac{\sin 2\theta_0^B \sin 2\theta_0^B}{\sin\left(2\theta_0^A + 2\theta_0^B\right)} L \end{pmatrix} \quad (62)$$

On the other hand, the $x_2y_2z_2$ coordinate system can be expressed by the following formula (63) using uvw, Formula (62) is substituted thereinto, and thus Formula (64) is obtained.

[Math. 50]

$$\begin{pmatrix} x_2 \\ y_2 \\ z_2 \end{pmatrix} = \begin{pmatrix} v \\ w - \dfrac{\sin 2\theta_0^A \sin 2\theta_0^B}{\sin\left(2\theta_0^A + 2\theta_0^B\right)} L \\ u + \dfrac{\cos 2\theta_0^A \sin 2\theta_0^B}{\sin\left(2\theta_0^A + 2\theta_0^B\right)} L \end{pmatrix} \quad (63)$$

$$\begin{pmatrix} x_2 \\ y_2 \\ z_2 \end{pmatrix} = \begin{pmatrix} x_1 \\ y_1 \cos 2\theta_0^A - z_1 \sin 2\theta_0^A \\ y_1 \sin 2\theta_0^A + z_1 \cos 2\theta_0^A \end{pmatrix} \quad (64)$$

In addition, the $x_3y_3z_3$ coordinate system can be expressed by Formula (65) using uvw, Formula (62) is substituted thereinto, and thus Formula (66) is obtained.
[Math. 51]

$$\begin{pmatrix} x_3 \\ y_3 \\ z_3 \end{pmatrix} = \begin{pmatrix} v \\ -u\sin 2\theta_0^A + w\cos 2\theta_0^A \\ u\cos 2\theta_0^A + w\sin 2\theta_0^A - \dfrac{\sin 2\theta_0^A}{\sin\left(2\theta_0^A + 2\theta_0^B\right)}L \end{pmatrix} \tag{65}$$

$$\begin{pmatrix} x_3 \\ y_3 \\ z_3 \end{pmatrix} = \begin{pmatrix} x_1 \\ y_1\cos\left(2\theta_0^A + 2\theta_0^B\right) - z_1\sin\left(2\theta_0^A + 2\theta_0^B\right) + L\sin 2\theta_0^B \\ y_1\sin\left(2\theta_0^A + 2\theta_0^B\right) + z_1\cos\left(2\theta_0^A + 2\theta_0^B\right) - L\cos 2\theta_0^B \end{pmatrix} \tag{66}$$

As described above, the relationship between the $x_1y_1z_1$ coordinate system, the $x_2y_2z_2$ coordinate system, and the $x_3y_3z_3$ coordinate system is expressed by Formulas (64) and (66).

Although the embodiments of the present invention have been described above, it is needless to say that the present invention is not limited to such examples and can be implemented in various forms without departing from the gist of the present invention. In the embodiment, the light source ray, the collected light ray, the virtual light source ray, and the virtual collected light ray are all straight lines, and the distance between the straight line and the equiphase plane in the vicinity thereof is compensated, but such compensation is not necessarily required. In addition, it is also preferable to obtain an arc line or other curves as the light source ray, the collected light ray, the virtual light source ray, or the virtual collected light ray without compensation or by a compensation method other than the compensation described above, or an approximation method. The positions of the origins of the design formulas of the respective reflecting surfaces of the first reflecting surface and the second reflecting surface may also be set at different positions. It is needless to say that the coordinate transformation may be performed.

EXAMPLES

(Verification of enlargement in installation angle allowable range)

In the present invention, the mirror (referred to as an "installation angle allowable range enlargement mirror".) in which the light source ray, the virtual collected light ray, and the intersection points between the collected light ray and the optical axes $z_1$, $z_2$, and $z_3$ are set to be present on the same straight line in the light collection in the sagittal direction and the light collection in the meridional direction is effective as a mirror that can suppress an effect of an angle error (glancing angle error/in-plane rotation error or rotation around axis) and enlarge the installation angle allowable range.

In general, in a reflecting surface having different radii of curvature $\rho_s$ and $\rho_m$ in the sagittal direction and the meridional direction, respectively, when a designed glancing angle is represented by $\theta_0$, the incoming lengths are represented by $L_{1s}$ and $L_{1m}$, and the outgoing lengths are represented by $L_{2s}$ and $L_{2m}$, the radii of curvature $\rho_s$ and $\rho_m$ are expressed by Formulas (67) and (68), and responses of the outgoing lengths to an increment $\delta$ of the glancing angle is expressed by Formulas (69) and (70) obtained by partially differentiating Formulas (67) and (68). As can be found from a comparison between Formulas (69) and (70), the outgoing lengths of the meridional light collection and the sagittal light collection show different positive and negative changes with respect to a change in the glancing angle.
[Math. 52]

$$\rho_m = \frac{2}{\left(\dfrac{1}{L_{1m}} + \dfrac{1}{L_{2m}}\right)\sin\theta_0} \tag{67}$$

$$\rho_s = \frac{2\sin\theta_0}{\left(\frac{1}{L_{1s}} + \frac{1}{L_{2s}}\right)} \quad (68)$$

$$\left.\frac{\partial L_{2m}}{\partial \delta}\right|_{\delta=0} = \left(\frac{1}{L_{1m}} + \frac{1}{L_{2m}}\right) L_{2m}^2 \frac{1}{\tan\theta_0} \quad (69)$$

$$\left.\frac{\partial L_{2s}}{\partial \delta}\right|_{\delta=0} = -\left(\frac{1}{L_{1s}} + \frac{1}{L_{2s}}\right) L_{2s}^2 \frac{1}{\tan\theta_0} \quad (70)$$

In the mirror that reflects only once, not only is the optical axis of the outgoing beam shifted due to a glancing angle error, but also astigmatism that is not desired for the collected beam occurs. FIG. 13 illustrates a positional shift between the meridional direction light collection point $F_m$ and the sagittal direction light collection point $F_s$ when the glancing angle is increased in the light collection of the spheroidal mirror that collects light from one point to one point. Both the light collection points $F_m$ and $F_s$ are moved away from the reflecting surface more than the designed light collection point F, and at the same time, are moved symmetrically in the optical axis direction.

On the other hand, FIG. 14 is a schematic diagram illustrating a reaction when a glancing angle error is input to the double-bounce reflection mirror (integrated type). A designed glancing angle of the first reflecting surface provided upstream is represented by $\theta_0^A$, and a glancing angle of the reflecting surface provided downstream is represented by $\theta_0^B$. When both the reflecting surfaces rotate integrally and the glancing angle of the first reflecting surface increases by a minute angle $\delta$, the glancing angle of the second reflecting surface decreases by $\delta$. As a result, an angle formed by the incoming optical axis and the outgoing optical axis is $2\theta_0^A + 2\theta_0^B$ = constant, and it can be seen that the direction of the outgoing beam is difficult to change in an optical system. In this case, the outgoing length of the first reflecting surface represents a reaction in which the positive and negative are reversed between the meridional direction and the sagittal direction as described above. On the other hand, in the second reflecting surface, not only does the glancing angle become small by $\delta$, but also the incoming lengths in the meridional direction and the sagittal direction change due to the shift of the light collection position of the first reflecting surface. The outgoing lengths $L_{2m}$ and $L_{2s}$ of the entire mirror represent responses to the glancing angle error $\delta$ as in the following formulas (71) and (72).

[Math. 53]

$$\left.\frac{\partial L_{2m}}{\partial \delta}\right|_{\delta=0} = \left(\frac{1}{L_{1m}^A} + \frac{1}{L_{2m}^A}\right) {L_{2m}^A}^2 \frac{1}{\tan\theta_0^A} \left(\frac{L_{2m}^B}{L_{1m}^B}\right)^2 - \left(\frac{1}{L_{1m}^B} + \frac{1}{L_{2m}^B}\right) {L_{2m}^B}^2 \frac{1}{\tan\theta_0^B} \quad (71)$$

$$\left.\frac{\partial L_{2s}}{\partial \delta}\right|_{\delta=0} = \left(\frac{1}{L_{1s}^A} + \frac{1}{L_{2s}^A}\right) {L_{2s}^A}^2 \frac{1}{\tan\theta_0^A} \left(\frac{L_{2s}^B}{L_{1s}^B}\right)^2 + \left(\frac{1}{L_{1s}^B} + \frac{1}{L_{2s}^B}\right) {L_{2s}^B}^2 \frac{1}{\tan\theta_0^B} \quad (72)$$

Here, when a partial differential coefficient of the outgoing length with respect to the glancing angle error becomes 0, i.e., when the right sides of Formulas (71) and (72) become 0, the outgoing length is stabilized regardless of a minute change in the glancing angle. By substituting Formulas (55) and (56) into Formulas (71) and (72), the following formulas (73) and (74) are obtained. By substituting $L_{1m}^A$, $L_{1s}^A$, $L_{2m}^B$, and $L_{2s}^B$ provided by Formulas (51) to (54) into the formulas (73) and (74) and solving formulas for the outgoing lengths $L_{2m}^A$ and $L_{2s}^A$ of the first reflecting surface, a condition for stabilizing the outgoing length is obtained, and an optical system robust to a glancing angle error is obtained.

[Math. 54]

$$\left(\frac{1}{L_{1m}^A \tan\theta_0^A} - \frac{1}{L_{2m}^B \tan\theta_0^B}\right) {L_{2m}^A}^2 + \left(\frac{1}{\tan\theta_0^A} + \frac{1}{\tan\theta_0^B}\left(1 + \frac{2L}{L_{2m}^B}\right)\right) L_{2m}^A - \left(1 + \frac{L}{L_{2m}^B}\right) L \frac{1}{\tan\theta_0^B} = 0 \quad (73)$$

$$\left(\frac{1}{L_{1s}^A \tan\theta_0^A} - \frac{1}{L_{2s}^B \tan\theta_0^B}\right) {L_{2s}^A}^2 + \left(\frac{1}{\tan\theta_0^A} + \frac{1}{\tan\theta_0^B}\left(1 + \frac{2L}{L_{2s}^B}\right)\right) L_{2s}^A - \left(1 + \frac{L}{L_{2s}^B}\right) L \frac{1}{\tan\theta_0^B} = 0 \quad (74)$$

In this manner, optimum values of the outgoing lengths $L_2^A$ of the first reflecting surface were compared with each other. The outgoing lengths $L_2^A$ of the first reflecting surface are derived from both the condition that the partial differential coefficient of the outgoing length with respect to the installation angle is set to 0 and the condition that the intersection points between the light source ray, the virtual collected light ray, and the collected light ray and the optical axes $z_1$, $z_2$, and $z_3$ are positioned on the same straight line in the light collection in the sagittal direction and the light collection in the meridional direction, as a design condition of the Wolter type I mirror which is a type of the "installation angle allowable range enlargement mirror". The calculation conditions are illustrated in Table 1. The results are illustrated in FIG. 15. This is a graph obtained by calculating and plotting the optimum values of $L_2^A$ while changing the outgoing length $L_2$ of the entire reflecting surface. The results derived from both conditions were substantially equal.

[Table 1]

Calculation Conditions of Outgoing Length $L_2^A$ of Mirror A

| Items | Value |
|---|---|
| Incoming length $L1$ (mm) | 10,000 |
| Outgoing length $L_2$ (mm) | Variable |
| Distance L between mirror reference points (mm) | 200 |
| Glancing angle $\theta_0^A$ on mirror A (mrad) | 10 |
| Glancing angle $\theta_0^B$ on mirror B (mrad) | 10 |

Furthermore, a mirror was designed under a condition of a predetermined outgoing length $L_2$, and a response to a glancing angle error was checked. When the outgoing length $L_2$ = 250 mm, a value of $L_2^A$, which is calculated under the condition that the partial differential coefficient is set to 0, is 590.333 mm and 507.590 mm in the Wolter type I mirror. The mirror was designed using this condition, and light ray tracing was used for the calculation. Light rays were uniformly emitted from a light source ray to an entire effective area of a first reflecting surface, and dispersion of light rays on a designed light collecting surface was acquired by calculating an RMS blur radius. The results are illustrated in FIG. 16. In a range of $\pm$ 1 mrad, it becomes clear that the mirror employing the value of $L_2^A$ calculated in the Wolter type I mirror has a better design since an increase in the light collection size with respect to the glancing angle error is suppressed.

The above results are comparative results under a condition that the incoming beam and the outgoing beam of both the first reflecting surface and the second reflecting surface do not have astigmatism. Similarly, when the incoming beam has astigmatism, the condition of the "installation angle allowable range enlargement mirror" (three-point straight line condition) is satisfied, and thus a light collection optical system robust to the installation angle error is obtained. When this is expressed by a design formula, $L_{2m}^A$ and $L_{2s}^A$ satisfying the following formulas (75) and (76) are set.

[Math. 5 5]

$$L_{2m}^{A} = L_{2m}\frac{L\sin 2\theta_0^B - L_{1m}\sin\left(2\theta_0^A + 2\theta_0^B\right)}{L_{2m}\sin 2\theta_0^B - L_{1m}\sin 2\theta_0^A} \quad (75)$$

$$L_{2s}^{A} = L_{2s}\frac{L\sin 2\theta_0^B - L_{1s}\sin\left(2\theta_0^A + 2\theta_0^B\right)}{L_{2s}\sin 2\theta_0^B - L_{1s}\sin 2\theta_0^A} \quad (76)$$

Next, a description will be given regarding results obtained by calculating and comparing, on the basis of light ray tracing, a response of the light collection size and the position with respect to the installation angle error, for each of the "installation angle allowable range enlargement mirror" (Example 1) in which $L_{1s} \neq L_{1m}$, $L_{2s} = L_{2m}$, and $L_{2s}^A \neq L_{2m}^A$ are set, the Wolter type I mirror (Example 2) in which $L_{1s} = L_{1m}$, $L_{2s} = L_{2m}$, and $L_{2s}^A = L_{2m}^A$ are set, and a single-bounce reflection astigmatism control mirror (Comparative Example 1) in which the same incoming length and outgoing length as in Example 1 are set for the light collection in the meridional direction and the light collection in the sagittal direction.

Table 2 illustrates design conditions of the mirror of Example 1. The mirror reflecting surface is vertically deflected, a meridional direction corresponds to vertical light collection, and a sagittal direction corresponds to a horizontal direction. The outgoing length $L_{2m}^A$ of the first reflecting surface is calculated independently from $L_{1m}$ and $L_{2m}$, and $L_{2s}^A$ is calculated independently from $L_{1s}$ and $L_{2s}$ such that the outgoing lengths satisfy the three-point straight line condition. The arrangement of the optical system is illustrated in FIG. 17, and the calculated shape of the mirror is illustrated in FIG. 18. The first reflecting surface and the second reflecting surface have concave shapes in both the meridional direction and the sagittal direction. Design conditions of the Wolter type I mirror of Example 2 are illustrated in Table 3. Table 4 illustrates design conditions of a single-bounce reflection astigmatism control flat plate mirror of Comparative Example 1.

[Table 2]

Design Conditions of Double-Bounce Reflection Astigmatism Flat Plate Mirror [Installation Angle Error]

| Items | Value |
|---|---|
| Incoming length $L_{1m}$ of vertical (meridional) light collection (mm) | 20,000 |
| Outgoing length $L_{2m}$ of vertical (meridional) light collection (mm) | 250 |
| Incoming length $L_{1s}$ of horizontal (sagittal) light collection (mm) | 5,000 |
| Outgoing length $L_{2s}$ of horizontal (sagittal) light collection (mm) | 250 |
| Distance L between mirror reference points (mm) | 200 |
| Outgoing length $L_{2m}^A$ of meridional light collection of mirror A (mm) | 503.696 |
| Outgoing length $L_{2s}^A$ of sagittal light collection of mirror A (mm) | 515.684 |
| Glancing angle $\theta_0^A$ on mirror A (mrad) | 10 |
| Glancing angle $B_0^B$ on mirror B (mrad) | 10 |
| Weighting coefficient $\alpha^A$ of mirror A | 0.5 |
| Weighting coefficient $\alpha^B$ of mirror B | 0.5 |
| Entire length *ML* (mm) | 400 |
| Entire width *MW* (mm) | 5 |

[Table 3]

Design conditions of Wolter type I Mirror [Installation Angle Error]

| Items | Value |
|---|---|
| Incoming length $L_1$ (mm) | 10,000 |
| Incoming length $L_2$ (mm) | 250 |
| Distance *L* between mirror reference points (mm) | 200 |
| Glancing angle $\theta_0^A$ on mirror A (mrad) | 10 |
| Glancing angle $\theta_0^B$ on mirror B (mrad) | 10 |
| Entire length *ML* (mm) | 400 |

(continued)

Design conditions of Wolter type I Mirror [Installation Angle Error]

| Items | Value |
|---|---|
| Entire width *MW* (mm) | 5 |

[Table 4]

Design Conditions of Single-Bounce Reflection Astigmatism Flat Plate Mirror [Installation Angle Error]

| Items | Value |
|---|---|
| Incoming length $L_{1m}$ of vertical (meridional) light collection (mm) | 20,000 |
| Outgoing length $L_{2m}$ of vertical (meridional) light collection (mm) | 250 |
| Incoming length $L_{1s}$ of horizontal (sagittal) light collection (mm) | 5,000 |
| Outgoing length $L_{2s}$ of horizontal (sagittal) light collection (mm) | 250 |
| Glancing angle $\theta_0$ (mrad) | 20 |
| Weighting coefficient $\alpha$ | 0.5 |
| Entire length *ML* (mm) | 200 |
| Entire mirror width *MW* (mm) | 5 |

The astigmatism control mirrors of Example 1 and Comparative Example 1 have incoming lengths of 20 m in the vertical (meridional) direction and 5 m in the horizontal (sagittal) direction. On the other hand, the incoming length of Example 2 (Wolter type I mirror) was 10 m in both vertical and horizontal directions. Each of the light collection points of the mirrors of Examples 1 and 2 and Comparative Example 1 was fixed at a position of 250 mm from a mirror reference position, and an angle formed by the incoming beam optical axis and the outgoing beam optical axis was fixed at 40 mrad. Three installation angle errors including a pitch (oblique incoming) angle error, a yaw (in-plane rotation) angle error, and a roll (axial rotation) angle error are to be input. A list thereof is illustrated in FIG. 19.

For each of Examples 1 and 2 and Comparative Example 1, an increase amount (RMS value) of the light collection size in the meridional direction and the sagittal direction and a shift of the light collection position were calculated. A response to the pitch angle error is illustrated in FIG. 20, a response to the yaw angle error is illustrated in FIG. 21, and a response to the roll angle error is illustrated in FIG. 22.

An installation angle response of Example 1 is almost the same as a response of Example 2 (Wolter type I mirror), and it can be found that the increase in the light collection size with respect to the pitch angle error and the yaw angle error is much better suppressed than that of Comparative Example 1. It can be found that the sub-μm light collection according to Example 1 has an allowable range of 100 μrad or more for various installation angle errors.

(Verification 1 of mirror for circularizing beam intensity)

Next, a mirror (Example 3) that circularizes a beam at a light collection position will be described. Conditions of a light source (conditions of illumination) are illustrated in Table 5. It is assumed that a light source size has a ratio of five to one in the vertical direction and the horizontal direction. In order to circularize the collected beam, it is necessary to give an inverse ratio of a magnification ratio of the reflection mirror to the magnification ratio in the vertical direction and the horizontal direction. Design conditions of Example 3 are illustrated in Table 6.

[Table 5]

Illumination Conditions of Double-Bounce Reflection Astigmatism Flat Plate Mirror [Circularizing at Light Collection Position]

| Items | Value |
|---|---|
| Light source size in vertical direction ($\sigma$, μm) | 2.5 |
| Light source size in horizontal direction ($\sigma$, μm) | 12.5 |
| Vertical-direction divergence angle of incoming beam ($\sigma$, μrad) | 100 |
| Horizontal-direction divergence angle of incoming beam ($\sigma$, μrad) | 50 |

[Table 6]
Design Conditions of Double-Bounce Reflection Astigmatism Flat Plate Mirror [Circularizing at Light Collection Position]

| Items | Value |
|---|---|
| Incoming length $L_{1m}$ of horizontal (meridional) light collection (mm) | 5,000 |
| Incoming length $L_{1s}$ of vertical (sagittal) light collection (mm) | 5,000 |
| Outgoing length $L_{2m}$ of horizontal (meridional) light collection (mm) | 500 |
| Incoming length $L_{2s}$ of vertical (sagittal) light collection (mm) | 500 |
| Distance $L$ between mirror reference points (mm) | 150 |
| Horizontal (meridional) light collection magnification $M_m$ | -0.03 |
| Vertical (sagittal) light collection magnification $M_s$ | -0.15 |
| Glancing angle $\theta_0^A$ on mirror A (mrad) | 10 |
| Glancing angle $B_0^B$ on mirror B (mrad) | 10 |
| Weighting coefficient $\alpha^A$ of mirror A | 0.5 |
| Weighting coefficient $\alpha^B$ of mirror B | 0.5 |
| Entire length $ML$ (mm) | 350 |
| Entire width $MW$ (mm) | 5 |

As can be found from Tables, the mirror of Example 3 is designed to reflect, in the horizontal direction, light from a light source present at a position of 5 m from a mirror origin and collect the light at a light collection point present at a position of 0.5 m from the mirror origin. The longitudinal direction corresponds to horizontal light collection, and the transverse direction corresponds to vertical light collection. The astigmatism additionally provided to the beam by the first reflecting surface (mirror A) is eliminated by the second reflecting surface (mirror B).

FIG. 23 illustrates a mirror shape (height distribution) of Example 3. The first reflecting surface (mirror A) provided upstream has a profile that is convex in the longitudinal direction and is concave in the transverse direction. The second reflecting surface (mirror B) provided downstream has a profile that is concave in the longitudinal direction and is convex in the transverse direction.

FIG. 24 illustrates a result of outputting a distribution of light rays at the light collection point by light ray tracing calculation for the mirror of Example 3. The light collection size in the vertical direction is 0.506 $\mu$m ($\sigma$), and the light collection size in the horizontal direction is 0.490 $\mu$m ($\sigma$), and it can be confirmed that the beam is substantially circularized.

(Verification 2 of mirror for circularizing beam intensity)

Next, a mirror that circularizes a beam at a divergence position, i.e., a mirror (Example 4) that collects beams spreading from one point in both the vertical and horizontal directions to one point again through double-bounce reflection and circularizes the collected beams at a divergence position that is further downstream, will be described. Conditions of a light source (conditions of illumination) are illustrated in Table 7. It is assumed that a divergence angle has a ratio of two to one in the vertical direction and the horizontal direction. In order to circularize the divergence angle of the collected beam, it is necessary to give the same ratio to a magnification of the reflection mirror in the vertical direction and the horizontal direction. The design conditions of Example 4 are illustrated in Table 8.

[Table 7]
Illumination Conditions of Double-Bounce Reflection Astigmatism Flat Plate Mirror [Circularizing at Divergence Position]

| Items | Value |
|---|---|
| Light source size in vertical direction ($\sigma$, $\mu$m) | 0 |
| Light source size in horizontal direction ($\sigma$, $\mu$m) | 0 |
| Vertical-direction divergence angle of incoming beam ($\sigma$, $\mu$rad) | 100 |
| Horizontal-direction divergence angle of incoming beam ($\sigma$, $\mu$rad) | 50 |

[Table 8]

Design Conditions of Double-Bounce Reflection Astigmatism Flat Plate Mirror [Circularizing at Divergence Position]

| Items | Value |
|---|---|
| Incoming length $L_{1m}$ of horizontal (meridional) light collection (mm) | 5,000 |
| Incoming length $L_{1s}$ of vertical (sagittal) light collection (mm) | 5,000 |
| Outgoing length $L_{2m}$ of horizontal (meridional) light collection (mm) | 500 |
| Outgoing length $L_{2s}$ of vertical (sagittal) light collection (mm) | 500 |
| Distance $L$ between mirror reference points (mm) | 150 |
| Horizontal (meridional) light collection magnification $M_m$ | -0.05 |
| Vertical (sagittal) light collection magnification $M_s$ | -0.10 |
| Glancing angle $\theta_0{}^A$ on mirror A (mrad) | 10 |
| Glancing angle $\theta_0{}^B$ on mirror B (mrad) | 10 |
| Weighting coefficient $\alpha^A$ of mirror A | 0.5 |
| Weighting coefficient $\alpha^B$ of mirror B | 0.5 |
| Entire length $ML$ (mm) | 350 |
| Entire width $MW$ (mm) | 5 |

As can be found from Tables, the mirror of Example 4 is designed to reflect, in the horizontal direction, light from a light source present at a position of 5 m from a mirror origin and collect the light at a light collection point present at a position of 0.5 m from the mirror origin. The longitudinal direction corresponds to horizontal light collection, and the transverse direction corresponds to vertical light collection. The astigmatism additionally provided to the beam by the first reflecting surface (mirror A) is eliminated by the second reflecting surface (mirror B).

FIG. 25 illustrates a mirror shape (height distribution) of Example 4. The first reflecting surface (mirror A) provided upstream has a profile that is convex in the longitudinal direction and is concave in the transverse direction. The second reflecting surface (mirror B) provided downstream has a profile that is concave in the longitudinal direction and concave in the transverse direction.

In addition, regarding the mirror of Example 4, FIG. 26(a) illustrates an output result of a distribution of light rays at the light collection point by the light ray tracing calculation, and FIG. 26(b) illustrates an output result of a distribution of light rays at a position located 10 m downstream from the light collection point. The light collection size is 1 nm or less in both vertical and horizontal directions, and it can be confirmed that light from a light source having no size is collected at one point. In addition, the variation of the light ray at the position located 10 m downstream is 10.201 mm ($\sigma$) in the vertical direction and 10.198 mm ($\sigma$) in the horizontal direction, and it can be found that the beam at the divergence position is substantially circularized.

REFERENCE SIGNS LIST

A First reflecting surface

B Second reflecting surface

**Claims**

1. A method for designing a mirror having a first reflecting surface and a second reflecting surface, which sequentially reflect light, the method comprising:

defining an optical axis of an incoming beam to the first reflecting surface as a $z_1$ axis, and defining a cross section orthogonal to the $z_1$ axis as an $x_1y_1$ plane;

defining, as a $z_2$ axis, an optical axis of an outgoing beam of the first reflecting surface, the outgoing beam being an incoming beam to the second reflecting surface, and defining a cross section orthogonal to the $z_2$ axis as an $x_2y_2$ plane;

defining an optical axis of an outgoing beam of the second reflecting surface as a $z_3$ axis, and defining a cross section orthogonal to the $z_3$ axis as an $x_3y_3$ plane;
setting an $x_1$ axis, an $x_2$ axis, and an $x_3$ axis to be parallel to a sagittal direction of the first reflecting surface and the second reflecting surface;
causing incoming beams to the first reflecting surface to have a light source for light collection in the sagittal direction at a position displaced by $L_{1s}^A$ in a $z_1$-axis direction from an intersection point $M_0^A$, on the $z_1$ axis on the first reflecting surface, between the $z_1$ axis and the $z_2$ axis and a light source for light collection in a meridional direction at a position displaced by $L_{1m}^A$ in the $z_1$-axis direction from the intersection point $M_0^A$ on the $z_1$ axis;
causing outgoing beams of the second reflecting surface to be collected at a position displaced by $L_{2s}^B$ in a $z_3$-axis direction from an intersection point $M_0^B$, on the $z_3$ axis on the second reflecting surface, between the $z_2$ axis and the $z_3$ axis with respect to light collection in the sagittal direction and to be collected at a position displaced by $L_{2m}^B$ in the $z_3$-axis direction from the intersection point $M_0^B$ on the $z_3$ axis with respect to light collection in the meridional direction;
causing all of incoming light rays passing through the first reflecting surface to pass through both a sagittal light source ray and a meridional light source ray, the sagittal light source ray passing through a position of the light source in the light collection in the sagittal direction and extending in a direction orthogonal to both the $x_1$ axis and the $z_1$ axis, the meridional light source ray passing through a position of the light source in light collection in the meridional direction and extending in a direction orthogonal to both the $y_1$ axis and the $z_1$ axis;
causing all of outgoing light rays emitted from the second reflecting surface to pass through both a sagittal collected light ray and a meridional collected light ray, the sagittal collected light ray passing through the light collecting position in the light collection in the sagittal direction and extending in a direction orthogonal to both the $x_3$ axis and the $z_3$ axis, the meridional collected light ray passing through the light collecting position in the light collection in the meridional direction and extending in a direction orthogonal to both the $y_3$ axis and the $z_3$ axis;
causing outgoing beams of the first reflecting surface, when the outgoing beams of the first reflecting surface travel straight without being reflected by the second reflecting surface, to be collected at a position displaced by $L_{2s}^A$ in a $z_2$-axis direction from the intersection point $M_0^A$ on the $z_2$ axis with respect to the light collection in the sagittal direction, and be collected at a position displaced by $L_{2m}^A$ in the $z_2$-axis direction from the intersection point $M_0^A$ on the $z_2$ axis with respect to the light collection in the meridional direction;
causing outgoing light rays of the first reflecting surface to pass through both a sagittal virtual collected light ray and a meridional virtual collected light ray, the sagittal virtual collected light ray passing through the light collecting position in the light collection in the sagittal direction and extending in a direction orthogonal to both the $x_2$ axis and the $z_2$ axis, the meridional virtual collected light ray passing through the light collecting position in the light collection in the meridional direction and extending in a direction orthogonal to both a $y_2$ axis and the $z_2$ axis;
causing all of incoming light rays passing through the second reflecting surface to intersect, on an extension line of the incoming light rays, both a sagittal virtual light source ray and a meridional virtual light source ray, the sagittal virtual light source ray being defined by the sagittal virtual collected light ray in the light collection in the sagittal direction for the first reflecting surface, the meridional virtual light source ray being defined by the meridional virtual collected light ray in the light collection in the meridional direction for the first reflecting surface;
defining any point on the first reflecting surface as $M^A$, expressing coordinates of an intersection point between the sagittal light source ray and an incoming light ray to the $M^A$ point and an intersection point between the meridional light source ray and the incoming light ray to the $M^A$ point by using $L_{1s}^A$ and $L_{1m}^A$, and expressing coordinates of an intersection point between an outgoing light ray from the $M^A$ point and the sagittal virtual collected light ray and an intersection point between the outgoing light ray from the $M^A$ point and the meridional virtual collected light ray by using $L_{2s}^A$ and $L_{2m}^A$;
defining any point on the second reflecting surface as $M^B$, expressing coordinates of an intersection point between the sagittal virtual light source ray and an incoming light ray to the $M^B$ point and an intersection point between the meridional virtual light source ray and the incoming light ray to the $M^B$ point by using the $L_{2s}^A$ and $L_{2m}^A$ and a distance L between $M_0^A$ and $M_0^B$, and expressing coordinates of an intersection point between an outgoing light ray from the $M^B$ point and the sagittal collected light ray and an intersection point between the outgoing light ray from the $M^B$ point and the meridional collected light ray by using the $L_{2s}^B$ and $L_{2m}^B$; and
designing the mirror by using a design formula of a reflecting surface, the design formula being derived based on: the coordinates; a condition that an optical path length from a light source position to a virtual light collection position is constant with respect to any point on the reflecting surface for the light collection in the sagittal direction and the light collection in the meridional direction on the first reflecting surface; and a condition that an optical path length from a virtual light source position to a light collection position is constant with respect to any point on the reflecting surface for the light collection in the sagittal direction and the light collection in the meridional direction on the second reflecting surface.

**2.** The method for designing a mirror according to claim 1, wherein

the sagittal light source ray and the meridional light source ray are defined as a straight line $S_s$ extending in a y1-axis direction and a straight line $S_m$ extending in an $x_1$-axis direction, respectively,
the sagittal virtual collected light ray and the meridional virtual collected light ray are defined as a straight line $F_s^A$ extending in a $y_2$-axis direction and a straight line $F_m^A$ extending in an $x_2$-axis direction, respectively,
the sagittal virtual light source ray and the meridional virtual light source ray are defined as a straight line $S_s^B$ that coincides with the straight line $Fs^A$ and a straight line $S_m^B$ that coincides with the straight line $F_m^A$, respectively,
the sagittal collected light ray and the meridional collected light ray are defined as a straight line $F_s$ extending in a $y_3$-axis direction and a straight line $F_m$ extending in an $x_3$-axis direction, respectively, and
the optical path length is calculated for each of light collection in the meridional direction or light collection in the sagittal direction on the first reflecting surface or the second reflecting surface by the following (i) to (iv):

(i) Calculation of optical path length of sagittal direction light collection on first reflecting surface:

an incoming length from the light source position to the $M^A$ point with respect to the light collection in the sagittal direction on the first reflecting surface is obtained as a distance to the $M^A$ point from an intersection point on a side close to the meridional light source ray $S_m$ of two intersection points between the incoming light ray and an equiphase plane $A_{1s}$, the equiphase plane $A_{1s}$ being a rotated arcuate plane obtained by rotating, around the sagittal light source ray $S_s$, an arc that is formed around an intersection point $P_{m0}$ between the meridional light source ray $S_m$ and the $z_1$ axis and extends in a direction orthogonal to the $x_1$ axis through an intersection point $P_{s0}$ between the sagittal light source ray $S_s$ and the $z_1$ axis,
an outgoing length from the $M^A$ point to the virtual light collection position with respect to the light collection in the sagittal direction on the first reflecting surface is obtained as a distance to the $M^A$ point from an intersection point on a side close to the meridional virtual collected light ray $F_m^A$ of two intersection points between the outgoing light ray and an equiphase plane $A_{2s}^A$, the equiphase plane $A2_s^A$ being a rotated arcuate plane obtained by rotating, around the sagittal virtual collected light ray $F_s^A$, an arc which is formed around an intersection point $Q_{m0}^A$ between the meridional virtual collected light ray $F_m^A$ and the $z_2$ axis and extends in a direction orthogonal to the $x_2$ axis through an intersection point $Q_{s0}^A$ between the sagittal virtual collected light ray $F_s^A$ and the $z_2$ axis, and
thereby, the optical path length for the light collection in the sagittal direction on the first reflecting surface is calculated;

(ii) Calculation of optical path length of meridional direction light collection on first reflecting surface:

an incoming length from the light source position to the $M^A$ point with respect to the light collection in the meridional direction on the first reflecting surface is obtained as a distance to the $M^A$ point from an intersection point on a side close to the sagittal light source ray $S_s$ of two intersection points between the incoming light ray and an equiphase plane $A_{1m}$, the equiphase plane $A_{1m}$ being a rotated arcuate plane obtained by rotating, around the meridional light source ray $S_m$, an arc that is formed around the intersection point $P_{s0}$ between the sagittal light source ray $S_s$ and the $z_1$ axis and extends in a direction orthogonal to the $y_1$ axis through the intersection point $P_{m0}$ between the meridional light source ray $S_m$ and the $z_1$ axis,
an outgoing length from the $M^A$ point to the virtual light collection position with respect to the light collection in the meridional direction on the first reflecting surface is obtained as a distance to the $M^A$ point from an intersection point on a side close to the sagittal virtual collected light ray $F_s^A$ of two intersection points between the outgoing light ray and an equiphase plane $A_{2m}^A$, the equiphase plane $A_{2m}^A$ being a rotated arcuate plane obtained by rotating, around the meridional virtual collected light ray $F_m^A$, an arc that is formed around an intersection point $Q_{s0}^A$ between the sagittal virtual collected light ray $F_s^A$ and the $z_2$ axis and extends in a direction orthogonal to the $y_2$ axis through an intersection point $Q_{m0}^A$ between the meridional virtual collected light ray $F_m^A$ and the $z_2$ axis, and
thereby, the optical path length for the light collection in the meridional direction on the first reflecting surface is calculated;

(iii) Calculation of optical path length of sagittal direction light collection on second reflecting surface:

an incoming length from the virtual light source position to the $M^B$ point with respect to the light collection in the sagittal direction on the second reflecting surface is obtained as a distance to the $M^B$ point from an intersection point on a side close to the meridional virtual light source ray $S_m^B$ of two intersection points between the incoming light ray and an equiphase plane $A_{1s}^B$, the equiphase plane $A_{1s}^B$ being a rotated arcuate plane obtained by rotating, around the sagittal virtual light source ray $S_s^B$, an arc that is formed around an intersection point $P_{m0}^B$ between the meridional virtual light source ray $S_m^B$ and the $z_2$ axis and extends in a direction orthogonal to the $x_2$ axis through an intersection point $P_{s0}^B$ between the sagittal virtual light source ray $S_s^B$ and the $z_2$ axis,
an outgoing length from the $M^B$ point to the light collection position with respect to the light collection in the sagittal direction on the second reflecting surface is obtained as a distance to the $M^B$ point from an intersection point on a side close to the meridional collected light ray $F_m$ of two intersection points between the outgoing light ray and an equiphase plane $A_{2s}$, the equiphase plane $A_{2s}$ being a rotated arcuate plane obtained by rotating, around the sagittal collected light ray $F_s$, an arc that is formed around an intersection point $Q_{m0}$ between the meridional collected light ray $F_m$ and the $z_3$ axis and extends in a direction orthogonal to the $x_3$ axis through an intersection point $Q_{s0}$ between the sagittal collected light ray $F_s$ and the $z_3$ axis, and
thereby, the optical path length for the light collection in the sagittal direction on the second reflecting surface is calculated; and

(iv) Calculation of optical path length of meridional direction light collection on second reflecting surface:

an incoming length from the virtual light source position to the $M^B$ point with respect to the light collection in the meridional direction on the second reflecting surface is obtained as a distance to the $M^B$ point from an intersection point on a side close to the sagittal virtual light source ray $S_s^B$ of two intersection points between the incoming light ray and an equiphase plane $A_{1m}^B$, the equiphase plane $A_{1m}^B$ being a rotated arcuate plane obtained by rotating, around the meridional virtual light source ray $S_m^B$, an arc that is formed around an intersection point $P_{s0}^B$ between the sagittal virtual light source ray $S_s^B$ and the $z_2$ axis and extends in a direction orthogonal to the $y_2$ axis through an intersection point $P_{m0}^B$ between the meridional virtual light source ray $S_m^B$ and the $z_2$ axis,
an outgoing length from the $M^B$ point to the light collection position with respect to the light collection in the meridional direction on the second reflecting surface is obtained as a distance to the $M^B$ point from an intersection point on a side close to the sagittal collected light ray $F_s$ of two intersection points between the outgoing light ray and an equiphase plane $A_{2m}$, the equiphase plane $A_{2m}$ being a rotated arcuate plane obtained by rotating, around the meridional collected light ray $F_m$, an arc that is formed around an intersection point $Q_{s0}$ between the sagittal collected light ray $F_s$ and the $z_3$ axis and extends in a direction orthogonal to the $y_3$ axis through an intersection point $Q_{m0}$ between the meridional collected light ray $F_m$ and the $z_3$ axis, and
thereby, the optical path length for the light collection in the meridional direction on the second reflecting surface is calculated.

**3.** The method for designing a mirror according to claim 2, wherein

regarding the calculation of the optical path length of (i) (the sagittal direction light collection of the first reflecting surface),
the distance to the $M^A$ point from the intersection point on the side close to the meridional light source ray $S_m$ of the two intersection points between the incoming light ray and the equiphase plane $A_{1s}$ on the first reflecting surface is obtained by obtaining a distance to the $M^A$ point from an intersection point $P_s$ between the incoming light ray and the sagittal light source ray $S_s$, and adding or subtracting, to or from the distance, a distance from the intersection point $P_s$ to the arc defining the equiphase plane $A_{1s}$, and
a distance to the $M^A$ point from the intersection point on the side close to the meridional virtual collected light ray $F_m^A$ of the two intersection points between the outgoing light ray and the equiphase plane $A_{2s}^A$ on the first reflecting surface is obtained by obtaining a distance to the $M^A$ point from an intersection point $Q_s^A$ between the outgoing light ray and the sagittal virtual collected light ray $F_s^A$, and adding or subtracting, to or from the distance, a distance from the intersection point $Q_s^A$ to the arc defining the equiphase plane $A_{2s}^A$,
regarding calculation of the optical path length of (ii) (the meridional direction light collection of the first reflecting surface),
the distance to the $M^A$ point from the intersection point on the side close to the sagittal light source ray $S_s$ of the two intersection points between the incoming light ray and the equiphase plane $A_{1m}$ on the first reflecting surface is obtained by obtaining a distance to the $M^A$ point from an intersection point $P_m$ between the incoming light ray and the meridional light source ray $S_m$, and adding or subtracting, to or from the distance, a distance from the intersection point $P_m$ to the arc defining the equiphase plane $A_{1m}$, and
the distance to the $M^A$ point from the intersection point on the side close to the sagittal virtual collected light ray $F_s^A$ of the two intersection points between the outgoing light ray and the equiphase plane $A_{2m}^A$ on the first reflecting surface is obtained by obtaining a distance to the $M^A$ point from an intersection point $Q_m^A$ between the outgoing light ray and the meridional virtual collected light ray $F_m^A$, and adding or subtracting, to or from the distance, a distance from the intersection point $Q_m^A$ to the arc defining the equiphase plane $A_{2m}^A$,
regarding calculation of the optical path length of (iii) (the sagittal direction light collection of the second reflecting surface),
the distance to the $M^B$ point from the intersection point on the side close to the meridional virtual light source ray $S_m^B$ of the two intersection points between the incoming light ray and the equiphase plane $A_{1s}^B$ on the second reflecting surface is obtained by obtaining a distance to the $M^B$ point from an intersection point $P_S^B$ between the incoming light ray and the sagittal virtual light source ray $S_s^B$, and adding or subtracting, to or from the distance, a distance from the intersection point $P_s^B$ to the arc defining the equiphase plane $A_{1s}^B$, and
the distance to the $M^B$ point from the intersection point on the side close to the meridional collected light ray $F_m$ of the two intersection points between the outgoing light ray and the equiphase plane $A_{2s}$ on the second reflecting surface is obtained by obtaining a distance to the $M^B$ point from an intersection point $Q_s$ between the outgoing light ray and the sagittal collected light ray $F_s$, and adding or subtracting, to or from the distance, a distance from the intersection point $Q_s$ to the arc defining the equiphase plane $A_{2s}$, and
regarding calculation of the optical path length of (iv) (the meridional direction light collection of the second reflecting surface),
the distance to the $M^B$ point from the intersection point on the side close to the sagittal virtual light source ray $S_s^B$ of the two intersection points between the incoming light ray and the equiphase plane $A_{1m}^B$ on the second reflecting surface is obtained by obtaining a distance to the $M^B$ point from an intersection point $P_m^B$ between the incoming light ray and the meridional virtual light source ray $S_m^B$, and adding or subtracting, to or from the distance, a distance from the intersection point $P_m^B$ to the arc defining the equiphase plane $A_{1m}^B$, and
the distance to the $M^B$ point from the intersection point on the side close to the sagittal collected light ray $F_s$ of the two intersection points between the outgoing light ray and the equiphase plane $A_{2m}$ on the second reflecting surface is obtained by obtaining a distance to the $M^B$ point from an intersection point $Q_m$ between the outgoing light ray and the meridional collected light ray $F_m$, and adding or subtracting, to or from the distance, a distance from the intersection point $Q_m$ to the arc defining the equiphase plane $A_2$m.

**4.** The method for designing a mirror according to any one of claims 1 to 3, wherein

an orthogonal coordinate system uvw is defined, in which

an intersection point between the $z_1$ axis and the $z_3$ axis is set as an origin,
a direction parallel to the $z_2$ axis is defined as a u axis,
a direction parallel to the $x_1$ axis, the $x_2$ axis, and the $x_3$ axis is defined as a v axis, and
a direction orthogonal to both the u axis and the v axis is defined as a w axis,

the uvw system coordinate is transformed to: an $x_1y_1z_1$ coordinate system based on an optical axis of an incoming beam to the first reflecting surface; an $x_2y_2z_2$ coordinate system based on an optical axis of an outgoing beam from the first reflecting surface, the outgoing beam being an incoming beam to the second reflecting surface; and an $x_3y_3z_3$ coordinate system based on an optical axis of an outgoing beam from the second reflecting surface, and
the design formula is expressed by the uvw coordinate system.

**5.** The method for designing a mirror according to claim 4, wherein

an orthogonal coordinate system $_{u}{}^{A}{}_{v}{}^{A}{}_{w}{}^{A}$ based on the first reflecting surface is defined, in which the intersection point $M_0^A$ on the first reflecting surface between the $z_1$ axis and the $z_2$ axis is included, a plane in contact with the reflecting surface is defined as a $u^Av^A$ plane, a direction of a normal line passing through the $M_0^A$ of the $u^Av^A$ plane is defined as a $w^A$ axis, a $v^A$ axis is defined as a direction orthogonal to both the $z_1$ axis and the $z_2$ axis, a $u^A$ axis is defined as a direction orthogonal to both the $v^A$ axis and the $w^A$ axis, the intersection point $M_0^A$ is defined as an origin, and $\theta_0^A$ represents an oblique incoming angle formed by the $u^Av^A$ plane and the optical axis $z_1$,

an orthogonal coordinate system $u^Bv^Bw^B$ based on the second reflecting surface is defined, in which the intersection point $M_0^B$ on the second reflecting surface between the $z_2$ axis and the $z_3$ axis is included, a plane in contact with the reflecting surface is defined as a $u^Bv^B$ plane, a direction of a normal line passing through the $M_0^B$ of the $u^Bv^B$ plane is defined as a $w^B$ axis, a $v^B$ axis is defined as a direction orthogonal to both the $z_2$ axis and the $z_3$ axis, a $u^B$ axis is defined as a direction orthogonal to both the $v^B$ axis and the $w^B$ axis, the intersection point $M_0^B$ is defined as an origin, and $\theta_0^B$ represents an oblique incoming angle formed by the $u^Bv^B$ plane and the optical axis $z_2$,

each of the $u^Av^Aw^A$ coordinate system and the $u^Bv^Bw^B$ coordinate system is transformed into: the $x_1y_1z_1$ coordinate system based on the optical axis of the incoming beam to the first reflecting surface; the $x_2y_2z_2$ coordinate system based on the optical axis of the outgoing beam from the first reflecting surface, the outgoing beam being the incoming beam to the second reflecting surface; and the $x_3y_3z_3$ coordinate system based on the optical axis of the outgoing beam from the second reflecting surface,

the design formula is expressed by the $u^Av^Aw^A$ coordinate system and the $u^Bv^Bw^B$ coordinate system, and the design formula is further expressed by the uvw coordinate system.

**6.** The method for designing a mirror according to claim 5, wherein

the design formula includes

a following formula (1) obtained by weighting: a first formula $f_s^A(u^A, v^A, w^A) = 0$ derived from a condition that an optical path length from a light source point to a virtual light collection point is constant for the light collection in the sagittal direction on the first reflecting surface; and a second formula $f_m^A(u^A, v^A, w^A) = 0$ derived from a condition that an optical path length from the light source point to the virtual light collection point is constant for the light collection in the meridional direction on the first reflecting surface, and

a following formula (2) obtained by weighting: a third formula $f_s^B(u^B, v^B, w^B) = 0$ derived from a condition that an optical path length from a virtual light source point to the light collection point is constant for the light collection in the sagittal direction on the second reflecting surface; and a fourth formula $f_m^B(u^B, v^B, w^B) = 0$ derived from a condition that an optical path length from the virtual light source point to the light collection point is constant for the light collection in the meridional direction on the second reflecting surface.

[Math. 1]

$$f^A(u^A, v^A, w^A) = \alpha^A f_s^A(u^A, v^A, w^A) + \beta^A f_m^A(u^A, v^A, w^A) = 0 \quad (1)$$

$$0 \leqq \alpha^A \leqq 1, \quad \beta^A = 1 - \alpha^A$$

$$f^B(u^B, v^B, w^B) = \alpha^B f_s^B(u^B, v^B, w^B) + \beta^B f_m^B(u^B, v^B, w^B) = 0 \quad (2)$$

$$0 \leqq \alpha^B \leqq 1, \quad \beta^B = 1 - \alpha^B$$

**7.** The method for designing a mirror according to any one of claims 1 to 6, wherein $L_{2m}^A$ and $L_{2s}^A$ are set using any magnification $M_s$ for sagittal direction light collection from the light source ray $S_s$ to the collected light ray $F_s$ and any magnification $M_m$ for meridional direction light collection from the light source ray $S_m$ to the collected light ray $F_m$, by a following formula.

[Math. 2]

$$\begin{cases} L_{2m}^A = \dfrac{L_{1m}^A M_m}{L_{2m}^B + L_{1m}^A M_m} L \\ L_{2s}^A = \dfrac{L_{1s}^A M_s}{L_{2s}^B + L_{1s}^A M_s} L \end{cases}$$

**8.** An astigmatism control mirror having a reflecting surface satisfying the design formula according to any one of claims 1 to 6, wherein

values of the $L_{1s}^{A}$ and the $L_{1m}^{A}$ are different from each other, and values of the $L_{2s}^{B}$ and the $L_{2m}^{B}$ are equal to each other, and
outgoing beams that are collected at one point are obtained from an incoming beam having astigmatism.

**9.** An astigmatism control mirror having a reflecting surface satisfying the design formula according to any one of claims 1 to 6, wherein

values of the $L_{1s}^{A}$ and the $L_{1m}^{A}$ are equal to each other, and values of the $L_{2s}^{B}$ and the $L_{2m}^{B}$ are different from each other, and
an outgoing beam having astigmatism is obtained from an incoming beam diverging from one point.

**10.** An astigmatism control mirror having a reflecting surface satisfying the design formula according to any one of claims 1 to 6, wherein

values of the $L_{1s}^{A}$ and the $L_{1m}^{A}$ are equal to each other,
values of the $L_{2s}^{A}$ and the $L_{2m}^{A}$ are different from each other,
values of the $L_{2s}^{B}$ and the $L_{2m}^{B}$ are equal to each other, and
astigmatism is imparted to an incoming beam diverging from one point, on the first reflecting surface, the astigmatism is eliminated on the second reflecting surface, and different reduction magnifications are applied in a vertical direction and in a horizontal direction.

**11.** An astigmatism control mirror having a reflecting surface satisfying the design formula according to any one of claims 1 to 6, wherein

$L_{2m}^{A}$ and $L_{2s}^{A}$ are set by Formula (4) using the magnification $M_s$ in the sagittal direction and the magnification $M_m$ in the meridional direction, the magnifications being defined by the following formula (3) and being magnifications of a beam from the light source ray to the collected light ray, and
beams spreading from one point in both vertical and horizontal directions are collected again at one point through double-bounce reflections, and the beam becomes circular at a light collection point or a divergence position downstream of the light collection point.
[Math. 3]

$$\begin{cases} M_m = \dfrac{d_m^F}{d_m^S} \approx \dfrac{L_{2m}^A}{L_{1m}^A} \dfrac{L_{2m}^B}{L - L_{2m}^A} \\ M_s = \dfrac{d_s^F}{d_s^S} \approx \dfrac{L_{2s}^A}{L_{1s}^A} \dfrac{L_{2s}^B}{L - L_{2s}^A} \end{cases} \tag{3}$$

[Math. 4]

$$\begin{cases} L_{2m}^A = \dfrac{L_{1m}^A M_m}{L_{2m}^B + L_{1m}^A M_m} L \\ L_{2s}^A = \dfrac{L_{1s}^A M_s}{L_{2s}^B + L_{1s}^A M_s} L \end{cases} \tag{4}$$

**12.** An astigmatism control mirror having a reflecting surface satisfying the design formula according to any one of claims 1 to 6, wherein

values of the $L_{1m}^{A}$, the $L_{2m}^{A}$, and the $L_{2m}^{B}$ are positive or negative infinity, and the $L_{1s}^{A}$, the $L_{2s}^{A}$, and the $L_{2s}^{B}$ respectively have predetermined values (where $L_{1s}^{A} + L_{2s}^{A} \neq 0$ and $(L - L_{2s}^{A}) + L_{2s}^{B} \neq 0$), and
the astigmatism control mirror has collection performance only in the sagittal direction.

**13.** An astigmatism control mirror having a reflecting surface satisfying the design formula according to any one of claims 1 to 6, wherein

an installation angle allowable range is enlarged by setting the $L_{2s}^A$ and the $L_{2m}^A$ so that three points of the intersection point $P_{s0}$ between the light source ray $S_s$ and the $z_1$ axis, the intersection point $Q_{s0}^A$ between the virtual collected light ray $F_s^A$ and the $z_2$ axis, and the intersection point $Q_{s0}$ between the collected light ray $F_s$ and the $z_3$ axis are present on a single straight line in the sagittal direction light collection, and at the same time, three points of the intersection point $P_{m0}$ between the light source ray $S_m$ and the $z_1$ axis, the intersection point $Q_{m0}^A$ between the virtual collected light ray $F_m^A$ and the $z_2$ axis, and the intersection point $Q_{m0}$ between the collected light ray $F_m$ and the $z_3$ axis are present on a single straight line in the meridional direction light collection.

FIG. 1

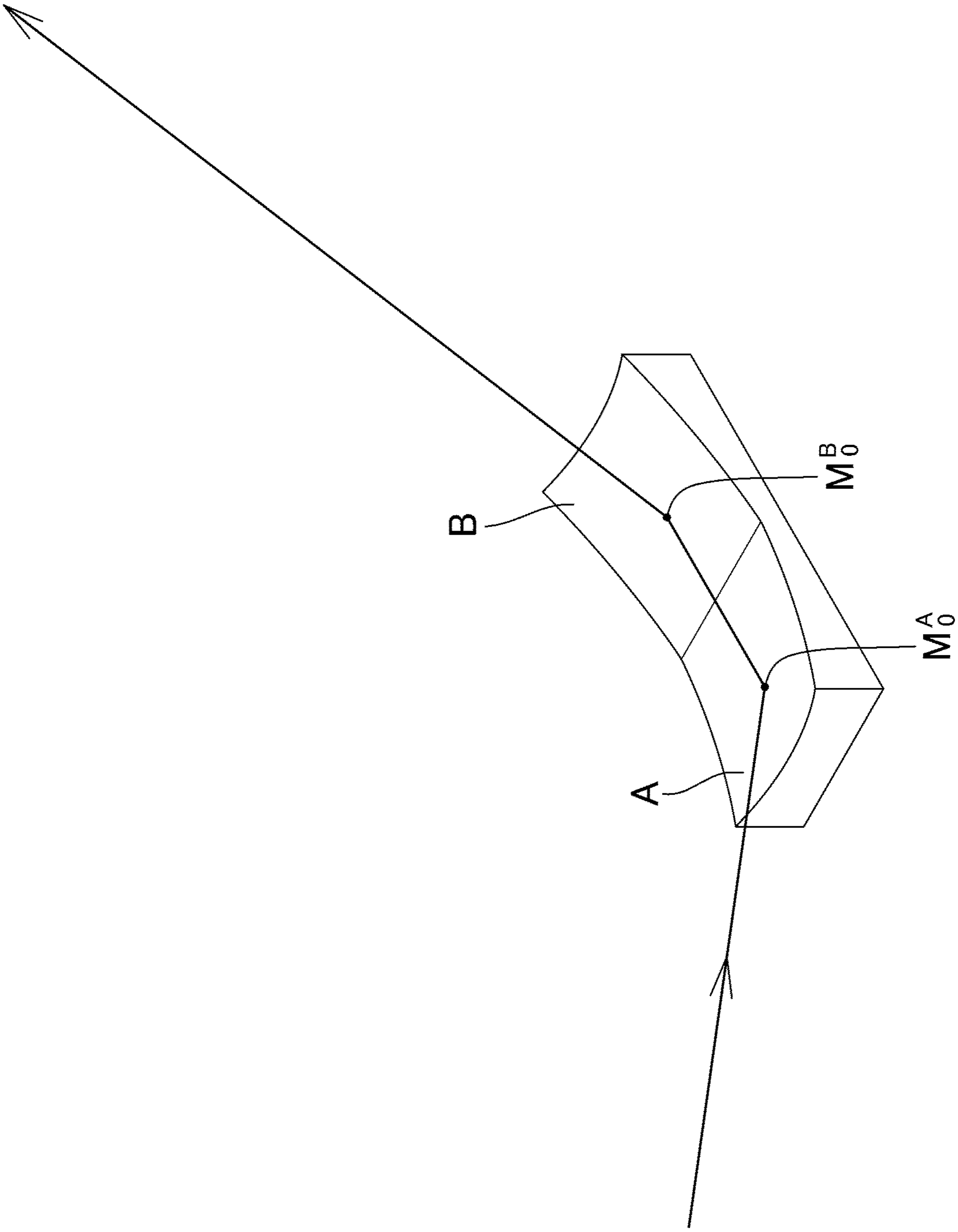

FIG. 2

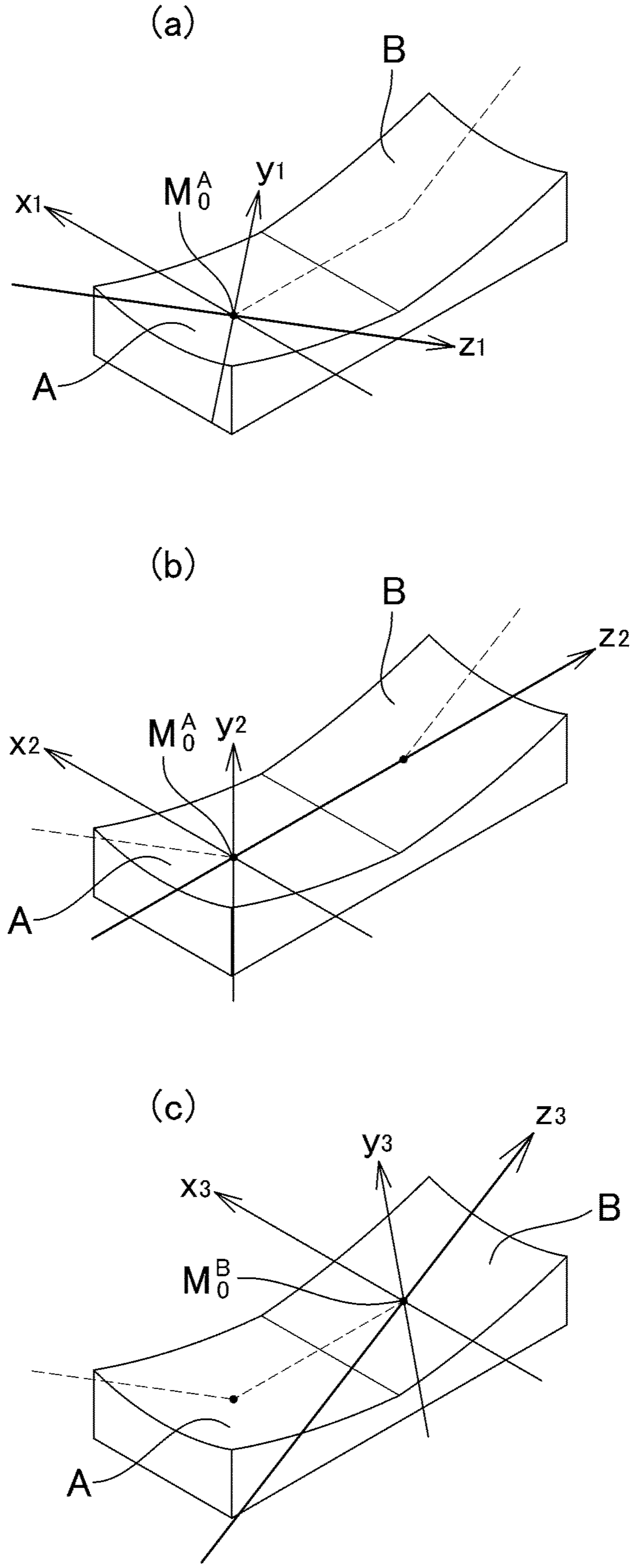

FIG. 3

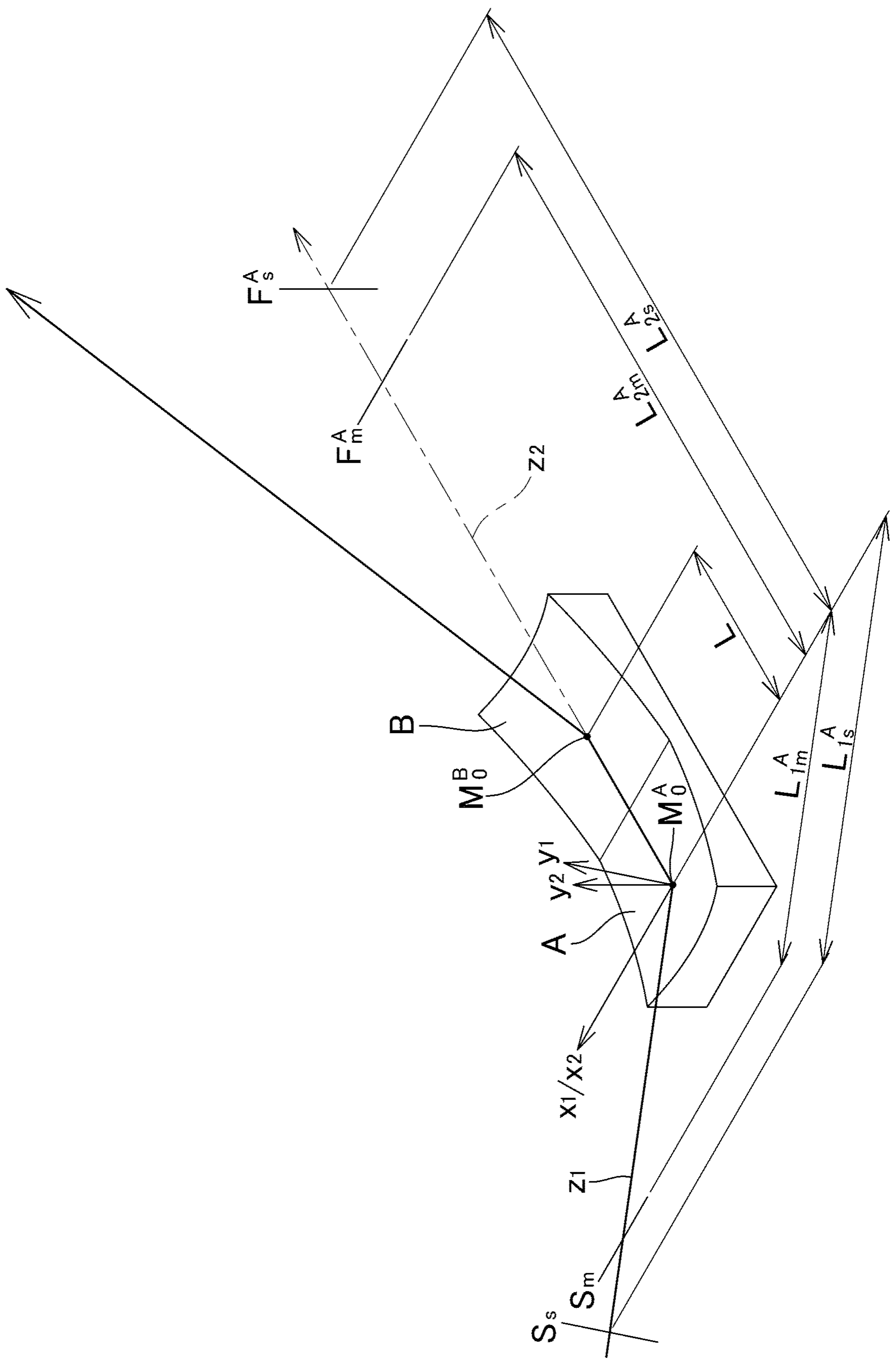

FIG. 4

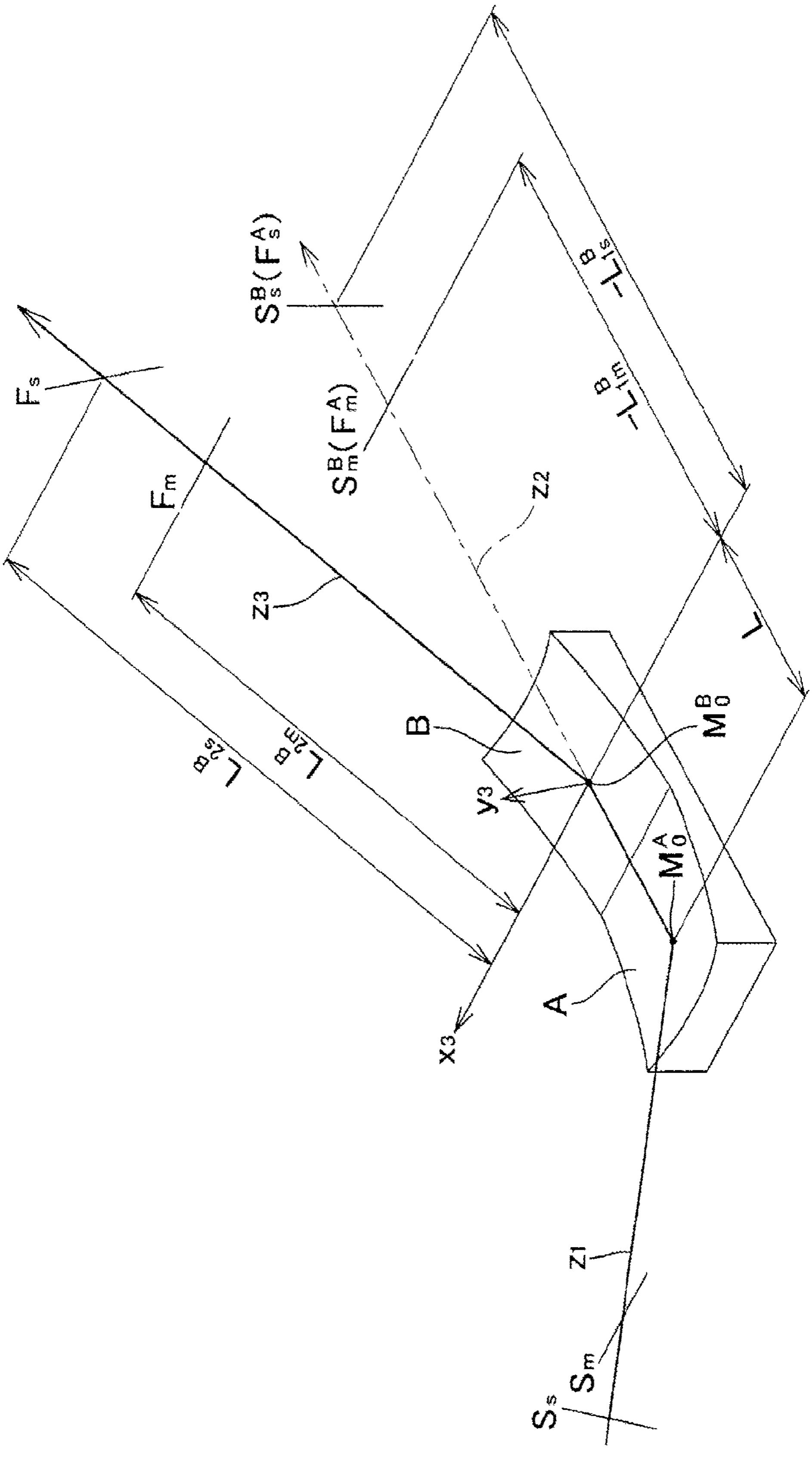

FIG. 5

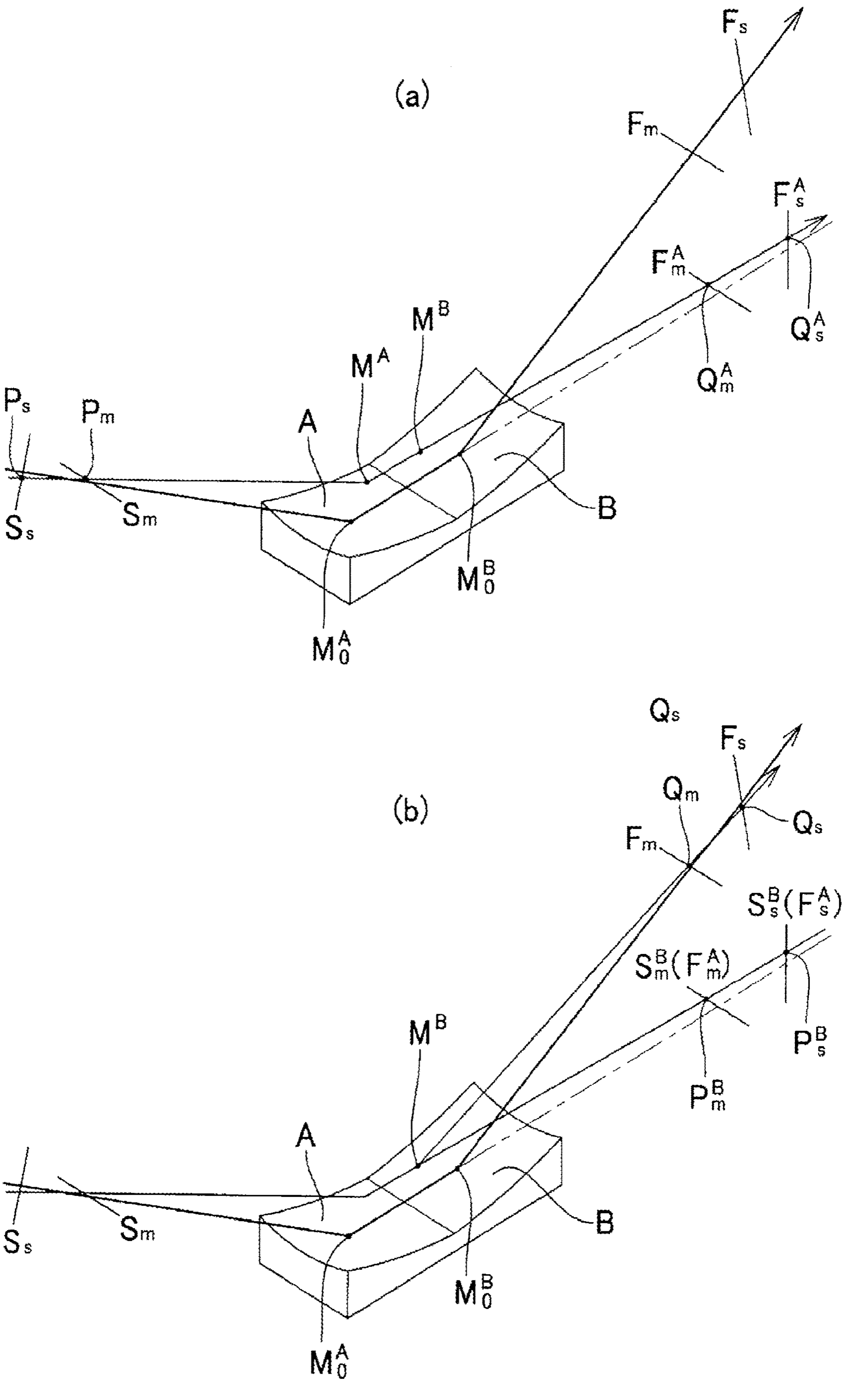
(a)
$F_s$
$F_m$
$F_s^A$
$F_m^A$
$Q_s^A$
$Q_m^A$
$M^B$
$M^A$
$P_s$
$P_m$
A
B
$S_s$
$S_m$
$M_0^B$
$M_0^A$
(b)
$Q_s$
$F_s$
$Q_m$
$F_m$
$Q_s$
$S_s^B(F_s^A)$
$S_m^B(F_m^A)$
$M^B$
$P_s^B$
$P_m^B$
A
B
$S_s$
$S_m$
$M_0^B$
$M_0^A$

FIG. 6

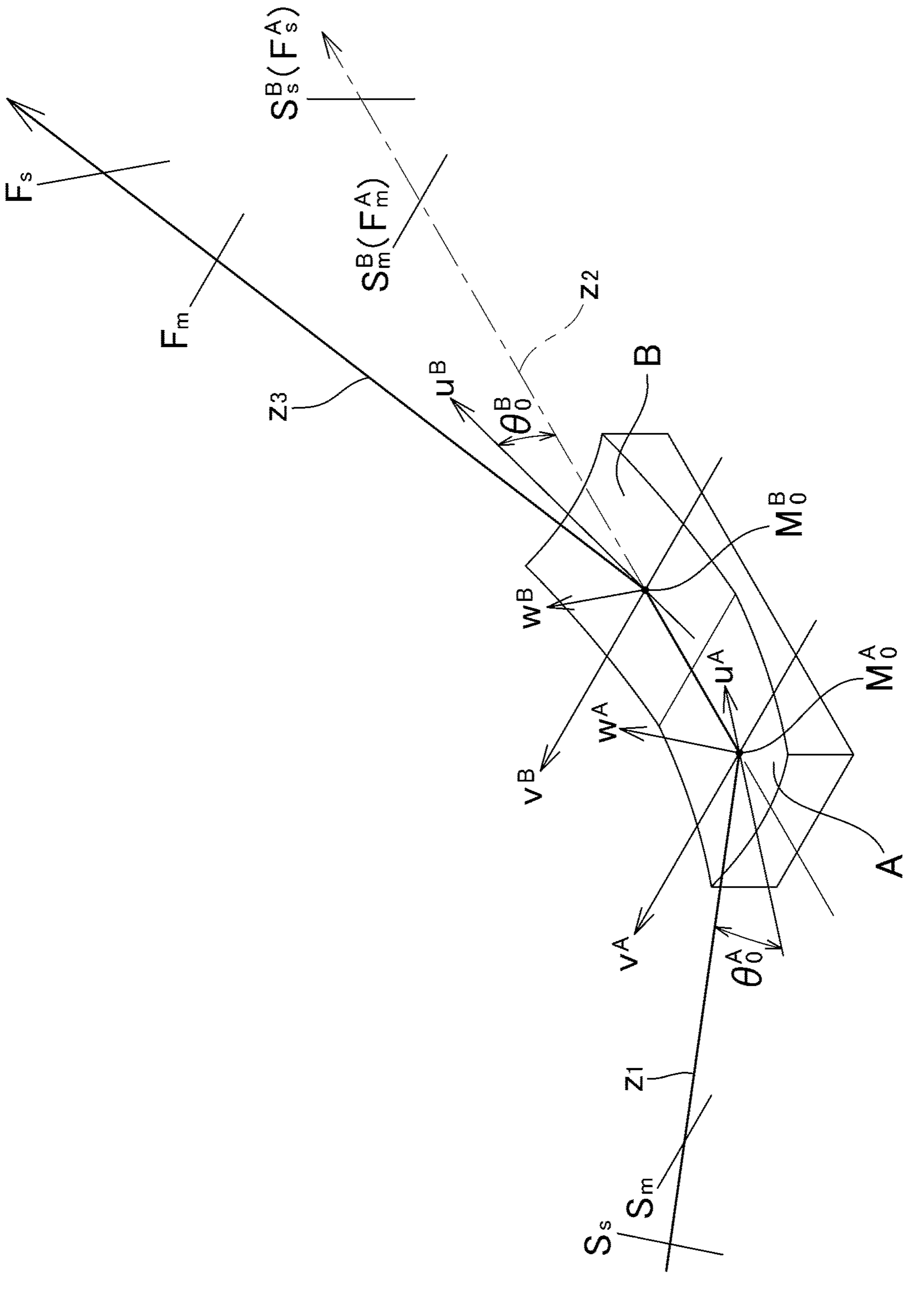
$S_s^B(F_s^A)$
$F_s$
$S_m^B(F_m^A)$
$F_m$
$z_2$
$z_3$
B
$u^B$
$\theta_0^B$
$M_0^B$
$w^B$
$u^A$
$w^A$
$M_0^A$
$v^B$
A
$v^A$
$\theta_0^A$
$z_1$
$S_m$
$S_s$

FIG. 7

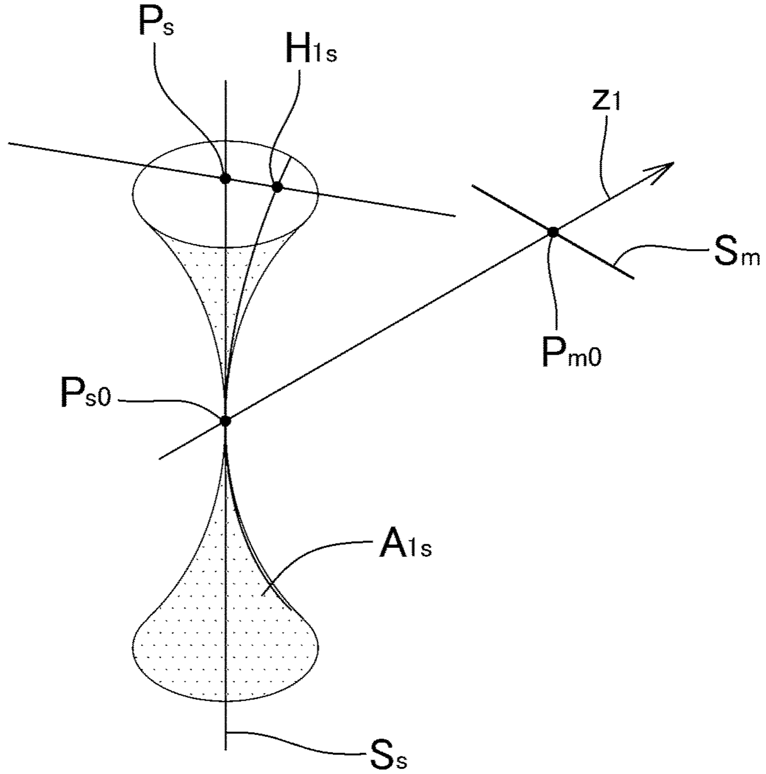


FIG. 8

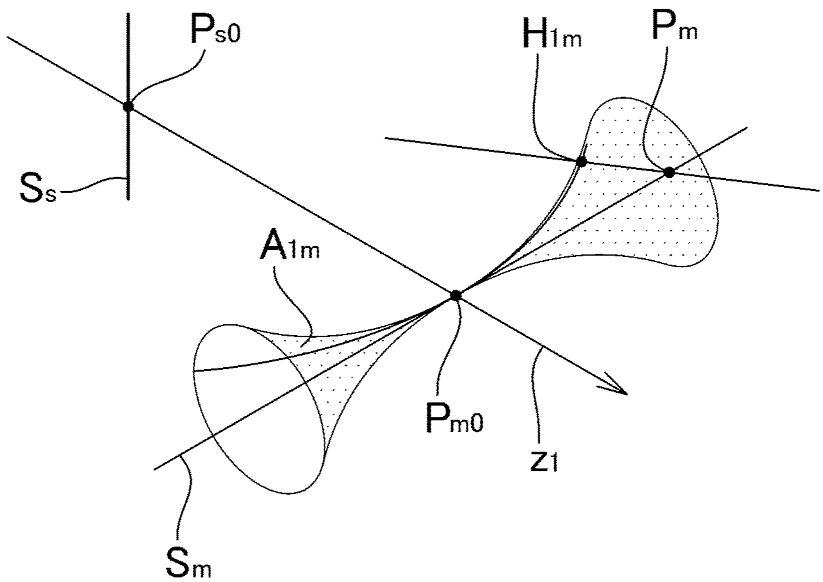

FIG. 9

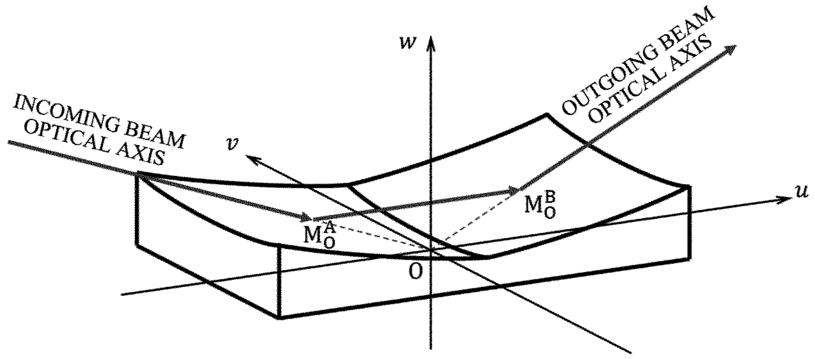


DOUBLE-BOUNCE REFLECTION
ASTIGMATISM CONTROL FLAT PLATE MIRROR

FIG. 10

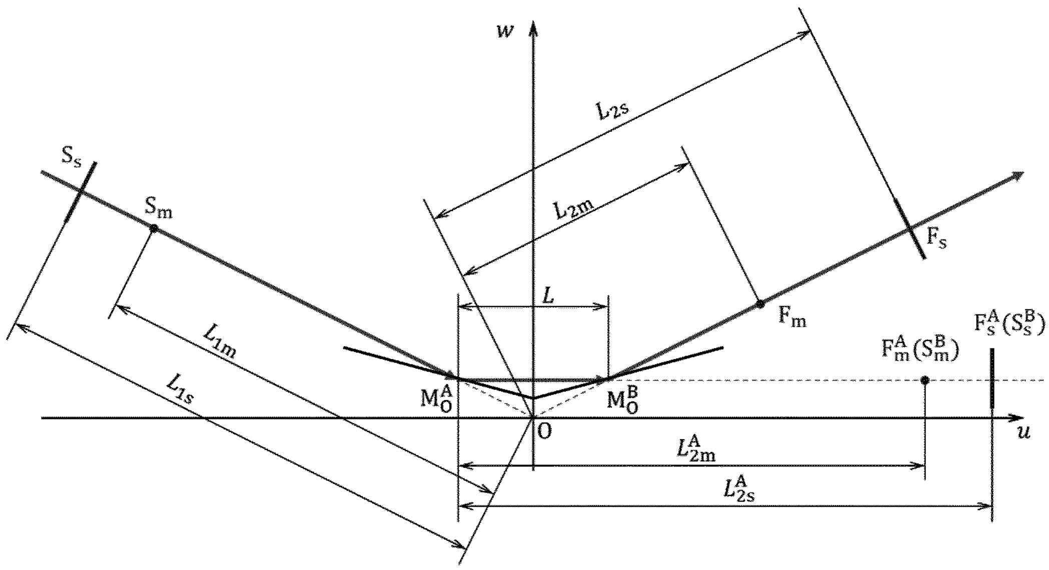


DEFINITION OF INCOMING LENGTH AND OUTGOING LENGTH

FIG. 11

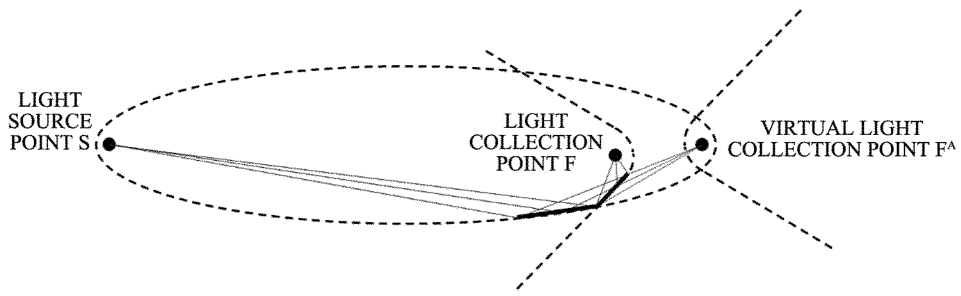


ARRANGEMENTS FOR LIGHT SOURCE,
LIGHT COLLECTION POINT, AND VIRTUAL LIGHT COLLECTION POINT
ARE SAME IN BOTH MERIDIONAL DIRECTION AND SAGITTAL DIRECTION

FIG. 12

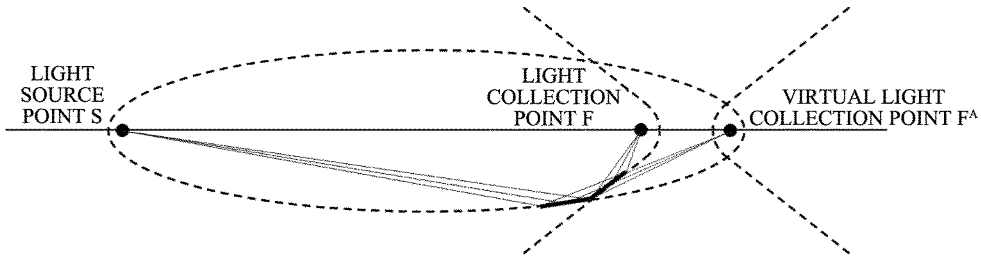


Wolter type I MIRROR

FIG. 13

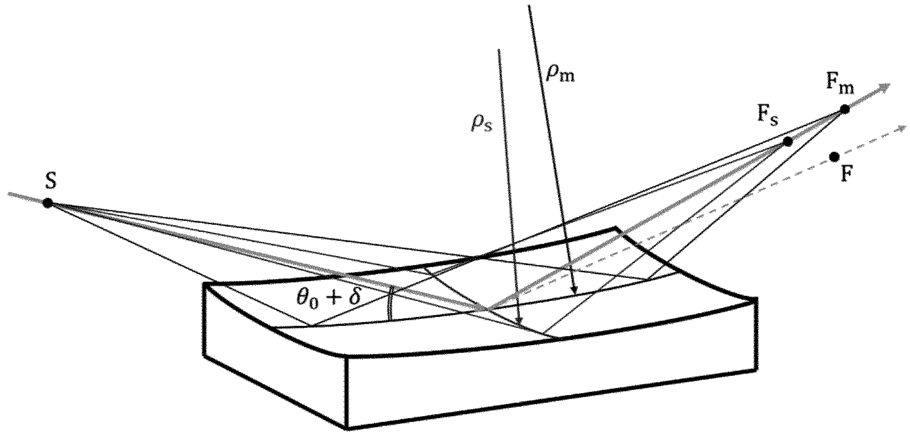


GLANCING ANGLE ERROR ON SPHEROIDAL MIRROR

FIG. 14

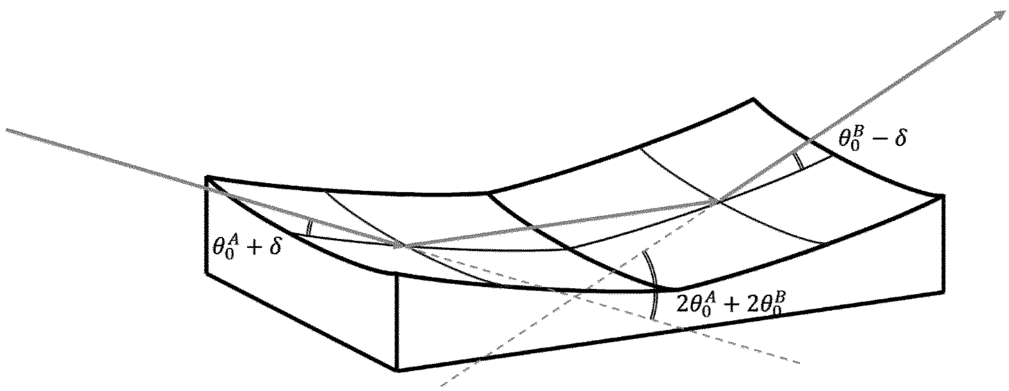


GLANCING ANGLE ERROR
ON INTEGRATED DOUBLE-BOUNCE REFLECTION MIRROR

FIG. 15

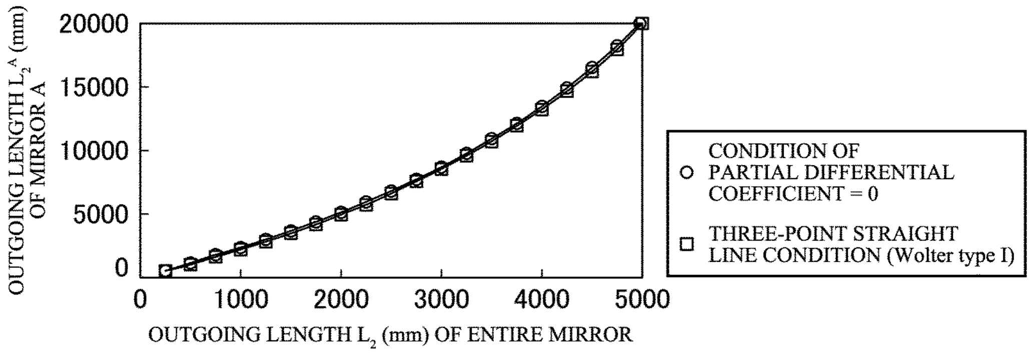


FIG. 16

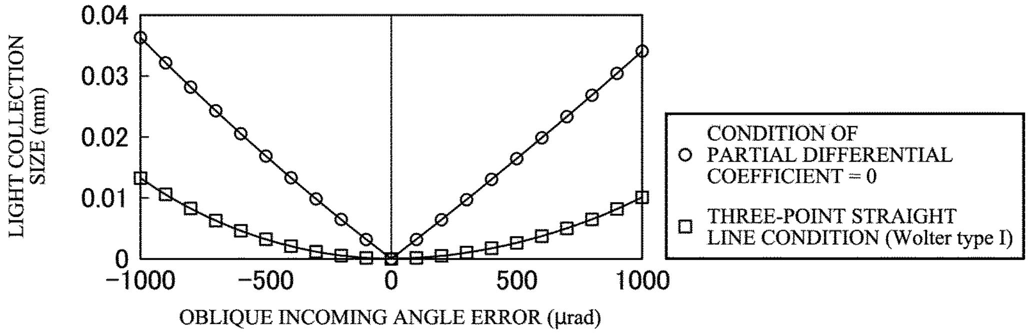


FIG. 17

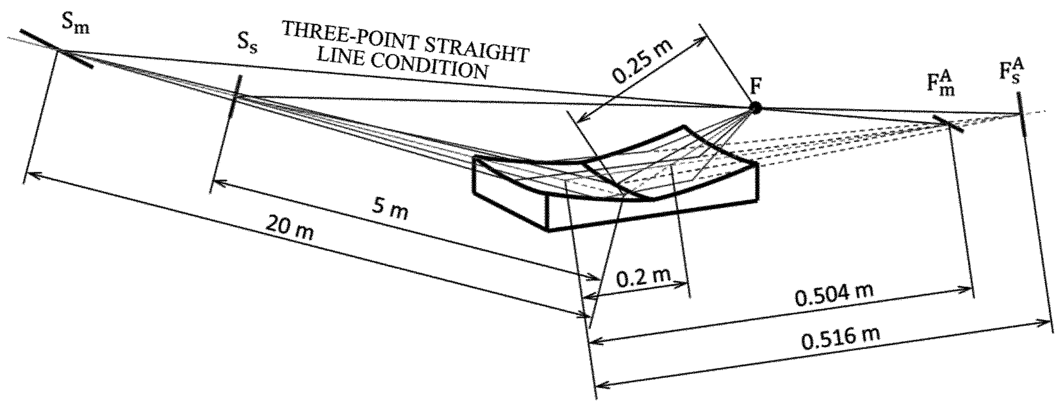


OPTICAL SYSTEM ARRANGEMENT
OF DOUBLE-BOUNCE REFLECTION ASTIGMATISM CONTROL
FLAT PLATE MIRROR [INSTALLATION ANGLE ERROR]

FIG. 18

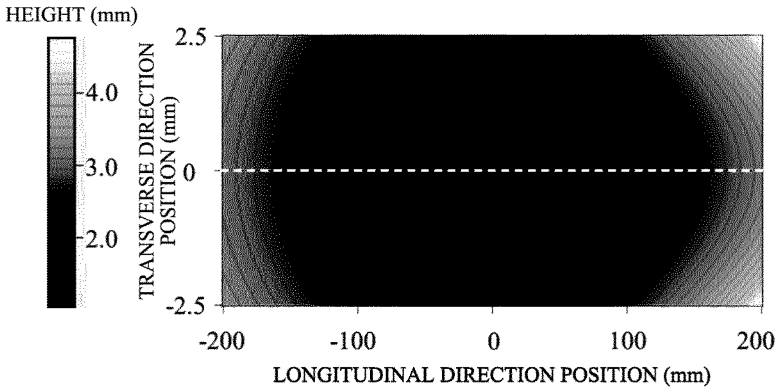


(a)

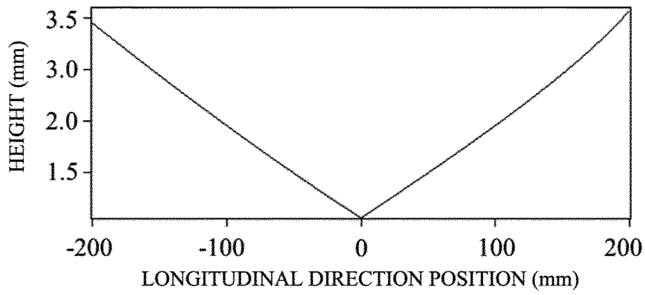


(b)

HEIGHT DISTRIBUTION OF DOUBLE-BOUNCE REFLECTION ASTIGMATISM CONTROL FLAT PLATE MIRROR [INSTALLATION ANGLE ERROR]
(a) TWO-DIMENSIONAL DISTRIBUTION OF HEIGHT
(b) LONGITUDINAL CROSS-SECTIONAL PROFILE

FIG. 19

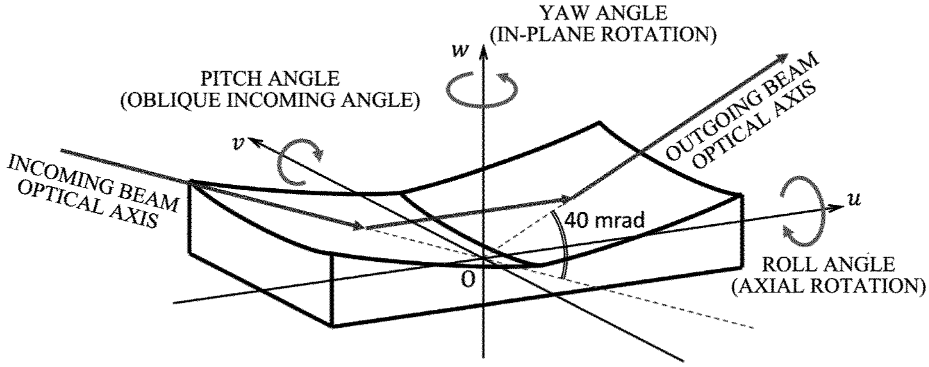


INSTALLATION ANGLE ERROR OF FLAT PLATE MIRROR

FIG. 20

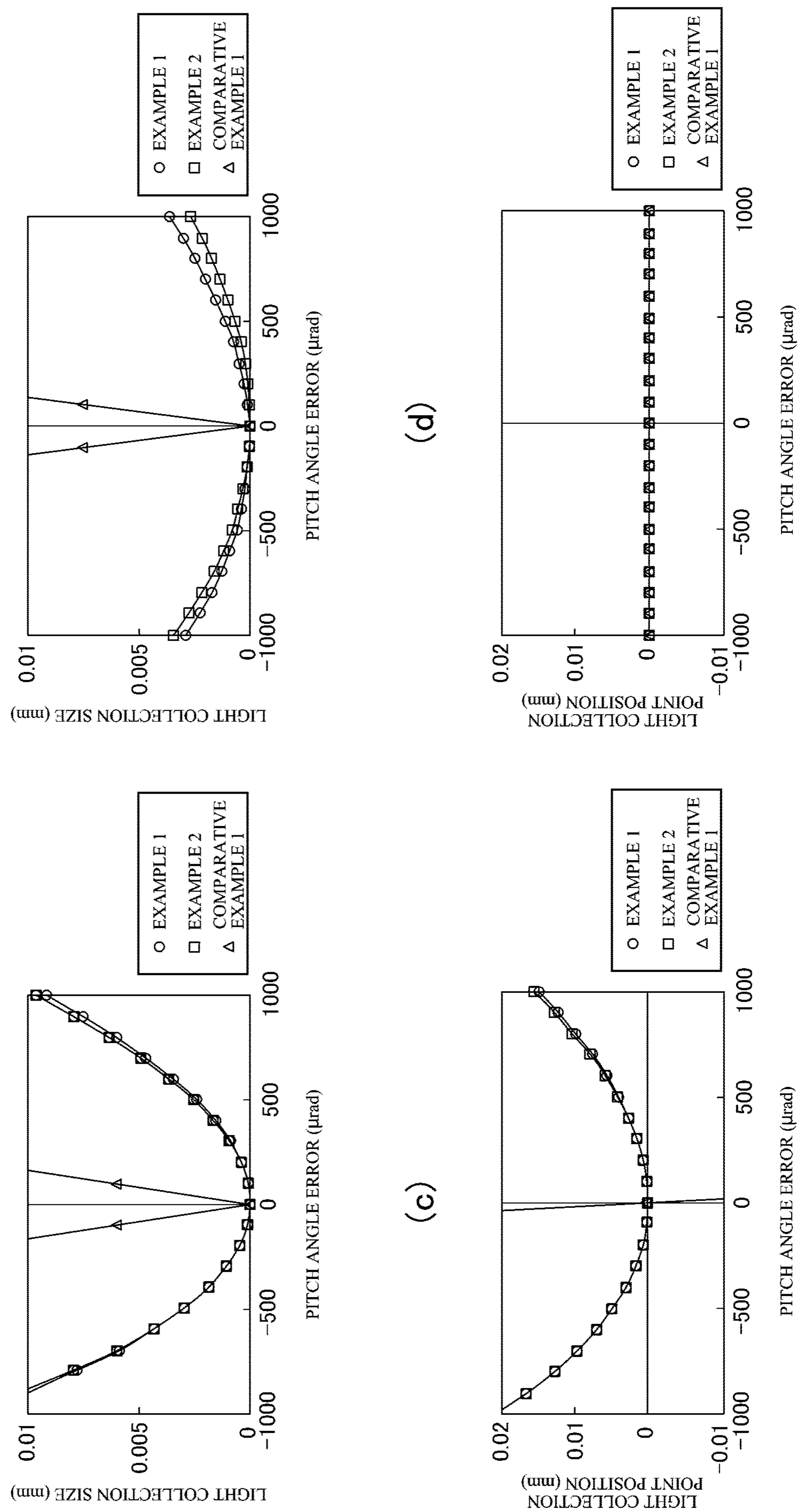
(a)
(b)
(c)
(d)
LIGHT COLLECTION SIZE (mm)
LIGHT COLLECTION POINT POSITION (mm)
PITCH ANGLE ERROR (μrad)
EXAMPLE 1
EXAMPLE 2
COMPARATIVE EXAMPLE 1
0.01
0.005
0
0.02
−0.01
−1000
−500
500
1000

FIG. 21

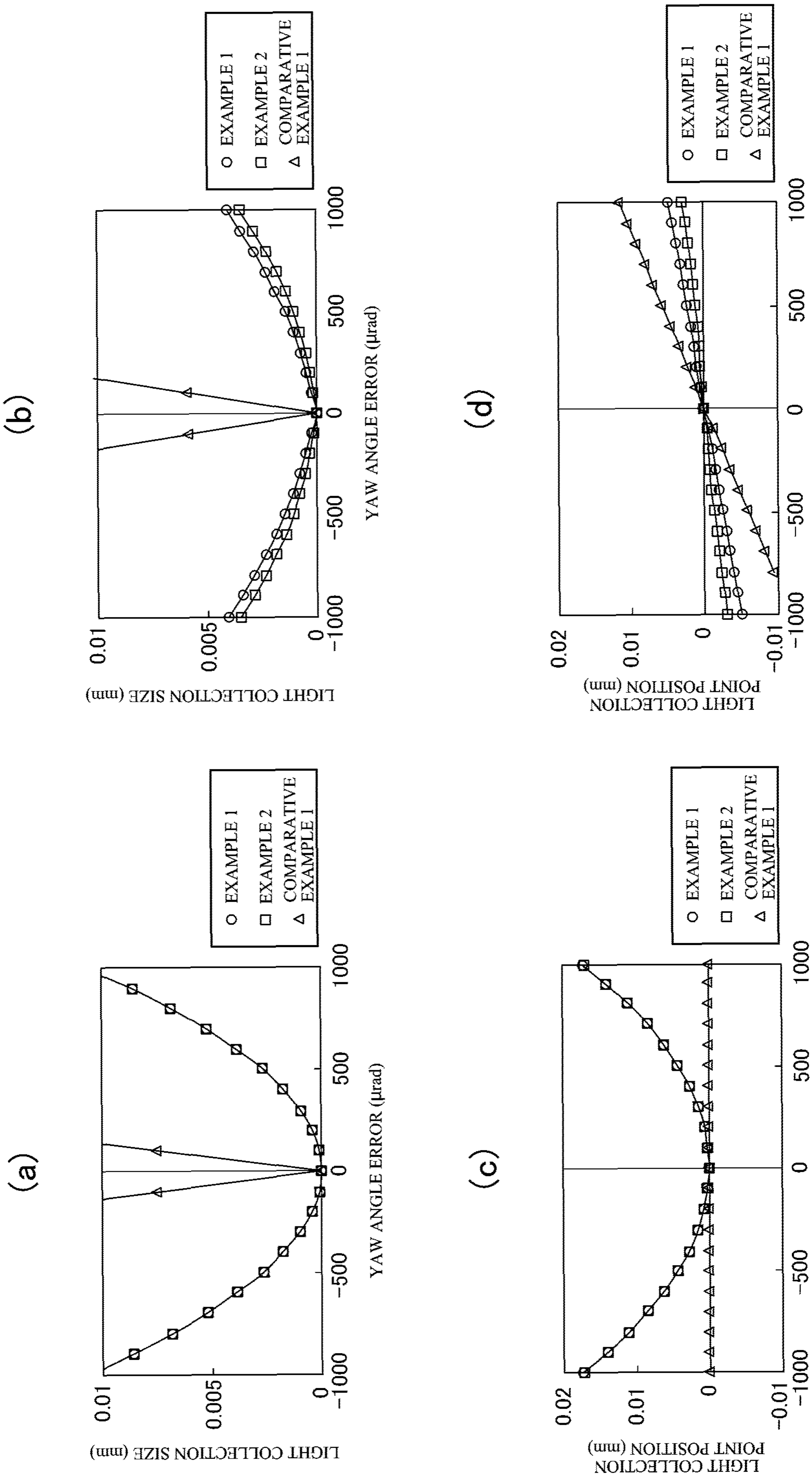
(a)
(b)
(c)
(d)
LIGHT COLLECTION SIZE (mm)
LIGHT COLLECTION POINT POSITION (mm)
YAW ANGLE ERROR (μrad)
EXAMPLE 1
EXAMPLE 2
COMPARATIVE EXAMPLE 1
0.01
0.005
0.02
-0.01
0
-1000
-500
500
1000

FIG. 22

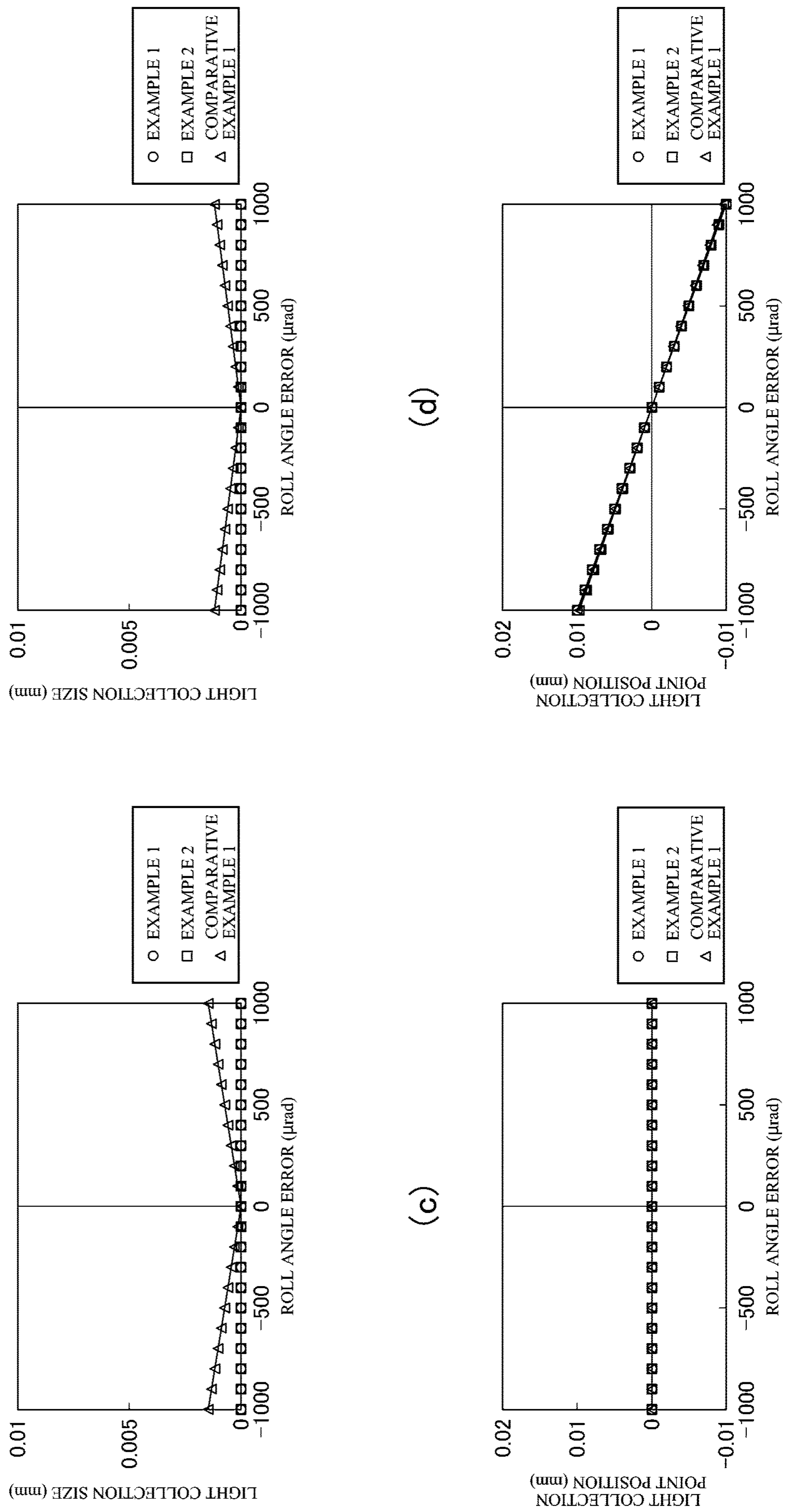
(a)
(b)
(c)
(d)
LIGHT COLLECTION SIZE (mm)
LIGHT COLLECTION POINT POSITION (mm)
ROLL ANGLE ERROR (μrad)
EXAMPLE 1
EXAMPLE 2
COMPARATIVE EXAMPLE 1
0.01
0.005
0
0.02
−0.01
−1000
−500
500
1000

FIG. 23

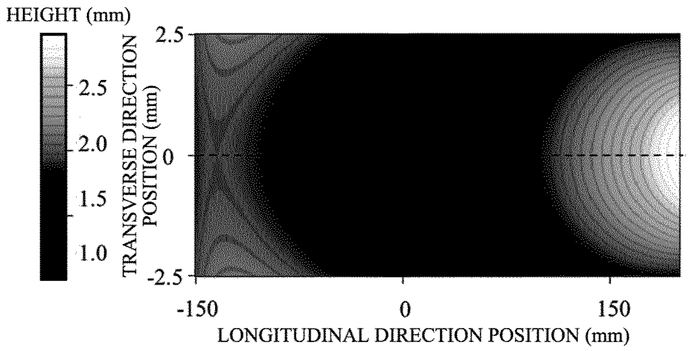


(a)

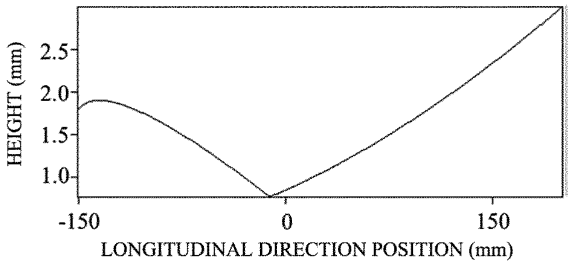


(b)

HEIGHT DISTRIBUTION OF DOUBLE-BOUNCE REFLECTION ASTIGMATISM CONTROL FLAT PLATE MIRROR [CIRCULARIZING AT LIGHT COLLECTION POSITION]
(a) TWO-DIMENSIONAL DISTRIBUTION OF HEIGHT
(b) LONGITUDINAL CROSS-SECTIONAL PROFILE

FIG. 24

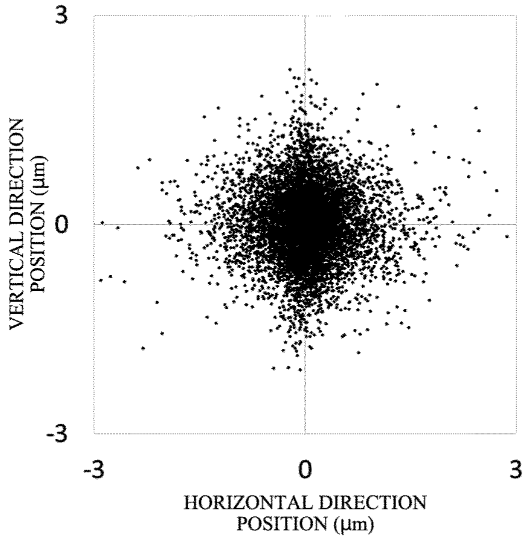


DISTRIBUTION OF LIGHT RAYS AT LIGHT COLLECTION POINT [CIRCULARIZING AT LIGHT COLLECTION POSITION]

FIG. 25

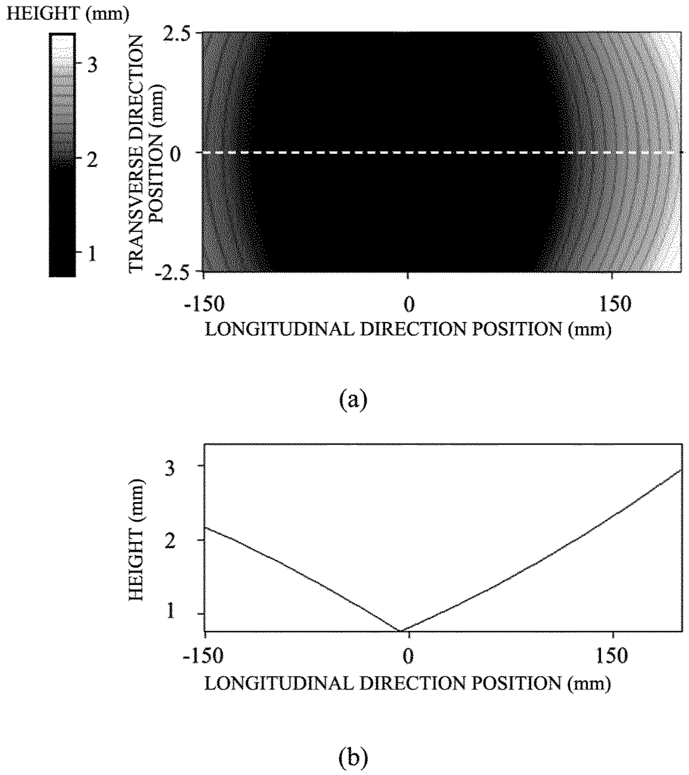


HEIGHT DISTRIBUTION OF DOUBLE-BOUNCE REFLECTION
ASTIGMATISM CONTROL FLAT PLATE MIRROR
[CIRCULARIZING AT DIVERGENCE POSITION]
(a) TWO-DIMENSIONAL DISTRIBUTION OF HEIGHT
(b) LONGITUDINAL CROSS-SECTIONAL PROFILE

FIG. 26

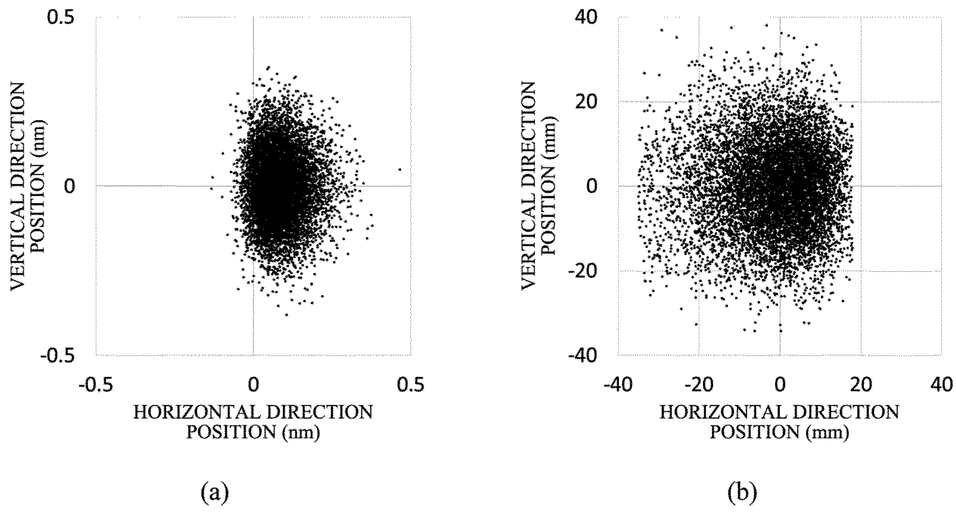


DISTRIBUTION OF LIGHT RAYS
[CIRCULARIZING AT DIVERGENCE POSITION]
(a) LIGHT COLLECTION POINT
(b) POINT LOCATED 10 m DOWNSTREAM FROM LIGHT COLLECTION POINT

**INTERNATIONAL SEARCH REPORT**

International application No.
**PCT/JP2022/000570**

**A. CLASSIFICATION OF SUBJECT MATTER**

***G02B 17/06***(2006.01)i; ***G02B 5/10***(2006.01)i; ***G21K 1/06***(2006.01)i
FI: G02B17/06; G02B5/10 A; G21K1/06 M

According to International Patent Classification (IPC) or to both national classification and IPC

**B. FIELDS SEARCHED**

Minimum documentation searched (classification system followed by classification symbols)

G02B17/06; G02B5/10; G21K1/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-530168 A (XENOCS) 06 October 2005 (2005-10-06) paragraphs [0043]-[0063], [0070]-[0074], fig. 3, etc. | 8-13 |
| Y | | 8-13 |
| A | | 1-7 |
| Y | JP 2014-163667 A (FUJITSU LTD.) 08 September 2014 (2014-09-08) paragraphs [0018], [0019], fig. 6, etc. | 8-13 |
| A | | 1-7 |
| Y | JP 2005-530170 A (XENOCS) 06 October 2005 (2005-10-06) paragraphs [0081]-[0112], [0140]-[0146], fig. 1, 2, etc. | 8-13 |
| A | | 1-7 |
| A | WO 2015/004934 A1 (THE UNIVERSITY OF TOKYO) 15 January 2015 (2015-01-15) entire text, all drawings | 1-13 |
| A | JP 2002-221596 A (NIKON CORP.) 09 August 2002 (2002-08-09) entire text, all drawings | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/000570

C. DOCUMENTS CONSIDERED TO BE RELEVANT

| Category* | Citation of document, with indication, where appropriate, of the relevant passages | Relevant to claim No. |
|---|---|---|
| A | JP 2014-006457 A (JTEC CORP.) 16 January 2014 (2014-01-16) entire text, all drawings | 1-13 |

Form PCT/ISA/210 (second sheet) (January 2015)

**INTERNATIONAL SEARCH REPORT**
**Information on patent family members**

International application No.
**PCT/JP2022/000570**

| Patent document cited in search report | Publication date (day/month/year) | Patent family member(s) | Publication date (day/month/year) |
|---|---|---|---|
| JP 2005-530168 A | 06 October 2005 | US 2006/0018429 A1<br>paragraphs [0057]-[0122], [0149]-[0158], fig. 3, etc.<br>WO 2004/001769 A1<br>FR 2850171 A1<br>CN 1662999 A | |
| JP 2014-163667 A | 08 September 2014 | (Family: none) | |
| JP 2005-530170 A | 06 October 2005 | US 2005/0117239 A1<br>paragraphs [0139]-[0161], [0193]-[0202], fig. 1, 2, etc.<br>WO 2004/001770 A1<br>EP 1732087 A2<br>DE 20320792 U<br>FR 2841371 A1<br>CN 1675720 A | |
| WO 2015/004934 A1 | 15 January 2015 | US 2016/0163409 A1<br>entire text, all drawings<br>CA 2917764 A<br>KR 10-2016-0030125 A | |
| JP 2002-221596 A | 09 August 2002 | (Family: none) | |
| JP 2014-006457 A | 16 January 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **WILLIAM A. RENSE ; T. VIOLETT.** Method of Increasing the Speed of a Grazing-Incidence Spectrograph. *JOURNAL OF THE OPTICAL SOCIETY OF AMERICA,* February 1959, vol. 49 (2), 139-141
- **A. WAGNER-GENTNER ; U. U. GRAF ; M. PHILIPP ; D. RABANUS.** A simple method to design astigmatic off-axis mirrors. *Infrared Physics & Technology,* 2007, vol. 50, 42-46